# EUROPEAN PATENT APPLICATION

(11) **EP 4 773 520 A1**
(43) Date of publication of application: **08.07.2026**
(21) Application number: 25821292.7
(22) Date of filing: 12.06.2025
(51) Int. Cl.: H04B 7/185

(54) **SATELLITE COMMUNICATION METHOD, ELECTRONIC DEVICE, AND COMPUTER-READABLE STORAGE MEDIUM**

(30) Priority: 14.06.2024 CN 202410777436
(71) Applicant: HUAWEI TECHNOLOGIES CO., LTD., Shenzhen 518129 (CN)
(72) Inventor: LI, Shiwei, Shenzhen, Guangdong 518129 (CN); YE, Jianbo, Shenzhen, Guangdong 518129 (CN); YAN, Bin, Shenzhen, Guangdong 518129 (CN)
(74) Representative: Maiwald GmbH
(86) International application number: PCT/CN2025/100644
(87) International publication number: WO 2025/256586

(57) **Abstract**

This application provides a satellite communication method, an electronic device, and a computer-readable storage medium. In a process in which a first electronic device and a second electronic device establish a satellite call connection, the first electronic device may send a first message to the second electronic device by using a satellite device after the satellite call connection, or the first electronic device converts a first message into a voice message, and then sends the voice message to the second electronic device, so as to resolve a problem that no sound can be heard when the first message is sent in the satellite call connection process, and effectively improve satellite call experience of a user.

## Description

This application claims priority to Chinese Patent Application No. 202410777436.5, filed with the China National Intellectual Property Administration on June 14, 2024, and entitled "SATELLITE COMMUNICATION METHOD, ELECTRONIC DEVICE, AND COMPUTER-READABLE STORAGE MEDIUM", which is incorporated herein by reference in its entirety.

### TECHNICAL FIELD

This application relates to the field of electronic technologies, and in particular, to a satellite communication method, an electronic device, and a computer-readable storage medium.

### BACKGROUND

With development of communication technologies, users often use electronic devices such as mobile phones to perform communication in daily life. The electronic devices such as the mobile phones may implement a communication function outdoors through a mobile cellular network. However, the cellular network cannot cover all areas. For example, there may be areas that are not covered by the mobile cellular network in forests, deserts, mountainous areas, cities, and villages. When the user is in the area that is not covered by the mobile cellular network, a terminal device like a mobile phone carried by the user cannot provide a communication service because there is no cellular signal. Consequently, inconvenience may be caused to the user, and in emergency, life and property safety of the user may be damaged.

A satellite communication system is an important infrastructure that integrates positioning, timing, and communication. A satellite communication service is particularly applicable to communication in an area that is not covered by mobile communication, or that cannot be covered by mobile communication, or in which a communication system is damaged.

Currently, the electronic devices may perform a call, send a message, or the like through the satellite communication system. During the call between the electronic devices through the satellite communication system, if the electronic devices send messages to each other by using a satellite device, a sending channel of call data is occupied, and call quality is affected.

### SUMMARY

This application provides a satellite communication method, an electronic device, and a computer-readable storage medium. In a process of establishing a satellite call connection to a second electronic device, a first electronic device may send a first message to the second electronic device by using a satellite device after the satellite call connection, or convert a first message into a voice message and send the voice message to the second electronic device, so as to resolve a problem that no sound can be heard when the first message is sent in the satellite call connection process, and effectively improve satellite call experience of a user.

According to a first aspect, this application provides a satellite communication method, where the method is applied to a satellite communication system, the satellite communication system includes a first electronic device and a second electronic device, a satellite communication connection is established between the first electronic device and the second electronic device, and the method includes: The first electronic device establishes a satellite call connection to the second electronic device; the first electronic device receives a first operation, where the first operation is used to send a first message to the second electronic device; the first electronic device detects, in response to the first operation, whether the satellite call connection to the second electronic device ends; the first electronic device sends the first message to the second electronic device through the satellite communication connection after detecting that the satellite call connection between the first electronic device and the second electronic device ends; and the second electronic device receives the first message through the satellite communication connection.

According to the method, in a process of establishing the satellite call connection to the second electronic device, the first electronic device may send the first message to the second electronic device by using a satellite device after the satellite call connection, so as to resolve a problem that no sound can be heard when the first message is sent in the satellite call connection process, and effectively improve user experience.

With reference to the first aspect, in a possible implementation, that the first electronic device detects, in response to the first operation, whether the satellite call connection to the second electronic device ends specifically includes: The first electronic device displays first prompt information in response to the first operation, where the first prompt information indicates whether to send the first message to the second electronic device through the satellite call connection after the call connection ends; and the first electronic device receives and responds to an operation of a user on a first option in the first prompt information, and the first electronic device detects whether the satellite call connection to the second electronic device ends.

In this way, the first electronic device may prompt the user whether to send the first message after the call ends, to avoid affecting satellite call quality. After the user selects to send the first message after the call ends, the first electronic device may detect whether the satellite call connection to the second electronic device ends, and after detecting that the satellite call connection to the second electronic device ends, send the first message to the second electronic device.

With reference to the first aspect, in a possible implementation, after the first electronic device receives the first operation, the method further includes: The first electronic device displays second prompt information, where the second prompt information includes a second option, and the second prompt information indicates whether to convert the first message into a voice message and then send the voice message to the second electronic device; and the first electronic device receives and responds to an operation of the user on the second option in the second prompt information, and sends a second message to the second electronic device, where the second message is the voice message corresponding to the first message.

Optionally, the second prompt information and the first prompt information may be the same or may be different.

Optionally, the second prompt information may be displayed before the first prompt information, or may be displayed after the first prompt information.

In this way, in a process of establishing the satellite call connection to the second electronic device, the first electronic device may also prompt the user whether to convert the first message into the voice message and then send the voice message to the second electronic device. When the user determines to convert the first message into the voice message and then send the voice message to the second electronic device, in the process of establishing the satellite call connection to the second electronic device, the first electronic device may send the voice message corresponding to the first message, that is, the second message, to the second electronic device. After the satellite call ends, the first electronic device may further send the first message to the second electronic device.

Optionally, the first electronic device may alternatively prompt that the second message is being sent to the second electronic device.

With reference to the first aspect, in a possible implementation, the method further includes: The first electronic device receives and responds to an operation of the user on a third option in the second prompt information, and skips sending the second message.

In this way, the user may also choose not to send the second message to the second electronic device, and send the first message to the second electronic device only after the call ends.

With reference to the first aspect, in a possible implementation, after the call connection between the first electronic device and the second electronic device ends, the method further includes: The first electronic device displays third prompt information, where the third prompt information indicates that the first electronic device is sending the first message to the second electronic device.

In this way, after the satellite call ends, when the first electronic device sends the first message to the second electronic device, the first electronic device may prompt the user that the first electronic device is sending the first message to the second electronic device.

According to a second aspect, this application provides a satellite communication method. The method is applied to a satellite communication system, the satellite communication system includes a first electronic device and a second electronic device, a satellite communication connection is established between the first electronic device and the second electronic device, and the method includes: The first electronic device establishes a satellite call connection to the second electronic device; the first electronic device receives a first operation, where the first operation is used to send a first message to the second electronic device; the first electronic device sends a second message to the second electronic device through the satellite communication connection in response to the first operation, where the second message is a voice message corresponding to the first message; and the second electronic device receives the second message through the satellite communication connection.

According to the method, in a process of establishing the satellite call connection to the second electronic device, the first electronic device may convert the first message into the voice message, that is, the second message, and send the second message to the second electronic device, so as to resolve a problem that no sound can be heard when the first message is sent in the satellite call connection process, and effectively improve user experience.

With reference to the second aspect, in a possible implementation, that the first electronic device sends the second message to the second electronic device through the satellite communication connection in response to the first operation specifically includes: The first electronic device displays second prompt information in response to the first operation, where the second prompt information indicates whether to convert the first message into the voice message and then send the voice message to the second electronic device; and the first electronic device receives an operation of a user on a second option in the second prompt information, and sends the second message to the second electronic device through the satellite communication connection.

In this way, in a process of establishing the satellite call connection to the second electronic device, the first electronic device may also prompt the user whether to convert the first message into the voice message and then send the voice message to the second electronic device. When the user determines to convert the first message into the voice message and then send the voice message to the second electronic device, in the process of establishing the satellite call connection to the second electronic device, the first electronic device may send the voice message corresponding to the first message, that is, the second message, to the second electronic device.

With reference to the second aspect, in a possible implementation, after the first electronic device receives the first operation, the method further includes: The first electronic device displays first prompt information, where the first prompt information indicates whether to send the first message to the second electronic device through the satellite call connection after the call connection ends; the first electronic device receives and responds to an operation of the user on a first option in the first prompt information, and the first electronic device detects whether the satellite call connection to the second electronic device ends; the first electronic device sends the first message to the second electronic device through the satellite communication connection after detecting that the satellite call connection between the first electronic device and the second electronic device ends; and the second electronic device receives the first message through the satellite communication connection.

Optionally, the first prompt information and the second prompt information may be the same or different.

Optionally, the first prompt information may be displayed before the second prompt information, or may be displayed after the first prompt information.

In this way, the first electronic device may prompt the user whether to send the first message after the call ends, to avoid affecting satellite call quality. After the user selects to send the first message after the call ends, the first electronic device may detect whether the satellite call connection to the second electronic device ends, and after detecting that the satellite call connection to the second electronic device ends, send the first message to the second electronic device.

Optionally, the user may also choose not to send the first message to the second electronic device after the satellite call ends.

With reference to the first aspect or the second aspect, in a possible implementation, the first information includes location information of the first electronic device. Before the first electronic device receives the first operation, the method further includes: The first electronic device displays a satellite call interface with the second electronic device, where the satellite call interface includes related information of a first contact, call duration, and a location sending option; and that the first electronic device receives the first operation specifically includes: The first electronic device receives the first operation on the location sending option in the satellite call interface, and obtains the location information of the first electronic device.

In this way, the user can quickly operate to send the location information of the first electronic device to the second electronic device in the satellite call interface, so that the user can obtain rescue in time.

With reference to the first aspect or the second aspect, in a possible implementation, the first electronic device obtains the location information of the electronic device by using a GPS module.

With reference to the first aspect or the second aspect, in a possible implementation, the satellite call interface includes a first capsule, and the first capsule indicates a connection status between the first electronic device and a satellite; and/or the satellite call interface includes a first widget, the first widget includes a first indicator and fourth prompt information, the fourth prompt information is used to prompt the user to maintain or adjust a current posture of holding the first electronic device, and the first indicator indicates the connection status between the first electronic device and the satellite.

With reference to the first aspect or the second aspect, in a possible implementation, the first electronic device sends the first message or the second message to the second electronic device through a call application; and the second electronic device receives the first message through a messaging application, or receives the second message through the call application.

With reference to the first aspect or the second aspect, in a possible implementation, before the first electronic device receives the first operation, the method further includes: The first electronic device displays a new message sending interface with the second electronic device, where the new message sending interface includes related information of a first contact and the first message; and that the first electronic device receives the first operation specifically includes: The first electronic device receives the first operation in the new message sending interface.

In this way, in a satellite call process between the first electronic device and the second electronic device, the first electronic device may receive a user operation to exit the satellite call interface, edit the first information in the messaging application or a first communication application, and send the first information to the second electronic device.

With reference to the first aspect or the second aspect, in a possible implementation, the new message sending interface includes a second capsule and a first widget, the second capsule includes call duration, the first widget includes a first indicator and fourth prompt information, the first indicator indicates a connection status between the first electronic device and a satellite device, and the fourth prompt information is used to prompt the user to maintain or adjust a current posture of holding the first electronic device.

With reference to the first aspect or the second aspect, in a possible implementation, the first electronic device sends the first message or the second message to the second electronic device through a messaging application, and the second electronic device receives the first message through the messaging application, or receives the second message through a call application; or the first electronic device sends the first message or the second message to the second electronic device through a first communication application, and the second electronic device receives the first message through the first communication application, or receives the first message through a messaging application, or receives the second message through a call application.

For example, the first communication application may be a MeeTime application.

With reference to the first aspect or the second aspect, in a possible implementation, when the second electronic device is logged in with an account of the first communication application, the second electronic device receives the first message through the first communication application.

Optionally, when the second electronic device is logged in with the account of the first communication application or when the second electronic device does not log in to the account of the first communication application, the second electronic device may also receive the first message through the messaging application.

According to a third aspect, this application provides a satellite communication method, where the method is applied to a first electronic device, and the method includes: The first electronic device establishes a satellite call connection to a second electronic device by using a satellite device, where a satellite communication connection is established between the first electronic device and the second electronic device; the first electronic device receives a first operation, where the first operation is used to send a first message to the second electronic device; the first electronic device detects, in response to the first operation, whether the satellite call connection to the second electronic device ends; and the first electronic device sends the first message to the second electronic device through the satellite communication connection after detecting that the satellite call connection between the first electronic device and the second electronic device ends.

With reference to the third aspect, in a possible implementation, that the first electronic device detects, in response to the first operation, whether the satellite call connection to the second electronic device ends specifically includes: The first electronic device displays first prompt information in response to the first operation, where the first prompt information indicates whether to send the first message to the second electronic device through the satellite call connection after the call connection ends; and the first electronic device receives and responds to an operation of a user on a first option in the first prompt information, and the first electronic device detects whether the satellite call connection to the second electronic device ends.

With reference to the third aspect, in a possible implementation, after the first electronic device receives the first operation, the method further includes: The first electronic device displays second prompt information, where the second prompt information includes a second option, and the second prompt information indicates whether to convert the first message into a voice message and then send the voice message to the second electronic device; and the first electronic device receives and responds to an operation of the user on the second option in the second prompt information, and sends a second message to the second electronic device in a process of a call between the first electronic device and the second electronic device, where the second message is the voice message corresponding to the first message.

With reference to the third aspect, in a possible implementation, the method further includes: The first electronic device receives and responds to an operation of the user on a third option in the second prompt information, and skips sending the second message.

With reference to the third aspect, in a possible implementation, after the call connection between the first electronic device and the second electronic device ends, the method further includes: The first electronic device displays third prompt information, where the third prompt information indicates that the first electronic device is sending the first message to the second electronic device.

According to a fourth aspect, this application provides a satellite communication method, where the method is applied to a first electronic device, and the method includes: The first electronic device establishes a satellite call connection to a second electronic device, where a satellite communication connection is established between the first electronic device and the second electronic device; the first electronic device receives a first operation, where the first operation is used to send a first message to the second electronic device; and the first electronic device sends a second message to the second electronic device through the satellite communication connection in response to the first operation, where the second message is a voice message corresponding to the first message.

With reference to the fourth aspect, in a possible implementation, that the first electronic device detects, in response to the first operation, whether the satellite call connection to the second electronic device ends specifically includes: The first electronic device displays first prompt information in response to the first operation, where the first prompt information indicates whether to send the first message to the second electronic device through the satellite call connection after the call connection ends; and the first electronic device receives and responds to an operation of a user on a first option in the first prompt information, and the first electronic device detects whether the satellite call connection to the second electronic device ends.

With reference to the fourth aspect, in a possible implementation, the first electronic device sends the second message to the second electronic device through the satellite communication connection in response to the first operation specifically includes: The first electronic device displays second prompt information in response to the first operation, where the second prompt information indicates whether to convert the first message into the voice message and then send the voice message to the second electronic device; and the first electronic device receives an operation of a user on a second option in the second prompt information, and sends the second message to the second electronic device through the satellite communication connection.

With reference to the third aspect or the fourth aspect, in a possible implementation, the first information includes location information of the first electronic device; and before the first electronic device receives the first operation, the method further includes: The first electronic device displays a satellite call interface with the second electronic device, where the satellite call interface includes related information of a first contact, call duration, and a location sending option; and
the first electronic device receives the first operation specifically includes: The first electronic device receives the first operation on the location sending option in the satellite call interface, and obtains the location information of the first electronic device.

With reference to the third aspect or the fourth aspect, in a possible implementation, the first electronic device obtains the location information of the electronic device by using a GPS module.

With reference to the third aspect or the fourth aspect, in a possible implementation, the satellite call interface includes a first capsule, and the first capsule indicates a connection status between the first electronic device and a satellite; and/or the satellite call interface includes a first widget, the first widget includes a first indicator and fourth prompt information, the fourth prompt information is used to prompt the user to maintain or adjust a current posture of holding the first electronic device, and the first indicator indicates the connection status between the first electronic device and the satellite.

With reference to the third aspect or the fourth aspect, in a possible implementation, the first electronic device sends the first message or the second message to the second electronic device through a call application; and the second electronic device receives the first message through a messaging application, or receives the second message through the call application.

With reference to the third aspect or the fourth aspect, in a possible implementation, before the first electronic device receives the first operation, the method further includes: The first electronic device displays a new message sending interface with the second electronic device, where the new message sending interface includes related information of a first contact and the first message; and that the first electronic device receives the first operation specifically includes: The first electronic device receives the first operation in the new message sending interface.

With reference to the third aspect or the fourth aspect, in a possible implementation, the new message sending interface includes a second capsule and a first widget, the second capsule includes call duration, the first widget includes a first indicator and fourth prompt information, the first indicator indicates a connection status between the first electronic device and the satellite device, and the fourth prompt information is used to prompt the user to maintain or adjust a current posture of holding the first electronic device.

With reference to the third aspect or the fourth aspect, in a possible implementation, the first electronic device sends the first message or the second message to the second electronic device through a messaging application, and the second electronic device receives the first message through the messaging application, or receives the second message through a call application; or the first electronic device sends the first message or the second message to the second electronic device through a first communication application, and the second electronic device receives the first message through the first communication application, or receives the first message through a messaging application, or receives the second message through a call application.

With reference to the third aspect or the fourth aspect, in a possible implementation, when the second electronic device is logged in with an account of the first communication application, the second electronic device receives the first message through the first communication application.

According to a fifth aspect, this application provides a satellite communication method, where the method is applied to a second electronic device, and the method includes: The second electronic device establishes a satellite call connection to a first electronic device by using a satellite device, where a satellite communication connection is established between the first electronic device and the second electronic device; and after the satellite call connection between the second electronic device and the first electronic device ends, the second electronic device receives, through the satellite communication connection, a first message sent by the first electronic device, where the first message is sent to the second electronic device after the first electronic device receives a first operation and detects that the satellite call connection between the first electronic device and the second electronic device ends.

With reference to the fifth aspect, in a possible implementation, the method further includes: The second electronic device receives a second message sent by the second electronic device, where the second message is a voice message corresponding to the first message.

According to a sixth aspect, this application provides a satellite communication method, where the method is applied to a second electronic device, and the method includes: The second electronic device establishes a satellite call connection to a first electronic device by using a satellite device, where a satellite communication connection is established between the first electronic device and the second electronic device; and the second electronic device receives, through the satellite communication connection, a second message sent by the first electronic device, where the first message is sent to the second electronic device after the first electronic device receives a first operation, the first operation is used to send the first message to the second electronic device, and the second message is a voice message corresponding to the first message.

With reference to the sixth aspect, in a possible implementation, the method further includes: The second electronic device receives, through the satellite communication connection, the first message sent by the first electronic device, where the first message is sent after the first electronic device detects that the satellite call connection to the second electronic device ends.

With reference to the fifth aspect or the sixth aspect, in a possible implementation, first information includes location information of the first electronic device, and the first information is sent to the second electronic device after the first electronic device receives the first operation of a user on a location sending option in a satellite call interface with the second electronic device.

With reference to the fifth aspect or the sixth aspect, in a possible implementation, the first electronic device obtains the location information of the electronic device by using a GPS module.

With reference to the fifth aspect or the sixth aspect, in a possible implementation, the satellite call interface includes a first capsule, and the first capsule indicates a connection status between the first electronic device and a satellite; and/or the satellite call interface includes a first widget, the first widget includes a first indicator and fourth prompt information, the fourth prompt information is used to prompt the user to maintain or adjust a current posture of holding the first electronic device, and the first indicator indicates the connection status between the first electronic device and the satellite.

With reference to the fifth aspect or the sixth aspect, in a possible implementation, the first electronic device sends the first message or the second message to the second electronic device through a call application; and the second electronic device receives the first message through a messaging application, or receives the second message through the call application.

With reference to the fifth aspect or the sixth aspect, in a possible implementation, the first information is sent to the second electronic device after the first electronic device receives the first operation of the user in the new message sending interface with the second electronic device.

With reference to the fifth aspect or the sixth aspect, in a possible implementation, the new message sending interface includes a second capsule and a first widget, the second capsule includes call duration, the first widget includes a first indicator and fourth prompt information, the first indicator indicates a connection status between the first electronic device and the satellite device, and the fourth prompt information is used to prompt the user to maintain or adjust a current posture of holding the first electronic device.

With reference to the fifth aspect or the sixth aspect, in a possible implementation, the first electronic device sends the first message or the second message to the second electronic device through a messaging application, and the second electronic device receives the first message through the messaging application, or receives the second message through a call application; and/or the first electronic device sends the first message or the second message to the second electronic device through a first communication application, and the second electronic device receives the first message through the first communication application, or receives the first message through a messaging application, or receives the second message through a call application.

With reference to the fifth aspect or the sixth aspect, in a possible implementation, when the second electronic device is logged in with an account of the first communication application, the second electronic device receives the first message through the first communication application.

According to a seventh aspect, this application provides an electronic device, which is a first electronic device. The first electronic device includes one or more processors and one or more memories. The one or more memories are coupled to the one or more processors, the one or more memories are configured to store computer program code, the computer program code includes computer instructions, and when the one or more processors execute the computer instructions, the first electronic device is enabled to perform the method according to any one of the possible implementations of any one of the foregoing aspects.

According to an eighth aspect, this application provides an electronic device, which is a second electronic device. The second electronic device includes one or more processors and one or more memories. The one or more memories are coupled to the one or more processors, the one or more memories are configured to store computer program code, the computer program code includes computer instructions, and when the one or more processors execute the computer instructions, the second electronic device is enabled to perform the method according to any one of the possible implementations of any one of the foregoing aspects.

According to a ninth aspect, this application provides a computer-readable storage medium, including instructions. When the instructions are run on a first electronic device, the first electronic device is enabled to perform the method according to any one of the possible implementations of any one of the foregoing aspects.

According to a tenth aspect, this application provides a computer-readable storage medium, including instructions. When the instructions are run on a second electronic device, the second electronic device is enabled to perform the method according to any one of the possible implementations of any one of the foregoing aspects.

According to an eleventh aspect, this application provides a computer program product. The computer program product may include computer instructions. When the computer instructions are run on a first electronic device, the first electronic device is enabled to perform the method according to any one of the possible implementations of any one of the foregoing aspects.

According to a twelfth aspect, this application provides a computer program product. The computer program product may include computer instructions. When the computer instructions are run on a second electronic device, the second electronic device is enabled to perform the method according to any one of the possible implementations of any one of the foregoing aspects.

According to a thirteenth aspect, this application provides a chip. The chip is applied to a first electronic device. The chip includes one or more processors. The processor is configured to invoke computer instructions, to enable the first electronic device to perform the method according to any one of the possible implementations of any one of the foregoing aspects.

According to a fourteenth aspect, this application provides a chip. The chip is applied to a second electronic device. The chip includes one or more processors. The processor is configured to invoke computer instructions, to enable the second electronic device to perform the method according to any one of the possible implementations of any one of the foregoing aspects.

For beneficial effects of the second aspect to the fourteenth aspect, refer to the descriptions of the beneficial effects in the first aspect. Details are not described herein again.

### BRIEF DESCRIPTION OF DRAWINGS

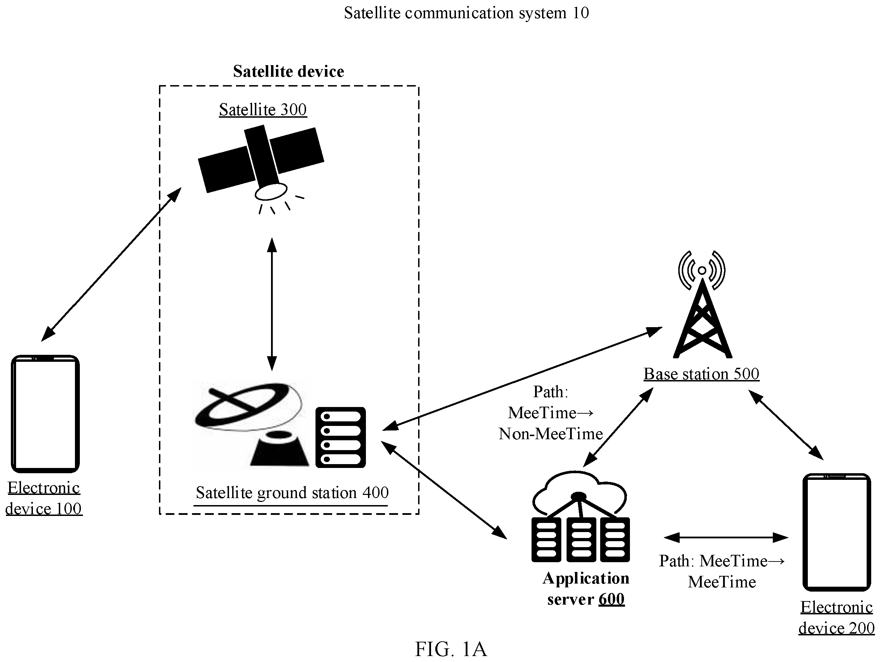

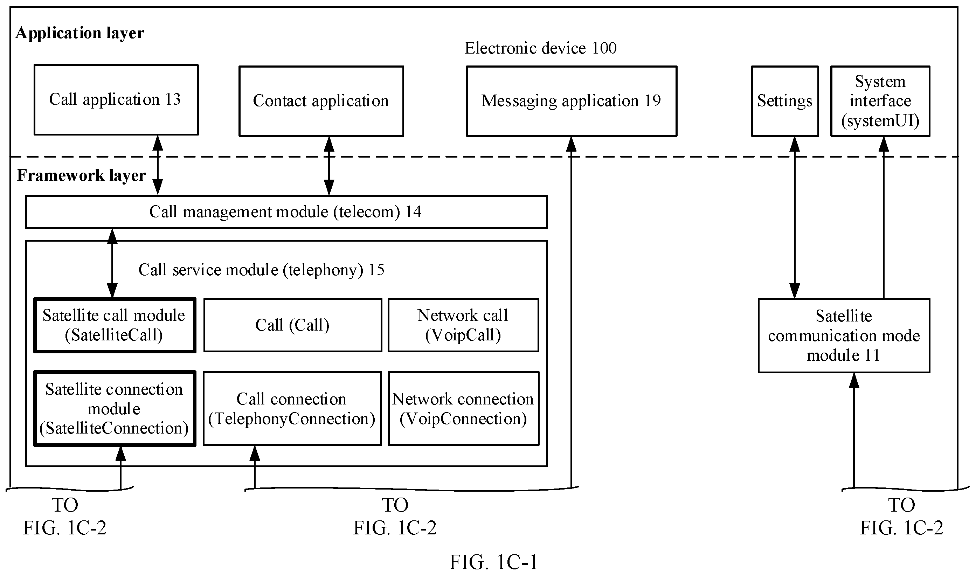

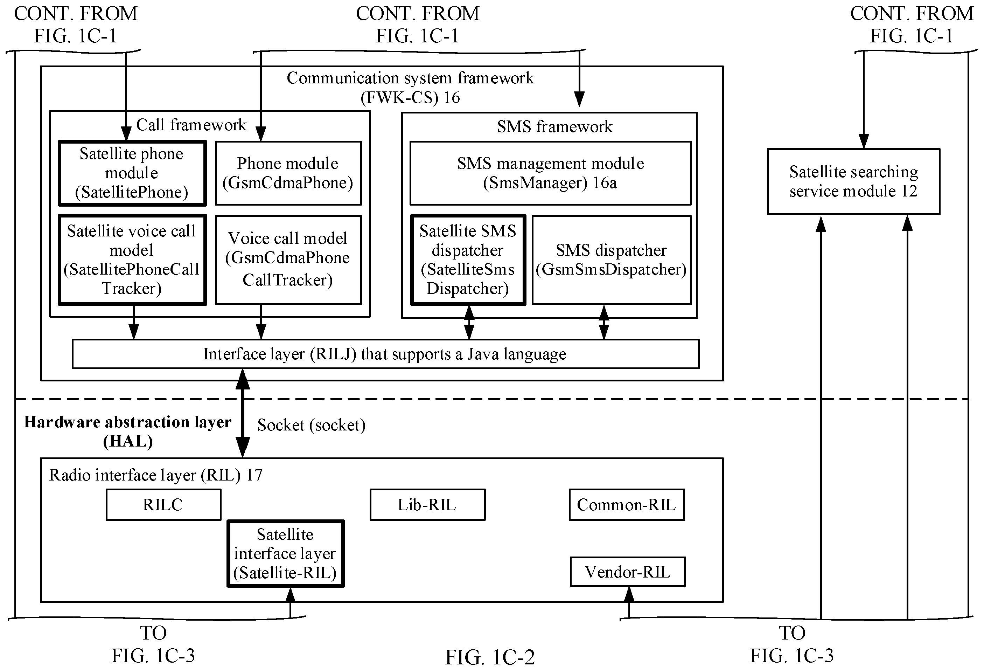

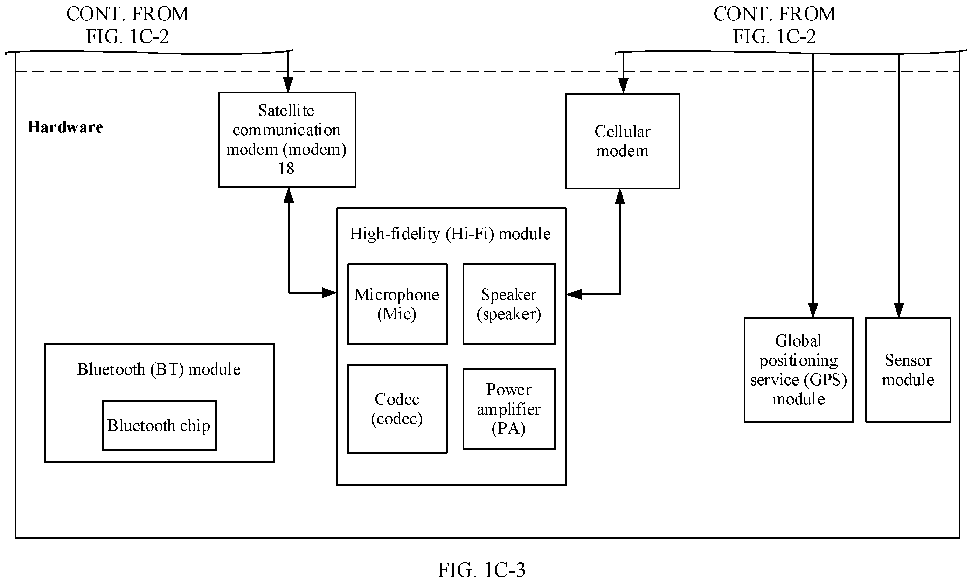

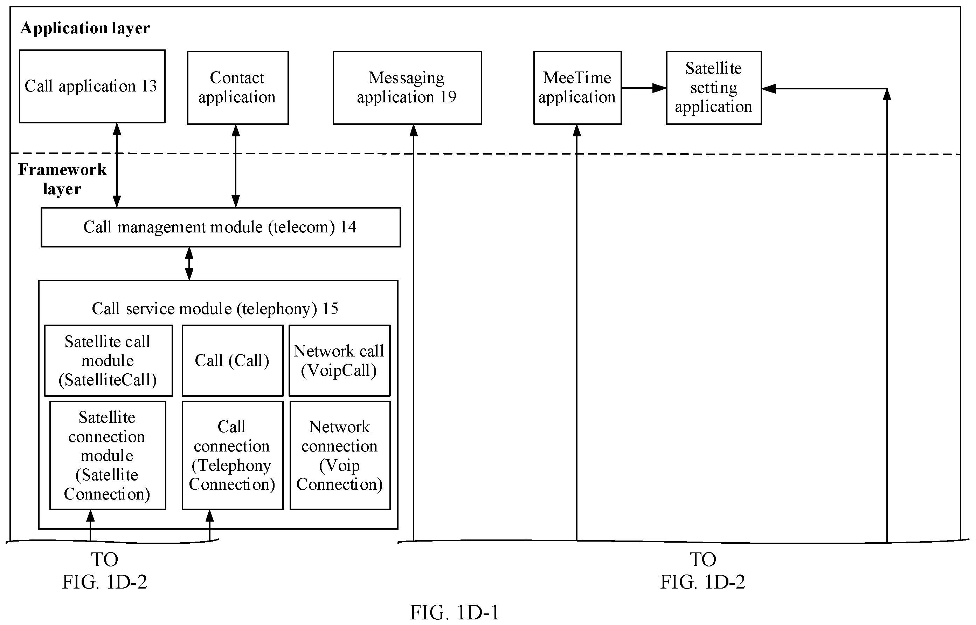

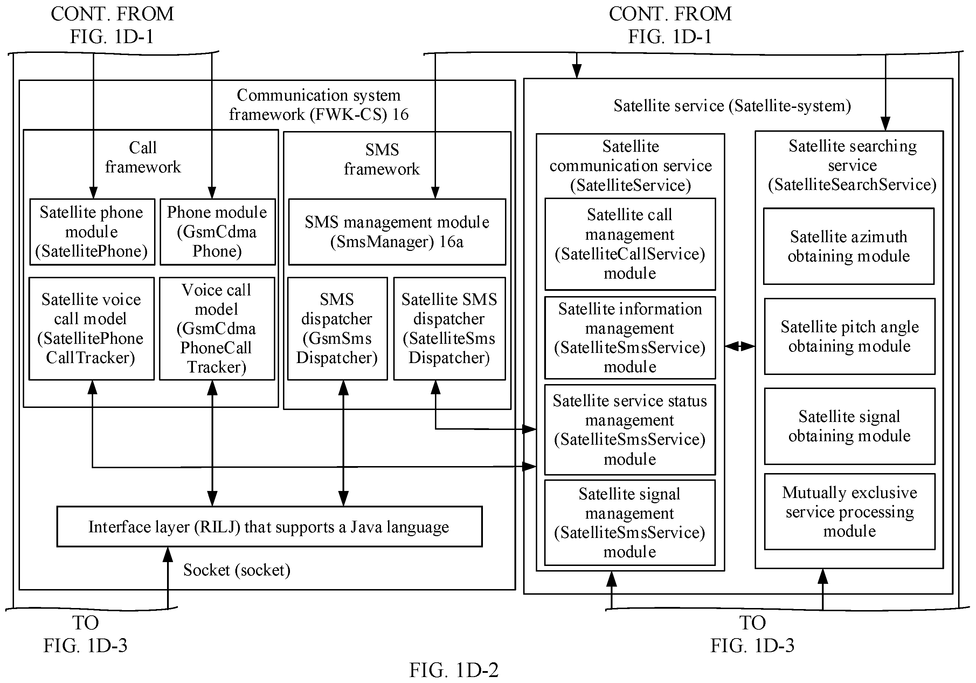

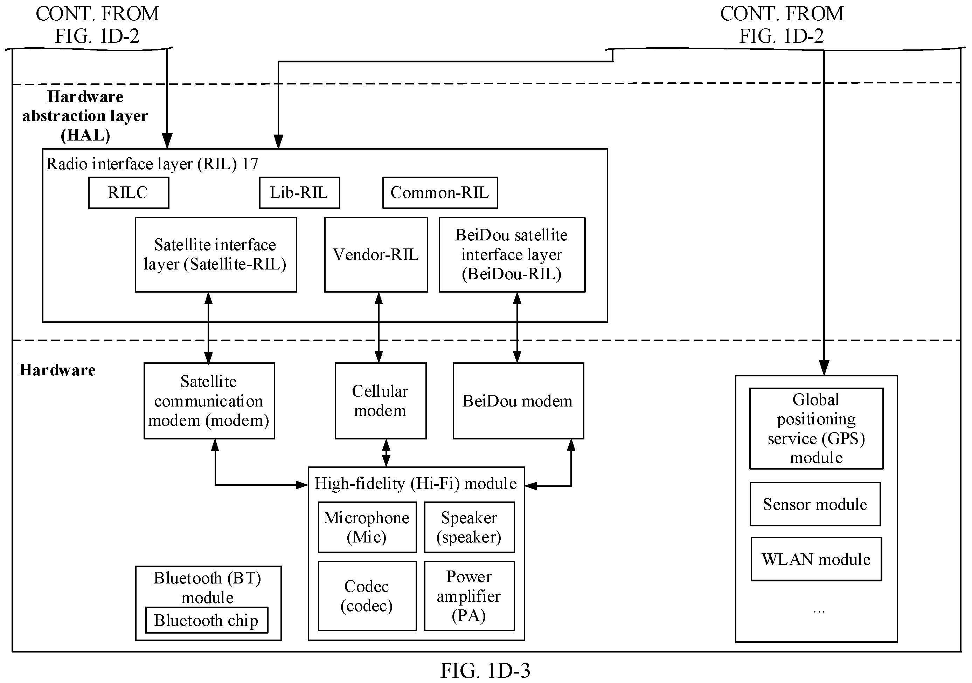

FIG. 1A is a diagram of a satellite communication system according to an embodiment of this application;

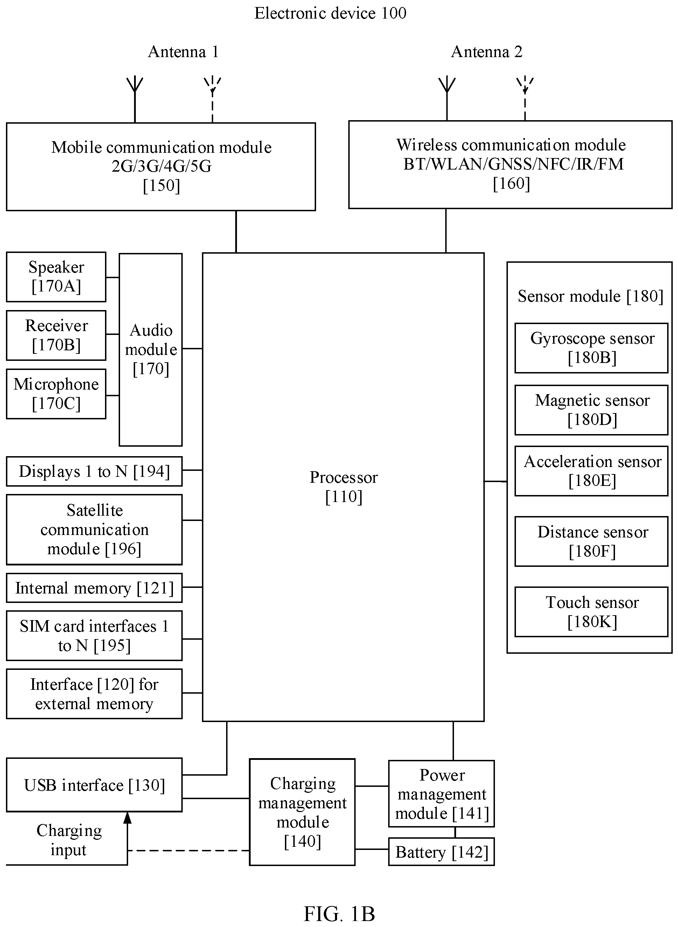

FIG. 1B is a diagram of a hardware structure of an electronic device 100 according to this application;
FIG. 1C-1 to FIG. 1C-3 are a diagram of a software architecture of an electronic device 100 according to an embodiment of this application;
FIG. 1D-1 to FIG. 1D-3 are a diagram of another software architecture of an electronic device 100 according to an embodiment of this application;
FIG. 2A to FIG. 2I are UI diagrams in which an electronic device 100 establishes a satellite communication connection to an electronic device 200 based on a satellite device;
FIG. 3A to FIG. 3E are UI diagrams in which an electronic device 100 actively performs a satellite call with an electronic device 200, to enable the electronic device 100 to establish a satellite call connection to the electronic device 200;
FIG. 3F-1 to FIG. 3F-3 are a diagram of software module interaction in which an electronic device 100 actively performs a satellite call with an electronic device 200, to enable the electronic device 100 to establish a satellite call connection to the electronic device 200;

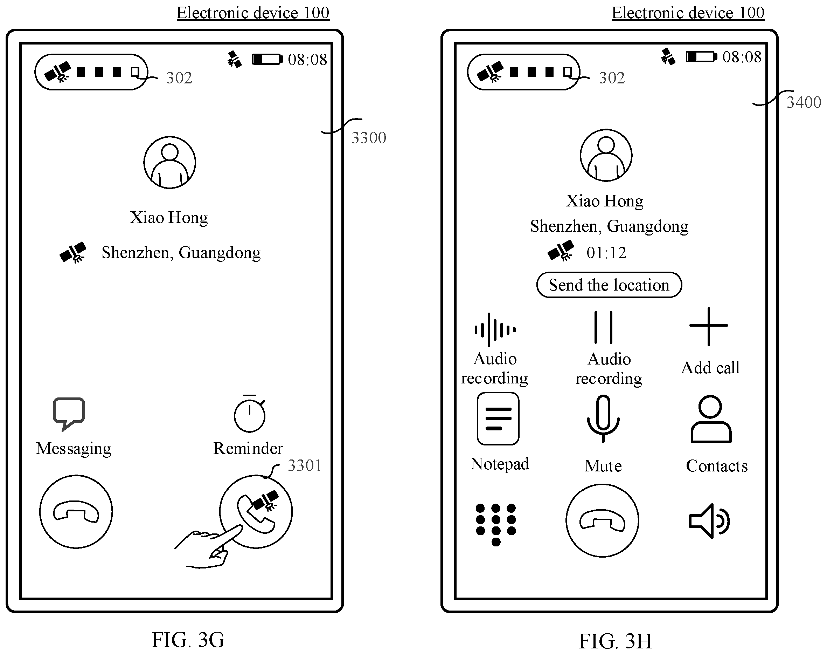

FIG. 3G and FIG. 3H are UI diagrams in which an electronic device 100 receives a call request sent by an electronic device 200, and establishes a satellite call connection to the electronic device 200;
FIG. 3I-1 and FIG. 3I-2 are a diagram of software module interaction in which an electronic device 100 receives a call request sent by an electronic device 200, and establishes a satellite call connection to the electronic device 200;

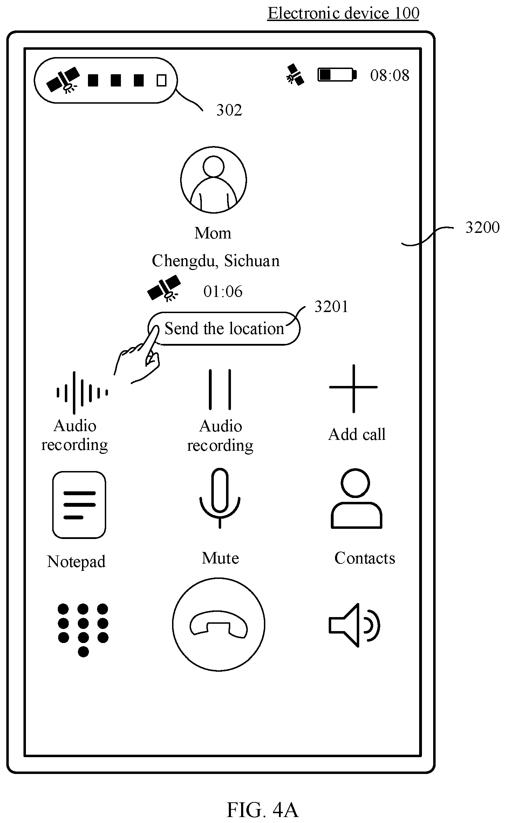

FIG. 4A to FIG. 4W are UI diagrams in which an electronic device 100 sends location information to an electronic device 200;
FIG. 5A-1 and FIG. 5A-2 are a schematic flowchart of a method for sending a first message by an electronic device 100 to an electronic device 200 by using a satellite device according to this application;
FIG. 5B-1 and FIG. 5B-2 are a schematic flowchart of another method for sending a first message by an electronic device 100 to an electronic device 200 by using a satellite device according to this application;
FIG. 5C-1 and FIG. 5C-2 are a schematic flowchart of still another method for sending a first message by an electronic device 100 to an electronic device 200 by using a satellite device according to this application;
FIG. 5D-1 and FIG. 5D-2 are a schematic flowchart of yet another method for sending a first message by an electronic device 100 to an electronic device 200 by using a satellite device according to this application;
FIG. 6A-1 and FIG. 6A-2 are a schematic flowchart of still yet another method for sending a first message by an electronic device 100 to an electronic device 200 by using a satellite device according to this application;
FIG. 6B-1 to FIG. 6B-3 are a schematic flowchart of a further method for sending a first message by an electronic device 100 to an electronic device 200 by using a satellite device according to this application;

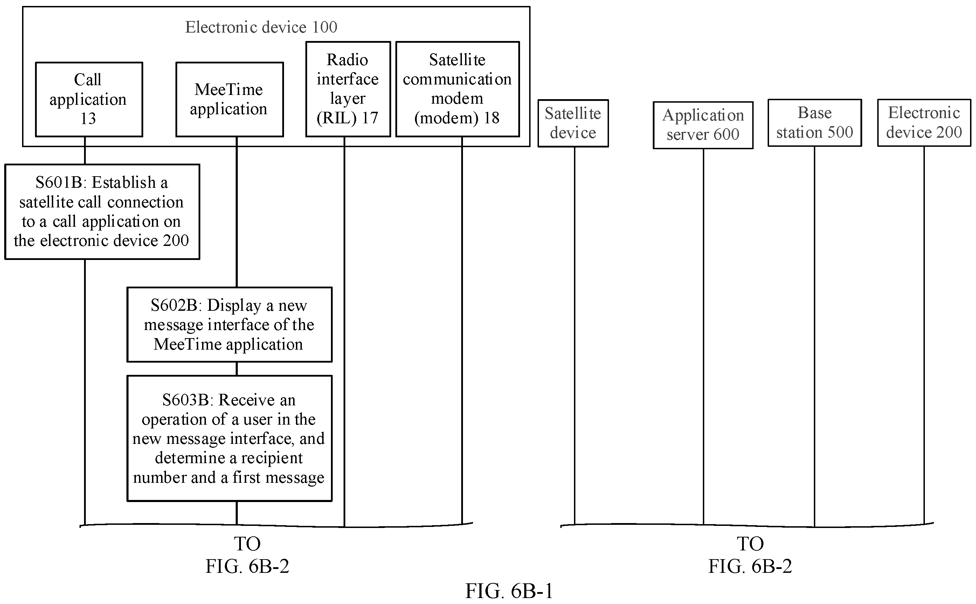

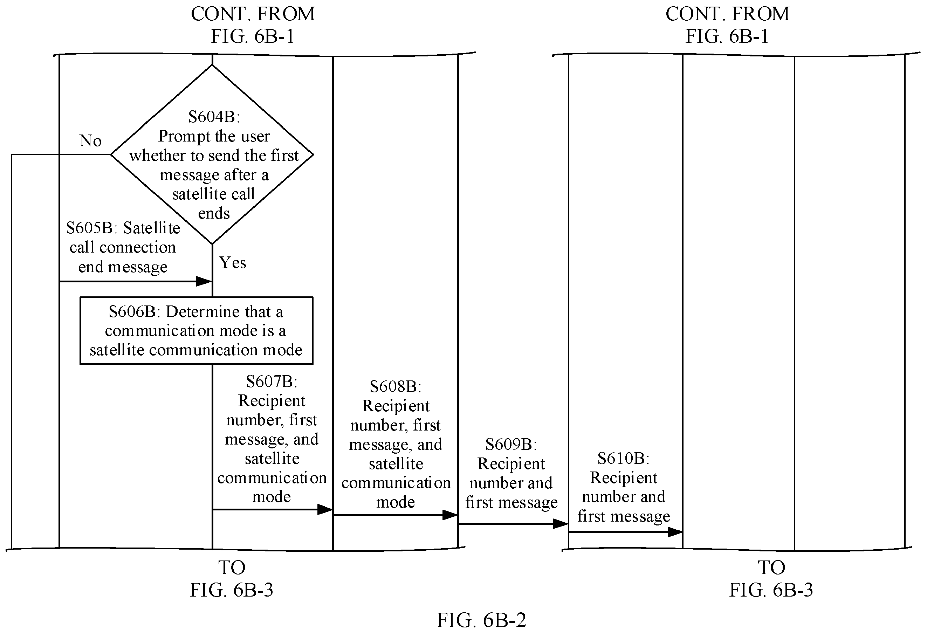

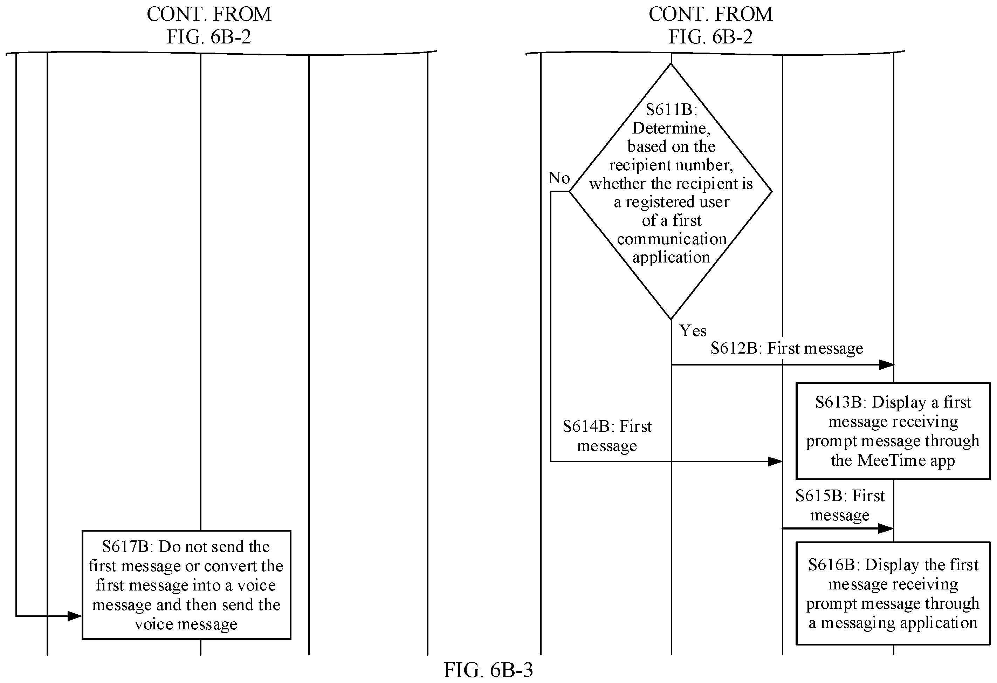

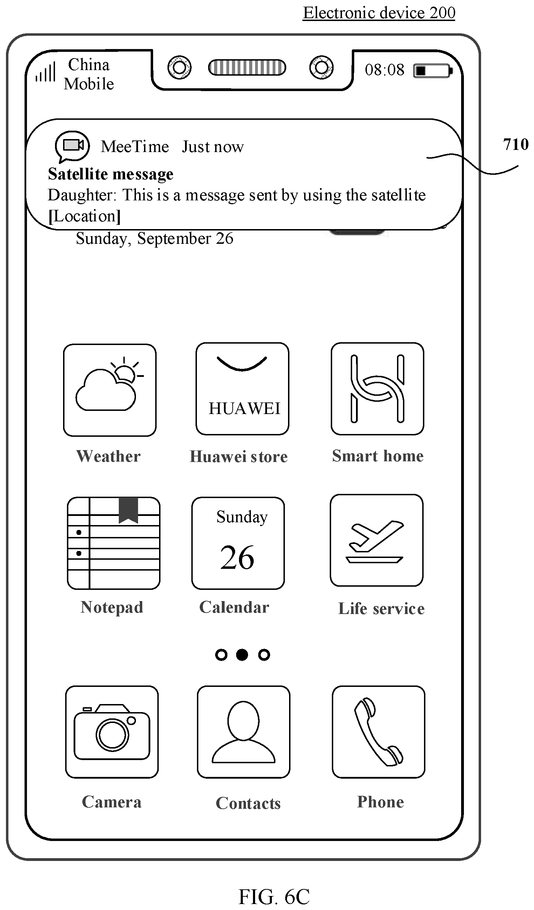

FIG. 6C is a diagram in which an electronic device 100 prompts, through a MeeTime application, that a user has received a first message according to this application;

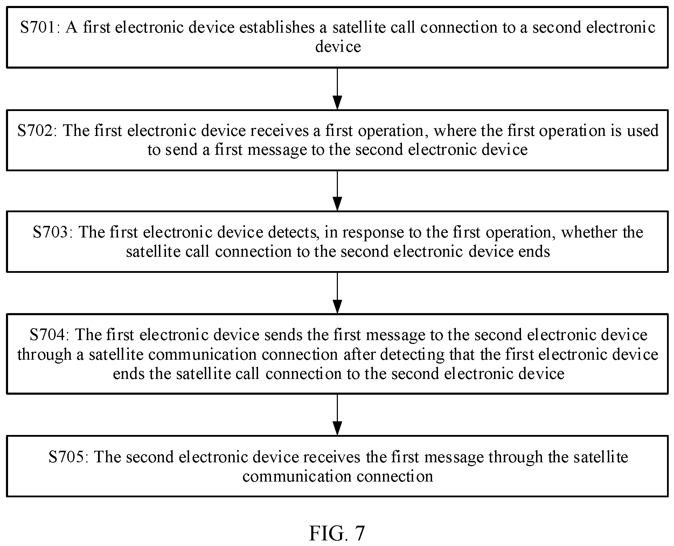

FIG. 7 is a schematic flowchart of a satellite communication method according to this application; and

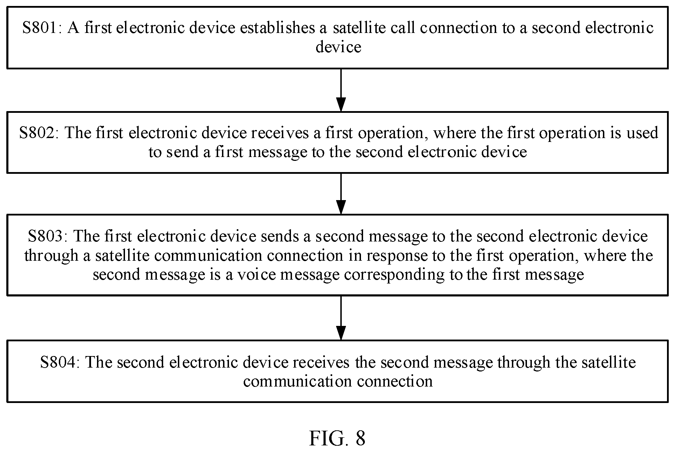

FIG. 8 is a schematic flowchart of another satellite communication method according to this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in following embodiments of this application is a medium interface for interaction and information exchange between an application (application, app) or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A common representation form of the user interface is a graphical user interface (graphic user interface, GUI), which refers to a user interface that is displayed in a graphical manner and that is related to a computer operation. The user interface may be a visual interface element like text, an icon, a button, a menu, a tab, a text box, a dialog box, a status bar, a navigation bar, or a widget that is displayed on a display of the electronic device.

In recent years, with rapid development of satellite communication technologies, satellite communication services are increasingly popular. Currently, communication between electronic devices by using a satellite is supported, and a function like making a call to another party in an area without mobile network coverage can be implemented.

The following describes a satellite communication system 10 related to the satellite communication method provided in embodiments of this application.

As shown in FIG. 1A, the satellite communication system 10 may include an electronic device 100, an electronic device 200, a satellite 300, a satellite ground station 400, a base station 500, and an application server 600. The satellite 300 and the satellite ground station 400 may be referred to as satellite devices.

In the satellite communication system 10, the electronic device 100 may establish a communication connection to the satellite 300, the satellite 300 may establish a communication connection to the satellite ground station 400, and the satellite ground station 400 may establish a communication connection to the base station 500. When the electronic device 200 is in coverage of a cellular network, a communication connection may be established between the base station 500 and the electronic device 200.

In the satellite communication system 10, the satellite ground station 400 may also establish a communication connection to the application server 600.

In some embodiments, when the first communication application is also installed on the electronic device 200, and a user (that is, a recipient) of the electronic device 200 is also a registered user of the first communication application, the application server 600 may establish a communication connection to the electronic device 200.

Optionally, in some embodiments, when the first communication application is also installed on the electronic device 200, and the electronic device 200 is logged in with an account of the first communication application, the application server 600 may establish the communication connection to the electronic device 200.

That the application server 600 may establish the communication connection to the electronic device 200 may further include another case. This is not limited in this application.

In some embodiments, the application server 600 may alternatively establish a communication connection to the base station 500. When the electronic device 200 is in the coverage of the cellular network, the base station 500 establishes a communication connection to the electronic device 200.

When the electronic device 100 needs to have a call with the electronic device 200, the electronic device 100 may send call data to the satellite 300, where the call data may carry a device identifier of the electronic device 200. The device identifier may be used to identify a device, for example, a number of a subscriber identity module (subscriber identity module, SIM) card of the device. The satellite 300 may send the call data to the satellite ground station 400, and the satellite ground station 400 may send the call data to the base station 500, and the base station 500 sends the call data to the electronic device 200.

The electronic device 200 may also send the call data to the electronic device 100 along a communication path in a reverse direction. The electronic device 200 may send, to the base station 500, call data carrying a device identifier of the electronic device 100. The base station 500 may forward the call data to the satellite ground station 400. The satellite ground station 400 may send the received call data to the satellite 300. The satellite 300 may send the call data to the electronic device 100.

In this way, based on the satellite 300, the satellite ground station 400, and the base station 500, the electronic device 100 and the electronic device 200 can communicate with each other.

In some embodiments, when both the electronic device 100 and the electronic device 200 are in the coverage of the cellular network, the electronic device 100 may also directly communicate with the electronic device 200 through the base station 500.

In some embodiments, in a call process between the electronic device 200 and the electronic device 200, the electronic device 200 may alternatively send a first message to the electronic device 200.

In a possible implementation, a first communication application (for example, a MeeTime application) is installed on the electronic device 100, and a user (that is, a sender) of the electronic device 100 is a registered user of the first communication application. The sender may send the first message to the satellite 300 through the first communication application of the electronic device 100, and then the satellite 300 sends the first message to the application server 600 by using the satellite ground station 400.

In some embodiments, after the application server 600 receives the first message sent by the satellite ground station 400, if the electronic device 200 also installs the first communication application, and the user (that is, the recipient) of the electronic device 200 is also a registered user of the first communication application, the application server 600 of the first communication application may send the first message to the first communication application of the electronic device 200 through a communication network, and the recipient may view, through the first communication application (for example, the MeeTime application), the first message sent by a sender.

In some embodiments, after the application server 600 receives the first message sent by the satellite ground station 400, if the user (that is, the recipient) of the electronic device 200 is not the registered user of the first communication application, the application server 600 of the first communication application may send the first message to the base station 500 after obtaining the first message sent by the satellite ground station 400, and the base station 500 sends the first message to a messaging application of the electronic device 200 through a mobile cellular network. The recipient may view, through the messaging application, the first message sent by a sender.

In another possible implementation, if a messaging application is installed on the electronic device 100, the sender may send the first message to the satellite 300 through the messaging application of the electronic device 100, the satellite 300 sends the first message to the base station 500 by using the satellite ground station 400, and the base station 500 sends the first message to the messaging application of the electronic device 200 through a mobile cellular network. The recipient may view, through the messaging application, the first message sent by a sender.

The electronic device 100 and the electronic device 200 each may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (like a smart band), a vehicle-mounted device, a smart home device (like a smart television, a smart screen, or a large-screen device), and/or a smart city device. A specific type of the terminal device 100 is not specially limited in embodiments of this application. The terminal device may also be referred to as an electronic device, a terminal, or the like.

The application server 600 may be a server, a server cluster including a plurality of servers, or a cloud computing center. The application server 600 in this embodiment of this application may also be referred to as a cloud server, a cloud, or a cloud side.

It should be understood that the satellite communication system 10 shown in FIG. 1A is merely a diagram of a system structure of a communication system provided in embodiments of this application, and does not constitute a specific limitation on the satellite communication system 10. The satellite communication system 10 may include more or fewer devices than those shown in the figure. For example, the satellite communication system 10 may further include a wireless relay device and a wireless backhaul device (not shown in FIG. 1A). This is not limited herein.

Based on the description of FIG. 1A, it can be learned that the electronic device 100 may communicate with the electronic device 200 by using the satellite device. For example, the electronic device 100 may establish a satellite call connection to the electronic device 200 by using the satellite device. The electronic device 100 may send call data to the satellite device, the satellite device sends the call data to the base station, and the base station sends the call data to the electronic device 200. Similarly, the electronic device 200 may alternatively send call data to the satellite device, the satellite device sends the call data to the base station, and the base station sends the call data to the electronic device 100.

In a process in which the electronic device 100 and the electronic device 200 establish the satellite call connection, if the electronic device 100 receives a user operation to send a first message to the electronic device 200, a priority of the first message is higher than a priority of the call data, and the call data and the first message are sent to the satellite device through a same channel (for example, a first channel). In a process in which the electronic device 100 establishes the satellite call connection to the electronic device 200 by using the satellite device, if the electronic device 100 receives the user operation to send the first message, the first message occupies the first channel for sending the call data by the electronic device 100. The electronic device 100 can continue to send the call data to a satellite call through the first channel only after the first message is sent. As a result, in a process in which the electronic device 100 sends the first message to the electronic device 200 by using the satellite device, the electronic device 100 cannot send the call data to the electronic device 200 based on the satellite device through the first channel, the electronic device 100 cannot receive, through the first channel, call data sent by the electronic device 200 based on the satellite device, and no sound can be heard in a call for a period of time.

Based on this, to resolve the foregoing problems, this application provides a satellite communication method. The method includes the following steps.

The electronic device 100 establishes a satellite call connection to the electronic device 200 by using the satellite device. The electronic device 100 may send call data to the satellite device, the satellite device sends the call data to the base station, and the base station sends the call data to the electronic device 200. Similarly, the electronic device 200 may alternatively send call data to the satellite device, the satellite device sends the call data to the base station, and the base station sends the call data to the electronic device 100.

In a process in which the electronic device 100 establishes the satellite call connection to the electronic device 200, for a specific application scenario (for example, a rescue scenario) without a network, the electronic device 100 may receive a user operation to send a first message to the electronic device 200. To prevent the first message from occupying a first channel used by the electronic device 100 and the electronic device 200 to send the call data, in a possible implementation, the electronic device 200 may prompt a user to send the first message to the electronic device 200 after the satellite call connection ends. In another possible implementation, the electronic device 200 may prompt the user to convert the first message into a first voice message, and send the first voice message to the electronic device 200 based on the satellite device through the first channel.

According to the method, in the process of establishing the satellite call connection to the electronic device 200, the electronic device 100 may send the first message to the electronic device 200 by using the satellite device after the satellite call connection, and the electronic device 100 may alternatively convert the first message into the first voice message, and send the first voice message to the electronic device 200 by using the satellite device. In this way, a problem that no sound can be heard when the first message is sent in the satellite call connection process is resolved, and user experience is effectively improved.

FIG. 1B is a diagram of a hardware structure of an electronic device 100 according to this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a display 194, a subscriber identification module (subscriber identification module, SIM) card interface 195, a satellite communication module 196, and the like. The sensor module 180 may include one or more sensors, for example, a gyroscope sensor 180B, a magnetic sensor 180D, an acceleration sensor 180E, a distance sensor 180F, and a touch sensor 180K. In some embodiments, the sensor module 180 may further include one or more of sensors such as a pressure sensor, a barometric pressure sensor, an optical proximity sensor, a fingerprint sensor, a temperature sensor, an ambient optical sensor, and a bone conduction sensor.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency. In some embodiments, the processor 110 may include one or more interfaces, for example, a universal serial bus (universal serial bus, USB) interface.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memory, RAM) and one or more non-volatile memories (non-volatile memory, NVM).

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable program, the data of the user, the data of the application, and the like, which may be loaded into the random access memory in advance for directly reading and writing by the processor 110.

The interface 120 for external memory may be configured to connect to an external non-volatile memory, to expand a storage capability of the electronic device 100. The external non-volatile memory communicates with the processor 110 through the interface 120 for external memory, to implement a data storage function. For example, a file like music or a video is stored in the external nonvolatile memory.

The electronic device 100 may implement an audio function, for example, a call or recording, by using the audio module 170, the speaker 170A, the receiver 170B, the microphone 170C, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to capture a sound signal, implement noise reduction, and identify a sound source, so as to implement a directional recording function and the like.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from a location of the display 194.

In some embodiments, the electronic device 100 may further include one or more of the following: a button, a motor, and an indicator. The button may include a power button, a volume button, and the like. The button may be a mechanical button, or a touch button. The electronic device 100 may receive a button input, and generate a button signal input related to a user setting and function control of the electronic device 100. The motor may generate a vibration prompt. The indicator may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The satellite communication module 196 may provide a satellite communication solution applied to the electronic device 100. The satellite communication module 196 may be one or more components integrating at least one communication processing module, for example, a satellite communication modem (modem) and an antenna. The satellite communication module 196 may modulate a signal by using the satellite communication modem, and radiate the modulated signal through the antenna. In some embodiments, the satellite communication module 196 may also receive, through the antenna, a signal sent by a satellite, demodulate the received signal by using the satellite communication modem, and send the processed signal to the processor 110.

It should be noted that for a hardware structure of the electronic device 200, reference may be made to the hardware structure of the electronic device 100. Details are not described herein again in this application.

FIG. 1C-1 to FIG. 1C-3 are a diagram of a software architecture of the electronic device 100 according to an embodiment of this application.

As shown in FIG. 1C-1 to FIG. 1C-3, the software architecture of the electronic device 100 may include an application layer, a framework layer, and a hardware abstract layer (hardware abstract layer, HAL).

The application layer may include one or more applications, for example, a call application 13, a contact application, and a messaging application 19. The application layer further includes modules, for example, a setting module and a system interface (systemUI) module. The call application 13 may also be referred to as a phone application, a dialing application, or the like. The messaging application 19 may also be referred to as a message application or the like. A specific name of the application is not limited in this application.

The framework layer may include a satellite communication mode module 11, a satellite searching service module 12, a call management module (telecom) 14, a call service module (telephony) 15, and a communication system framework (communication system framework, FWK-CS) 16.

The call management module (telecom) 14 may be configured to transmit data between the call service module (telephony) 15 and the application layer.

The call service module (telephony) 15 may include a call module and a connection module that correspond to one or more communication modes, for example, a satellite call (satellite call) module and a satellite connection (satellite connection) module that correspond to a satellite communication mode; a call (call) module and a call connection (telephony connection) module that correspond to a cellular communication mode; and a network call (VoIP call) module and a network connection (VoIP connection) module that correspond to a network communication mode. The call service module (telephony) 15 may determine a current communication mode, and bind a corresponding call service based on the current communication mode, that is, invoke a call module and a connection module that correspond to the current communication mode.

The satellite communication mode module 11 may set the satellite communication mode, and may further deliver an instruction to the satellite searching service module 12 after detecting that the satellite communication mode is enabled, where the instruction indicates the satellite searching service module 12 to obtain satellite data, and the satellite data may include an azimuth and a pitch angle of the satellite relative to a device and a satellite signal strength. The satellite communication mode module 11 may further display a satellite searching guide based on the satellite data sent by the satellite searching service module 12, to guide a user to establish a communication connection between the electronic device 100 and the satellite.

After receiving the instruction delivered by the satellite communication mode module 11, the satellite searching service module 12 may obtain real-time satellite data, and send the satellite data to the satellite communication mode module 11. In some embodiments, the satellite searching service module 12 may determine the satellite data based on data collected by a global positioning service (global positioning service, GPS) module and a sensor module.

The communication system framework 16 may include a call framework, an SMS framework, and a radio interface layer (radio interface layer, RIL)-Java (also written as RILJ) that may also be referred to as an interface layer that supports a Java language.

The call framework may include a phone module and a voice call model module that correspond to one or more communication modes, for example, a satellite phone (satellite phone) module and a satellite voice call model (satellite phone call tracker) that correspond to the satellite communication mode, and a phone module (GsmCdma phone) and a voice call model (GsmCdma phone call tracker) that correspond to the cellular communication mode.

The SMS framework may include an SMS management module (SmsManager) 16a, and an SMS dispatcher that corresponds to the one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The HAL may include a radio interface layer (radio interface layer, RIL) 17. The RIL 17 may receive an instruction transmitted by the communication system framework, and deliver the instruction to a corresponding modem. The RIL 17 may include RIL submodules that correspond to one or more communication modes, for example, a satellite interface layer (Satellite-RIL) that corresponds to the satellite communication mode and a vendor-RIL module that corresponds to the cellular communication mode. The satellite-RIL module may deliver an AT instruction to a satellite communication modem at the hardware layer. The vendor-RIL module may deliver an AT instruction to a cellular modem. In addition, the RIL 17 may further include modules, for example, a radio interface layer (RILC) that support a C language, a Lib-RIL, and a Common-RIL.

The software architecture of the electronic device 100 may interact with one or more pieces of hardware in the electronic device 100. The one or more pieces of hardware may include a satellite communication modem (modem) 18, a cellular modem, a Bluetooth (Bluetooth, BT) module, a high-fidelity (high-fidelity, Hi-Fi) module, a sensor module, and a global positioning service (global positioning service, GPS) module. The Hi-Fi module may include a microphone (mic), a speaker (speaker), a codec (codec), and a power amplifier (power amplifier, PA).

When the electronic device 100 dials or answers a call by using the satellite communication modem 18, the satellite communication modem 18 may invoke the Hi-Fi module to implement a voice call function. In some embodiments, if the electronic device 100 is further connected to another electronic device, for example, a Bluetooth headset, by using the Bluetooth module in a call process, the satellite communication modem 18 may also invoke the Bluetooth module.

After the satellite communication mode is enabled, the electronic device 100 may determine a location of the electronic device 100 by using the GPS module. Then, the electronic device 100 may start to perform satellite searching guide. For a specific satellite searching guide manner, refer to the following descriptions of embodiments.

It should be noted that the foregoing modules may also use other Chinese names, and the Chinese names of the modules are not limited in this application.

FIG. 1D-1 to FIG. 1D-3 are a diagram of another software architecture of the electronic device 100 according to an embodiment of this application.

As shown in FIG. 1D-1 to FIG. 1D-3, the software architecture of the electronic device 100 may include an application layer, a framework layer, and a hardware abstract layer (hardware abstract layer, HAL).

The application layer may include one or more applications, for example, a call application 13, a contact application, a messaging application 19, a MeeTime application, and a satellite setting application. The call application 13 may also be referred to as a phone application, a dialing application, or the like. The messaging application 19 may also be referred to as a message application or the like. A specific name of the application is not limited in this application.

In some embodiments, a user may enable a satellite communication mode by using the satellite setting application, and deliver an instruction to a satellite communication service. The instruction indicates the satellite communication service to obtain satellite data, receive the satellite data sent by the satellite communication service, and display a satellite searching guide interface. In some embodiments, the user may also enable the satellite communication mode in the MeeTime application. The MeeTime application may invoke the satellite setting application, and deliver an instruction to the satellite communication service by using the satellite setting application. The instruction indicates the satellite communication service to obtain satellite data, and receive the satellite data sent by the satellite communication service. After receiving the satellite data sent by the satellite setting application, the MeeTime application may display the satellite searching guide interface.

The framework layer may include a call management module (telecom) 14, a call service module (telephony) 15, a communication system framework (communication system framework, FWK-CS) 16, and a satellite service (Satellite-system).

The call management module (telecom) 14 may be configured to transmit data between the call service module (telephony) 15 and the application layer.

The call service module (telephony) 15 may include a call module and a connection module that correspond to one or more communication modes, for example, a satellite call (satellite call) module and a satellite connection (satellite connection) module that correspond to a satellite communication mode; a call (call) module and a call connection (telephony connection) module that correspond to a cellular communication mode; and a network call (VoIP call) module and a network connection (VoIP connection) module that correspond to a network communication mode. The call service module (telephony) 15 may determine a current communication mode, and bind a corresponding call service based on the current communication mode, that is, invoke a call module and a connection module that correspond to the current communication mode.

The communication system framework 16 may include a call framework, an SMS framework, and a radio interface layer (radio interface layer, RIL)-Java (also written as RILJ) that may also be referred to as an interface layer that supports a Java language.

The call framework may include a phone module and a voice call model module that correspond to one or more communication modes, for example, a satellite phone (satellite phone) module and a satellite voice call model (satellite phone call tracker) that correspond to the satellite communication mode, and a phone module (GsmCdma phone) and a voice call model (GsmCdma phone call tracker) that correspond to the cellular communication mode.

The SMS framework may include an SMS management module (SmsManager) 16a, and an SMS dispatcher that corresponds to the one or more communication modes, for example, a satellite SMS dispatcher (satellite Smsdispatcher) that corresponds to the satellite communication mode; and an SMS dispatcher (GsmSmsdispatcher) that corresponds to the cellular communication mode.

The RILJ may transmit data between the communication system framework and the radio interface layer. The communication connection between the RILJ and the radio interface layer may be a socket (socket).

The satellite service includes a satellite communication service (SatelliteService) and a satellite searching service (SatelliteSearchService). The satellite service may set the satellite communication mode, and may further deliver an instruction to the satellite searching service after detecting that the satellite communication mode is enabled. The instruction indicates the satellite searching service to obtain satellite data, and the satellite data may include an azimuth and a pitch angle of a satellite relative to the device, and a satellite signal strength. The satellite service may further display a satellite searching guide based on the satellite data sent by the satellite searching service, to guide the user to establish a communication connection between the electronic device 100 and the satellite.

The satellite communication service may include a satellite call management (SatelliteCallService) module, a satellite information management (SatelliteSmsService) module, a satellite service status management (SatelliteSmsService) module, and a satellite signal management (SatelliteSmsService) module. The satellite searching service may include a satellite azimuth obtaining module, a satellite pitch angle obtaining module, a satellite signal obtaining module, and a mutually exclusive service processing module.

The satellite call management module is configured to receive satellite call data sent by the satellite voice call model, and send the satellite call data to a satellite interface layer.

The satellite information management module is configured to receive a satellite SMS message sent by the satellite SMS scheduler, and send the satellite SMS message to the satellite interface layer.

The satellite service status management module is configured to obtain a satellite connection status, and send the satellite connection status to the communication system framework 16, and the communication system framework 16 reports the satellite connection status to the application layer, so that the application layer can obtain the satellite connection status. Optionally, the satellite service status management module may obtain a connection status between the electronic device 100 and a Tiantong satellite from a satellite modem, or obtain a connection status between the electronic device 100 and a BeiDou satellite from a BeiDou modem.

The satellite signal management module is configured to obtain a satellite signal strength, and send the satellite signal strength to the communication system framework 16, and the communication system framework 16 reports the satellite signal strength to the application layer, so that the application layer can obtain the satellite signal strength. Optionally, the satellite signal management module may obtain the satellite signal strength from the satellite signal obtaining module in the satellite searching service.

The satellite azimuth obtaining module is configured to obtain an azimuth of the electronic device 100 relative to the satellite from a sensor module in hardware. Optionally, the azimuth of the electronic device 100 relative to the satellite may be obtained by using a compass in the electronic device 100.

The satellite pitch angle obtaining module is configured to obtain the pitch angle of the electronic device 100 relative to the satellite from the sensor module in the hardware. Optionally, the pitch angle of the electronic device 100 relative to the satellite may be obtained by using a sensor like a gyroscope in the electronic device 100.

The satellite signal obtaining module is configured to obtain the satellite signal strength obtained by the electronic device 100, and send the satellite signal strength to the satellite signal management module in the satellite communication service. Optionally, the satellite signal obtaining module may be obtained by the electronic device 100 through an antenna or another module.

The mutually exclusive service processing module is configured to: after the electronic device 100 establishes the communication connection to the satellite, disable some services of the electronic device 100, for example, disable a WLAN function of the electronic device 100, and disable a global positioning service (GPS) function.

The HAL may include a radio interface layer (radio interface layer, RIL). The RIL 17 may receive an instruction transmitted by the communication system framework, and deliver the instruction to a corresponding modem. The RIL 17 may include an RIL submodule corresponding to one or more communication modes, for example, a satellite interface layer (satellite-RIL) corresponding to a Tiantong satellite communication mode, a cellular interface layer (vendor-RIL) corresponding to the cellular communication mode, and a BeiDou satellite interface layer (BeiDou-RIL) corresponding to a BeiDou satellite communication mode. The satellite-RIL, the vendor-RIL, and the BeiDou-RIL are independent of each other. The satellite-RIL may deliver an AT instruction to a satellite communication modem (modem) at a hardware layer. The vendor-RIL may deliver an AT instruction to a cellular modem at the hardware layer. The BeiDou-RIL may deliver an AT instruction to the BeiDou modem at the hardware layer. In addition, the RIL may further include modules, for example, a radio interface layer (RILC) that support a C language, a Lib-RIL, and a Common-RIL.

The software architecture of the electronic device 100 may interact with one or more pieces of hardware in the electronic device 100. The one or more pieces of hardware may include a satellite communication modem (modem), a cellular modem, a BeiDou modem, a Bluetooth (Bluetooth, BT) module, a high-fidelity (high-fidelity, Hi-Fi) module, a sensor module, and a global positioning service (global positioning service, GPS) module. The satellite communication modem (modem), the cellular modem, and the BeiDou modem are independent of each other. The Hi-Fi module may include a microphone (mic), a speaker (speaker), a codec (codec), and a power amplifier (power amplifier, PA).

When the electronic device 100 dials or answers a call by using the satellite modem, the satellite modem may invoke the Hi-Fi module to implement a voice call function. In some embodiments, if the electronic device 100 is further connected to another electronic device, for example, a Bluetooth headset, by using the Bluetooth module in a call process, the satellite modem may also invoke the Bluetooth module.

After the satellite communication mode is enabled, the electronic device 100 may determine a location of the electronic device 100 by using the GPS module. Then, the electronic device 100 may start to perform satellite searching guide. For a specific satellite searching guide manner, refer to the following descriptions of embodiments.

It should be noted that the foregoing modules may also use other Chinese names, and the Chinese names of the modules are not limited in this application.

The electronic device 100 may not only communicate with the electronic device 200 by using the satellite device through the software structure shown in FIG. 1C-1 to FIG. 1C-3, but also communicate with the electronic device 200 by using the satellite device through the software structure shown in FIG. 1D-1 to FIG. 1D-3. In this application, only an example in which the electronic device 100 communicates with the electronic device 200 by using the satellite device through the software structure shown in FIG. 1C-1 to FIG. 1C-3 is used for description, and does not constitute a limitation.

The following specifically describes the satellite communication method provided in embodiments of this application with reference to an application scenario.

In an application scenario (for example, a rescue scenario), when an electronic device 100 of a sender is in an area that is not covered or cannot be covered by mobile communication, or whose communication system is damaged, for example, an ocean, a desert, a grassland, or an uninhabited area, the electronic device 100 cannot use a network resource (for example, a local area network or a mobile cellular network) other than a satellite communication network provided by a satellite device. In other words, the electronic device 100 is in a state of no signal/no network service. The electronic device 100 of the sender may perform a call with the electronic device 200 of a receiver by using the satellite device, and may further transmit the first message to the electronic device 200 by using the satellite device. When the user needs a rescue, the user can convey information like a location and environment of the user and required rescue measures to the receiver more clearly through the first message.

The following describes in detail a satellite communication method provided in this application with reference to a plurality of phases in which the electronic device 100 establishes a satellite communication connection to the satellite device, the electronic device 100 establishes a satellite call connection to the electronic device 200 based on the satellite communication connection, and the electronic device 100 and the electronic device 200 send the first message in a process in which the electronic device 100 and the electronic device 200 send call data.

First, how the electronic device 100 establishes the satellite communication connection to the electronic device 200 based on the satellite device is described.

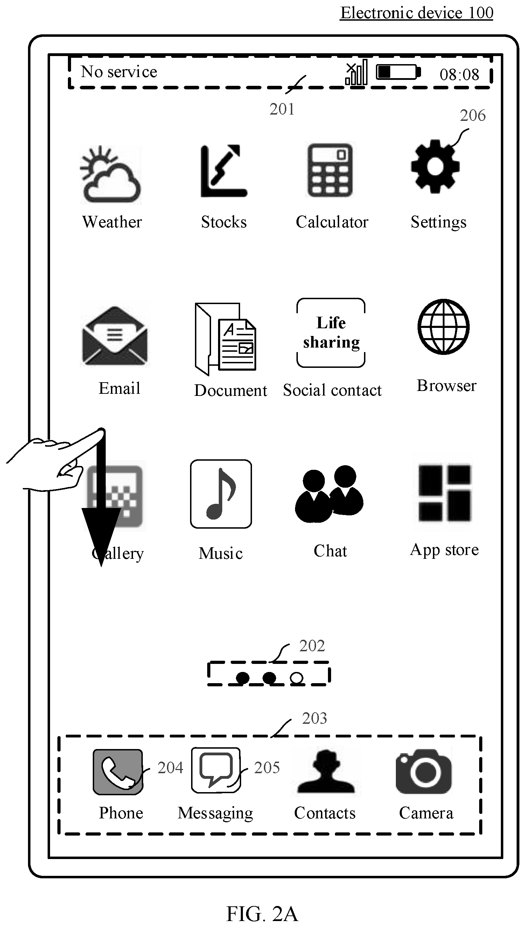

FIG. 2A to FIG. 2I are UI diagrams in which an electronic device 100 establishes a satellite communication connection to an electronic device 200 based on a satellite device.

For example, as shown in FIG. 2A, the electronic device 100 displays a desktop. A page on which application icons are placed is displayed on the desktop. The page includes a plurality of application icons (for example, a weather application icon, a setting application icon 206, a browser application icon, a chat application icon, a social application icon, and a document application icon). A page indicator 202 is further displayed below the page on which the application icons are placed, to indicate a total quantity of pages on the desktop and a location relationship between the currently displayed page and other pages. For example, the desktop may include three pages. A white dot in the page indicator is located at a third location from left, to indicate that the currently displayed page is the third page from left in the three pages. Optionally, a status bar 201 is further displayed on an upper part of the page on which the application icons are placed. The status bar 201 may include information, for example, a strength indicator of a communication signal, a battery level value, and a time. It should be noted that the strength indicator of the communication signal may indicate the signal strength of the cellular network signal received by the electronic device 100. It may be learned from FIG. 2A that the electronic device 100 currently cannot receive the cellular network signal. Further optionally, there may be a dock (dock) area 203 below the page indicator. The dock area 203 may include one or more dock icons (for example, a phone application icon 204, a message application icon 205, a contact application icon, and a camera application icon). One or more dock icons in the dock area can remain displayed during page switching.

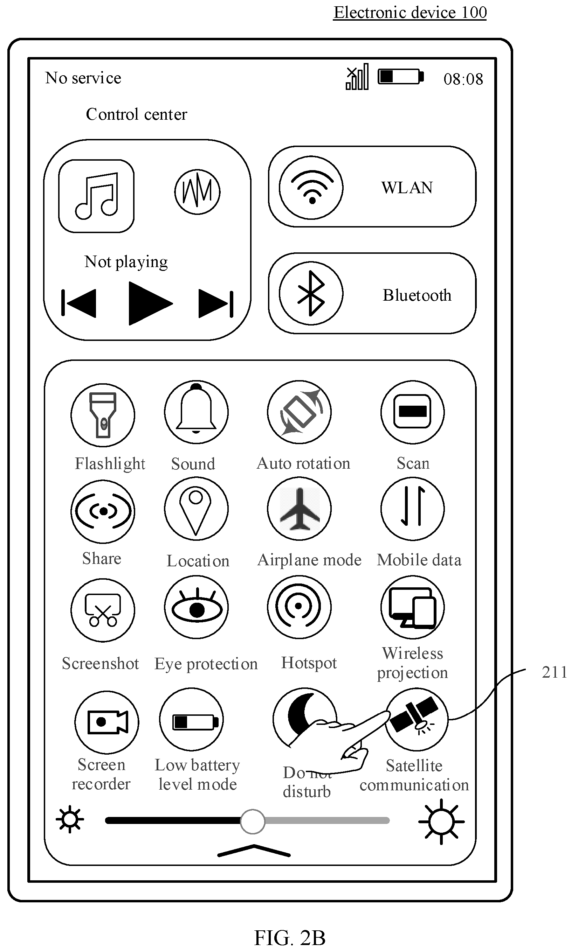

The electronic device 100 may receive and respond to a downward sliding operation of a user on the desktop, and display a control center interface shown in FIG. 2B.

As shown in FIG. 2B, the control center interface may include one or more function switch controls, for example, a satellite communication control 211, a flashlight control, a sharing control, and an airplane mode control. Each function switch control may be used to enable or disable a corresponding function.

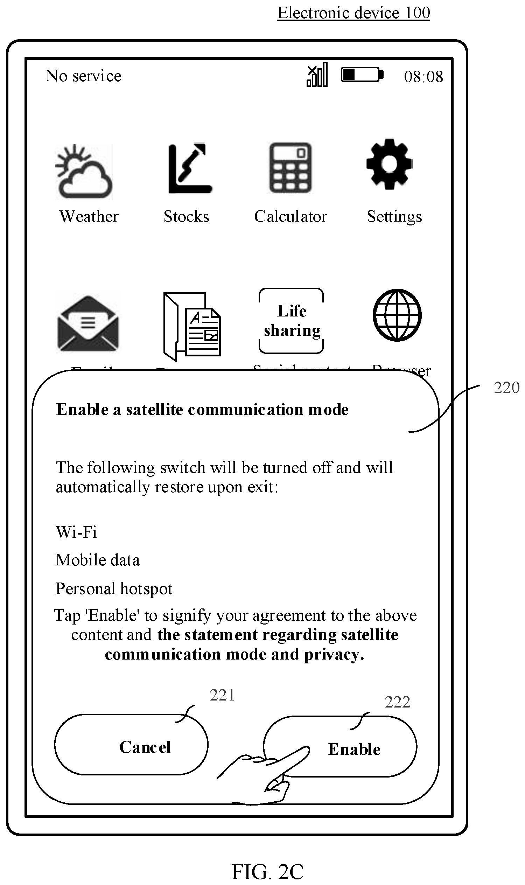

The electronic device 100 may receive and respond to a tap operation of the user on the satellite communication control 211, and display an enabling prompt window 220 on the desktop, as shown in FIG. 2C.

As shown in FIG. 2C, an enabling prompt may be displayed in the enabling prompt window 220, and the enabling prompt is used to notify the user of precautions for enabling the satellite communication mode. For example, after the satellite communication mode is enabled, functions such as Wi-Fi, mobile data, and a personal hotspot are disabled. The enabling prompt window 220 may further include a cancel control 221 and an enable control 222. The cancel control 221 may be configured to trigger the electronic device 100 to disable displaying of the enabling prompt window 220. The enable control 222 may be configured to trigger the electronic device 100 to enable the satellite communication mode.

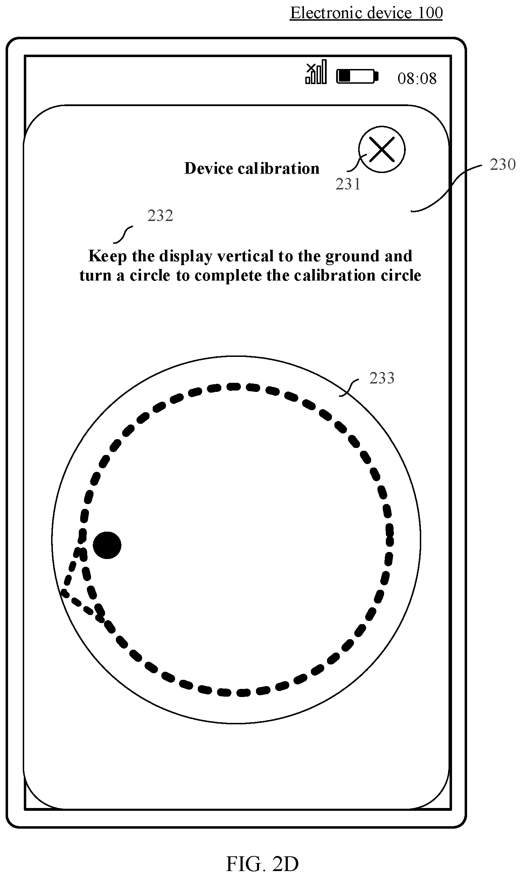

The electronic device 100 may receive and respond to a tap operation of the user on the enable control 222, and disable displaying of the enabling prompt window 220. Optionally, the electronic device 100 may display a calibration page 230 shown in FIG. 2D on the desktop.

As shown in FIG. 2D, the calibration page 230 may include a disable control 231, an operation prompt 232, and a calibration auxiliary animation 233. The disable control 231 may be configured to trigger the electronic device 100 to disable the satellite communication mode. The operation prompt 232 may be used to prompt the user to perform calibration. The operation prompt may be a text prompt, for example, "Keep the display vertical to the ground and rotate the display for one circle to complete the calibration circle". The calibration auxiliary animation 233 may be used to assist the user in completing calibration. For example, the calibration auxiliary animation 233 may be a small ball and a circle shown in FIG. 2D. In a process in which the user rotates the electronic device 100, the small ball may move around an inner side of the circle. After the ball moves around the inner side of the circle for one circle, the electronic device 100 completes the calibration.

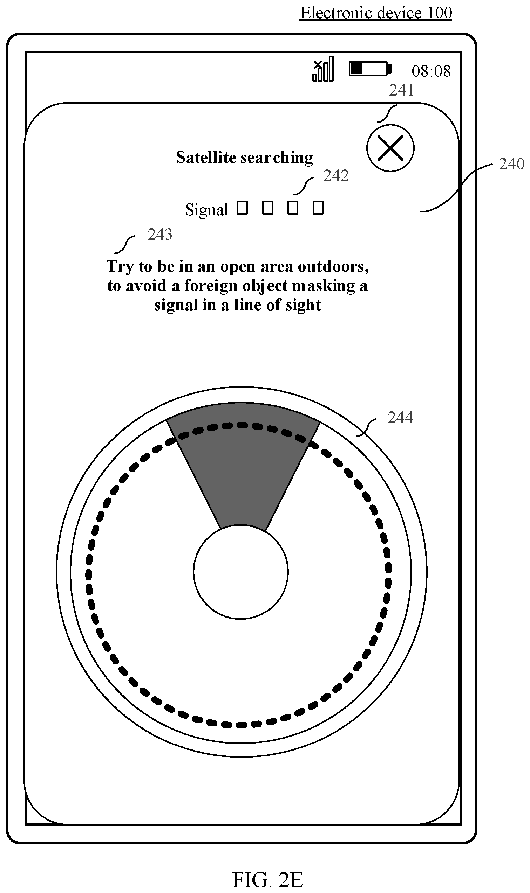

After the calibration is completed, the electronic device 100 may disable displaying of the calibration page 230, and display a satellite searching page 240 shown in FIG. 2E on the desktop. In some embodiments, if the electronic device 100 determines that calibration is not needed, the electronic device 100 may alternatively close the enabling prompt window 220 in response to the tap operation of the user on the enable control 222, and display the satellite searching page 240 shown in FIG. 2E on the desktop.

As shown in FIG. 2E, the satellite searching page 240 may include a disable control 241, a strength indicator 242, and a satellite searching operation prompt (including a text prompt 243 and an animation prompt 244). The disable control 241 may be configured to trigger the electronic device 100 to disable the satellite communication mode. The strength indicator 242 indicates a satellite signal strength. The satellite searching operation prompt indicates the user to perform a satellite searching operation. For example, the text prompt 243 may include text "Try to be in an open area outdoors, to avoid a foreign object masking a signal in a line of sight". The animation prompt 244 may be used to prompt whether the electronic device 100 detects a satellite. The animation prompt 244 may include a sector area, and the sector area may be used to prompt a user with a location relationship between a location of the satellite and a location to which an antenna of the electronic device 100 points. In the embodiment shown in FIG. 2E, no symbol indicating the satellite appears in the animation prompt 244, to prompt the user that the electronic device 100 has not found the satellite.

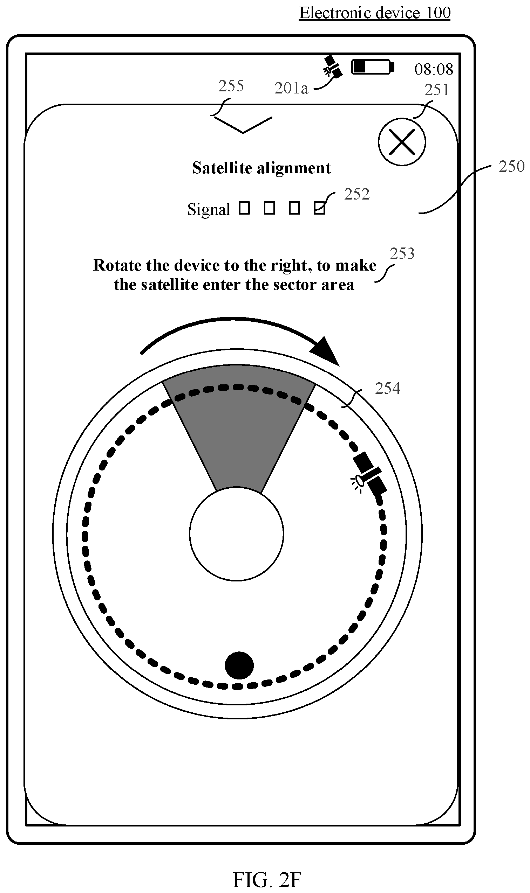

After the electronic device 100 finds the satellite, the electronic device 100 may close the satellite searching page 240, and display, based on the location of the satellite relative to the electronic device 100, an alignment page 250 shown in FIG. 2F. The location of the satellite relative to the electronic device 100 may be represented by a pitch angle and an azimuth.

As shown in FIG. 2F, the alignment page 250 may include a disable control 251, a strength indicator 252, a widget display control 255, and an alignment operation prompt (including a text prompt 253 and an animation prompt 254). For specific functions of the disable control 251 and the strength indicator 252, refer to functions of corresponding controls on the satellite searching page 240 shown in FIG. 2E. The widget display control 255 may be configured to trigger the electronic device 100 to disable displaying of the alignment page, and display a satellite live widget, where the satellite live widget includes a part or an entirety of content in the current alignment page 250. The alignment operation prompt indicates the user to perform an alignment operation. For example, the text prompt 253 may include text "Rotate the device to the right, to make the satellite enter the sector area". The animation prompt 254 may include the sector area, and the sector area may be used to prompt the user with an azimuth between the location of the satellite and the antenna of the electronic device 100. In the animation prompt 254 shown in FIG. 2F, a symbol representing the satellite (referred to as the satellite in the following embodiments) is located on a right side of the sector area. Therefore, the user needs to rotate the electronic device 100 to the right, so that the satellite is located in the sector area, to ensure that the electronic device 100 establishes a good communication connection to the satellite through the antenna. In addition, the animation prompt 254 may further include a small ball, and a location of the small ball may be used to prompt the user with a pitch angle of the electronic device 100 relative to the satellite. The animation prompt 254 may further include an arrow. The arrow indicates that the user rotates the device to the right. In addition, a satellite symbol 201a may be further displayed on the desktop, to prompt the user that the electronic device 100 has currently searched for the satellite. In some other embodiments, the satellite symbol 201a may alternatively be displayed after the electronic device 100 establishes a communication connection to the satellite, or displayed after the satellite communication mode is enabled.

It may be understood that the alignment page 250 shown in FIG. 2F is merely an example. In some embodiments, if the satellite is in another orientation relative to the antenna of the electronic device 100, the alignment operation prompt in the alignment page 250 may also be correspondingly changed (for example, when the satellite is located on a left side of the sector area, the user is prompted to rotate the device to the left). This is not limited in this application.

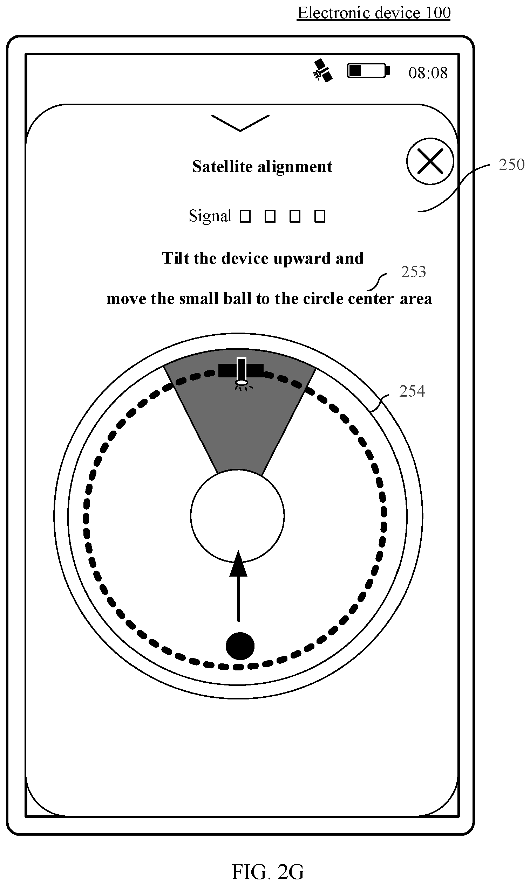

After the electronic device 100 is rotated to the right to enable the satellite to be located in the sector area, as shown in FIG. 2G, the electronic device 100 may change the alignment operation prompt.

As shown in FIG. 2G, on the alignment page 250, the text prompt 253 may be "Tilt the device upward and move the small ball to the circle center area". In the animation prompt 254, the satellite may be located in the sector area, and a pointing arrow may be displayed near the small ball, to indicate the user to tilt the device, so that the small ball moves upward. The pitch angle of the electronic device 100 relative to the satellite is adjusted when the small ball moves to the circle center area.

It may be understood that the alignment page 250 shown in FIG. 2G is merely an example. In some embodiments, the pitch angle of the electronic device 100 relative to the satellite may alternatively be different from that in the foregoing embodiment. In this case, a location of the small ball in the animation prompt may also be different from that in the foregoing embodiment shown in FIG. 2G. This is not limited in this application.

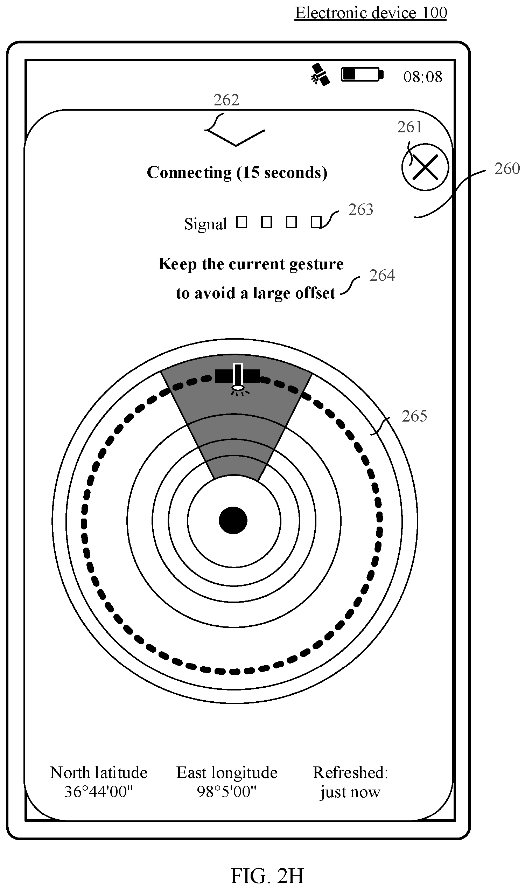

After the alignment is completed, the electronic device 100 may close the alignment page 250, and display a satellite connection page 260 shown in FIG. 2H on the desktop.

As shown in FIG. 2H, the satellite connection page 260 may include a disable control 261, a widget display control 262, a strength indicator 263, and an operation prompt (including a text prompt 264 and an animation prompt 265). Optionally, the satellite connection page 260 may further display current longitude and latitude information of the electronic device 100, for example, "North latitude 36°44'00" East longitude 98°5'00"", and may further display an update time of the longitude and the latitude, for example, "Refreshed: just now". For function descriptions of the disable control 261 and the strength indicator 263, refer to the function descriptions of the related controls in the foregoing embodiment. Details are not described herein again. The widget display control 262 may be configured to trigger the electronic device 100 to disable displaying of the satellite connection page 260, and display a satellite live widget, where the satellite live widget includes a part or an entirety of content in the satellite connection page 260. The operation prompt may indicate an operation of the user in a satellite connection process. For example, the text prompt 264 may be text "Keep the current gesture to avoid a large offset". The animation prompt 265 may prompt the user whether the posture of holding the device is correct. For example, the satellite is located in the sector area, and the small ball is located in the circle center area. In this case, the posture of the user holding the device is correct. In another case, the user needs to adjust the posture of holding the device. The animation prompt 265 may further display a plurality of concentric circles, to indicate that the electronic device 100 is establishing a communication connection to the satellite. In addition, a title "Connecting" may be further displayed on the satellite connection page 260, to prompt the user that the electronic device 100 is currently establishing the communication connection to the satellite. Optionally, a countdown may be further displayed next to the title, for example, "15 seconds".

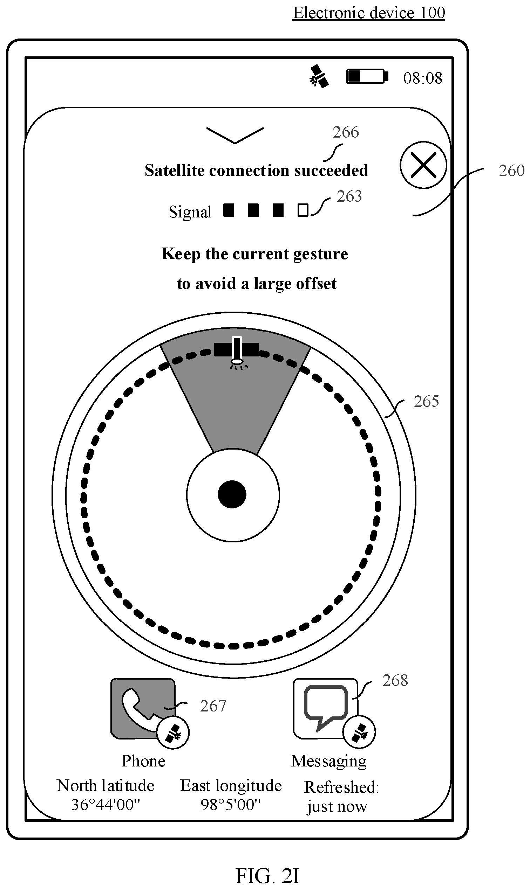

After the electronic device 100 successfully establishes the connection to the satellite, as shown in FIG. 2I, the electronic device 100 may change the strength of the signal in the strength indicator 263, and display a connection success prompt 266.

The signal strength in the strength indicator 263 shown in FIG. 2I is three bars, while the signal strength in the strength indicator 263 shown in FIG. 2H is zero bar. The connection success prompt 266 may be changed from the title "Connecting" shown in FIG. 2H to "Satellite connection succeeded". In addition, the electronic device 100 may further display a phone application icon 267 and a messaging application icon 268 on the satellite connection page 260, and a satellite symbol is displayed on both the two application icons, to prompt the user that the satellite communication mode is currently used. In addition, after successfully establishing the connection to the satellite, the electronic device 100 may disable displaying of the plurality of concentric circles in the animation prompt 265, to prompt the user that the communication connection has been established.

Optionally, FIG. 2A to FIG. 2I show that when the electronic device 100 cannot receive the cellular network signal, the electronic device 100 receives the user operation to establish the satellite communication connection to the satellite device. In another embodiment, when the electronic device 100 receives the cellular network signal, the electronic device 100 may receive the user operation to establish the satellite communication connection to the satellite device. This is not limited in this application.

The electronic device 100 establishes the satellite call connection to the electronic device 200 based on the satellite communication connection.

The electronic device 100 and the electronic device 200 may establish the satellite call connection based on the satellite communication connection. The electronic device 100 may actively perform a satellite call with the electronic device 200, so that the electronic device 100 and the electronic device 200 establish the satellite call connection. Alternatively, the electronic device 100 may receive a call request sent by the electronic device 200, so that the electronic device 100 establishes the satellite call connection to the electronic device 200.

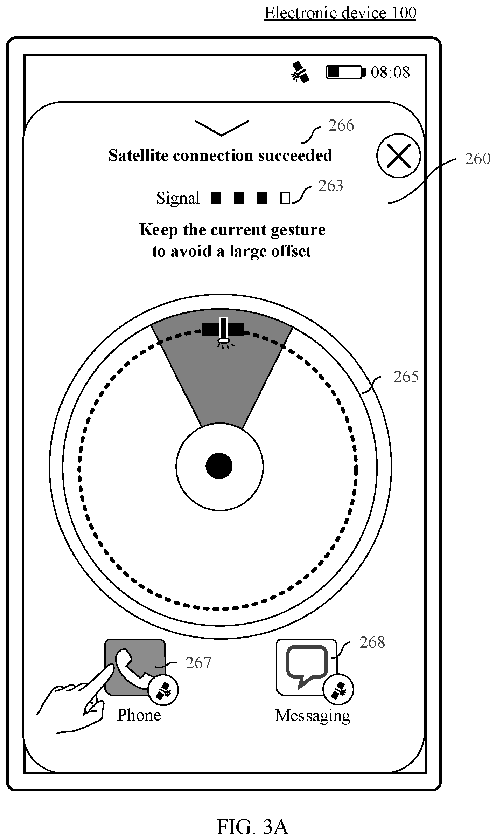

FIG. 3A to FIG. 3E are UI diagrams in which an electronic device 100 actively performs a satellite call with an electronic device 200, to enable the electronic device 100 to establish a satellite call connection to the electronic device 200.

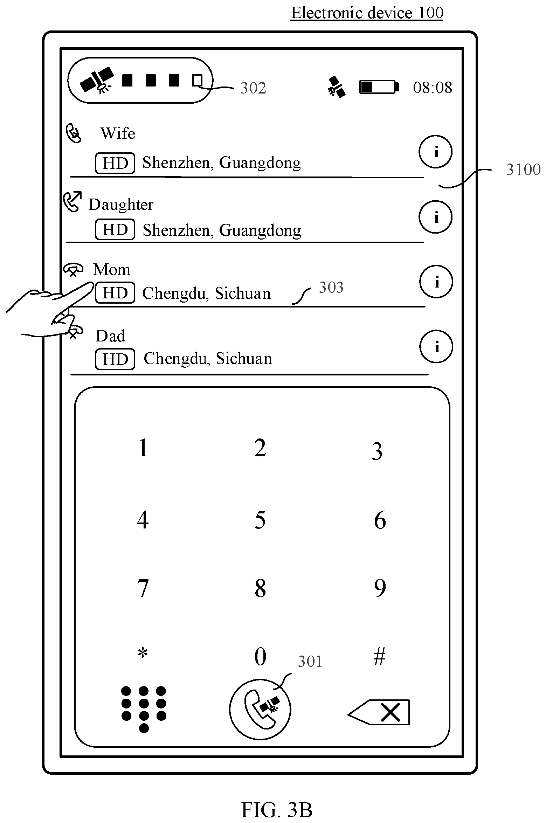

For example, as shown in FIG. 3A, the electronic device 100 may receive an input operation of a user on the phone application icon 267, for example, a tap operation. In response to the input operation of the user, the electronic device 100 may display a user interface 3100 shown in FIG. 3B.

As shown in FIG. 3B, the user interface 3100 may include one or more call records, for example, a call record 303. Each call record may record information about a peer device, for example, a SIM card number, a contact, a SIM card location, a dialing/answering indicator, and a call type indicator. In addition, the call record may also be used to trigger the electronic device 100 to dial an electronic device corresponding to a SIM card number/contact in the call record. The user interface 3100 further includes a dialing keyboard and a dialing control 301, and may be configured to trigger the electronic device 100 to dial another electronic device. A satellite symbol is displayed on the dialing control 301, and is used to prompt the user that the electronic device 100 may currently establish a satellite call connection to another electronic device based on a satellite communication connection. In addition, a satellite live capsule 302 may be further displayed in the user interface 3100. The satellite live capsule 302 may include a strength indicator, and is used to prompt the user with a current satellite signal strength. For example, it can be learned from the satellite live capsule 302 shown in FIG. 3B that the current satellite signal strength is three bars.

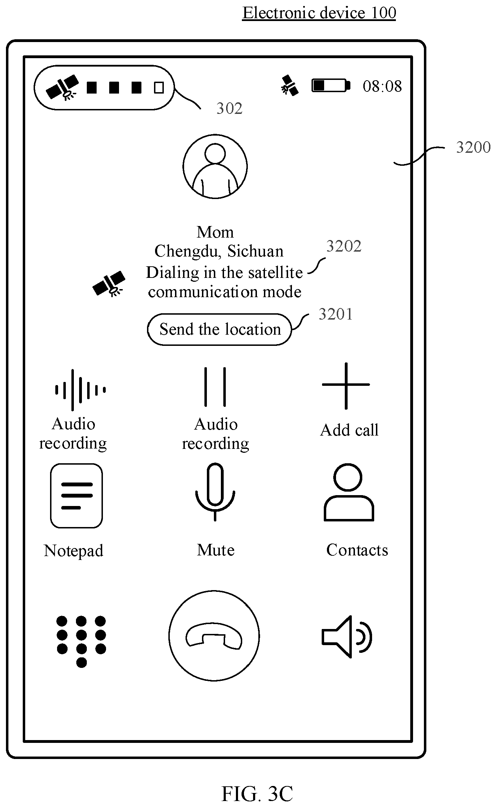

The electronic device 100 may receive and respond to an input operation of the user on the call record 303, for example, a tap operation. In response to the input operation of the user, the electronic device 100 may keep displaying the satellite live capsule 302, and display a call interface 3200 shown in FIG. 3C.

As shown in FIG. 3C, the call interface 3200 may include basic information (for example, a SIM card number, a SIM card location, a contact name, and a contact profile picture) of a called party, a location sending control 3201, a satellite dialing prompt 3202, and one or more call auxiliary controls. The one or more call auxiliary controls may include a recording control, a call adding control, a notepad control, a call ending control, a speaker control, and the like. It should be noted that the one or more call auxiliary controls may be different from one or more call auxiliary controls in a dialing interface when a satellite communication mode is not enabled. For example, if the electronic device 100 does not enable the satellite communication mode, the notepad control may be replaced with a video call control. In some other embodiments, if the satellite communication mode is enabled or disabled, a same call auxiliary control may be displayed in the dialing interface, and one or more call auxiliary controls (for example, a video call control) are displayed in different display manners, to prompt the user that these call auxiliary controls are in an unavailable state. The location sending control 3201 is configured to trigger the electronic device 100 to send current location information (for example, longitude and latitude information) of the electronic device 100 to the called party. The notepad control is configured to trigger the electronic device 100 to open a memo. The call ending control is configured to trigger the electronic device 100 to end a call. The satellite dialing prompt 3202 may be used to prompt the user that the satellite communication mode is currently used for dialing. The satellite dialing prompt 3202 may include a satellite symbol, and may further include a text prompt, for example, "Dialing in the satellite communication mode".

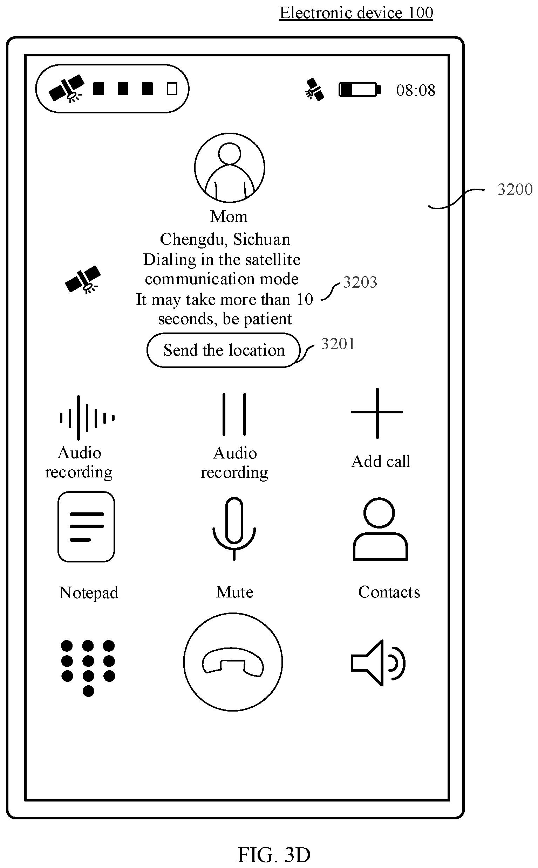

In a process in which the electronic device 100 dials the electronic device 200 by using the satellite, if it is detected that a dialing time exceeds a preset dialing time threshold, as shown in FIG. 3D, the electronic device 100 may display a waiting prompt 3203 in the call interface 3200.

As shown in FIG. 3D, the waiting prompt 3203 may be a text prompt, for example, "It may take more than 10 seconds, be patient". The waiting prompt 3203 may be used to prompt the user that the dialing time of the satellite communication connection is long. It may be understood that, in some embodiments, when the called party is ringing, is answering, or is hanging up, the electronic device 100 may also output a corresponding call status prompt in the call interface 3200, to prompt the user that the called party is ringing, is answering, is hanging up, or the like. This is not limited in this application.

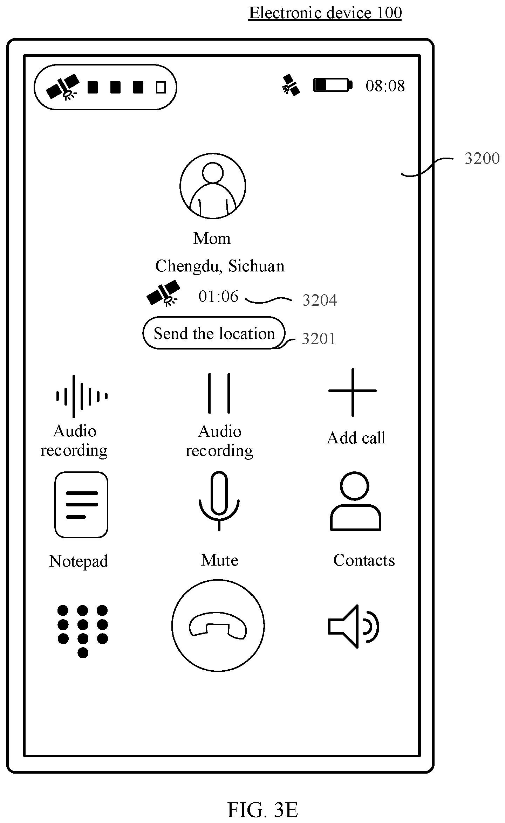

After the satellite call is connected, as shown in FIG. 3E, the electronic device 100 may disable displaying of the satellite dialing prompt 3202 and the waiting prompt 3203, and display the satellite call prompt 3204.

As shown in FIG. 3E, the satellite call prompt 3204 may include a satellite symbol, and may further include a call time, for example, "01:06". The satellite call prompt 3204 may prompt the user that the satellite communication mode is currently used for the call, and may be further used to prompt the user with the call time.

It may be understood that embodiments shown in FIG. 3A to FIG. 3E are merely examples. In some embodiments, when the electronic device 100 performs a call with another electronic device by using a satellite, the electronic device 100 may alternatively display a satellite live widget in the call interface, or switch, in response to the user operation, to display the satellite live widget or the satellite live capsule, and content in the satellite live widget/satellite live capsule may also change based on the satellite signal strength that is detected in real time. This is not limited in this application.

FIG. 3F-1 to FIG. 3F-3 are a diagram of software module interaction in which an electronic device 100 actively performs a satellite call with an electronic device 200, to enable the electronic device 100 to establish a satellite call connection to the electronic device 200.

In a process in which the electronic device 100 dials a number in a satellite communication mode, modules involved in implementing the satellite call may include the call application (IncallUI) 13, the call management module (telecom) 14, the call service module (telephony) 15, the communication system framework (FWK-CS) 16, the radio interface layer (RIL) 17, the satellite communication modem (modem) 18, and the like in the embodiment shown in FIG. 1C-1 to FIG. 1C-3.

As shown in FIG. 3F-1 to FIG. 3F-3, a procedure of interaction between the internal modules of the electronic device 100 in the process of dialing in the satellite communication mode may include the following steps.

S301A: The call application 13 detects a dialing operation, and determines an outgoing call number.

The dialing operation may be a dialing operation of a user. The dialing operation of the user may be a tap operation on a call record, or a tap operation on a dialing control.

S302A: The call application 13 sends a call instruction to the call management module 14, where the call instruction includes the outgoing call number.

S303A: The call management module 14 sends the call instruction to the call service module 15, where the call instruction includes the outgoing call number.

The call instruction may be used to trigger the call service module 15 to determine a communication mode and bind a call service in the corresponding communication mode.

S304A: The call service module 15 determines that the communication mode is a satellite communication mode, and binds a satellite call service.

Optionally, the satellite communication mode may mean that the electronic device 100 establishes a satellite communication connection to a satellite device. The electronic device 100 may communicate with the electronic device 200 by using the satellite device.

The call service module 15 may determine whether the satellite communication mode is currently enabled, and if the satellite communication mode is enabled, determine that the communication mode is the satellite communication mode, or if the satellite communication mode is not enabled, determine that the communication mode is the cellular communication mode.

In some embodiments, if the satellite communication mode is not enabled, the call service module 15 may further determine a strength of a cellular network signal. If the strength of the cellular network signal is less than a preset signal strength threshold, the call service module 15 may send a determining result to the call application 13 by using the call management module 14, and the call application 13 outputs a satellite communication mode enabling prompt, to ask the user whether to enable the satellite communication mode. After receiving an operation of enabling the satellite communication mode by the user, the call service module 15 may determine that the communication mode is the satellite communication mode.

After determining that the current communication mode is the satellite communication mode, the call service module 15 may invoke a corresponding module to bind the satellite call service, and the module corresponding to the satellite communication mode in the call service module 15 may include the satellite call module (SatelliteCall) and the satellite connection module (SatelliteConnection) in the embodiment shown in FIG. 1C-1 to FIG. 1C-3.

S305A: The call service module 15 sends a decision result to the call management module 14, to notify the call management module 14 that the communication mode is the satellite communication mode.

S306A: The call management module 14 sends an interface pull-up instruction to the call application 13, where the interface pull-up instruction includes the communication mode and the outgoing call number.

S307A: The call application 13 pulls up a call interface in the satellite communication mode.

The interface pull-up instruction may indicate the call application 13 to display the call interface in the satellite communication mode. A satellite live widget or a satellite live capsule may be displayed in the call interface, to prompt a satellite signal strength.

For example, for the call interface in the satellite communication mode, refer to related content in the embodiments shown in FIG. 3C and FIG. 3D.

S308A: The call service module 15 establishes a connection to the communication system framework 16.

After determining the satellite communication mode, the call service module 15 may establish a connection to a module related to satellite communication in the communication system framework 16. The module related to the satellite communication in the communication system framework 16 may include the satellite phone module (SatellitePhone) and the satellite voice call model (SatellitePhoneCallTracker) in the call framework in the embodiment shown in FIG. 1C-1 to FIG. 1C-3.

Optionally, S308A may be performed before or at the same time as S305A to S307A. A sequence of performing S308A and S305A to S307A is not limited.

S309A: The call service module 15 sends a dialing instruction to the communication system framework 16, where the dialing instruction includes the outgoing call number and the communication mode.

S310A: The communication system framework 16 sends the dialing instruction to the radio interface layer 17, where the dialing instruction includes the outgoing call number and the communication mode.

The communication system framework 16 may send the received dialing instruction to the radio interface layer (RIL) 17 by using the RILJ in the embodiment shown in FIG. 1C-1 to FIG. 1C-3. The connection between the RILJ and the RIL 17 may be a socket (socket).

S311A: The radio interface layer 17 sends a calling instruction to the satellite communication modem 18, where the calling instruction includes the outgoing call number.

After receiving the dialing instruction, the RIL17 may determine, based on the communication mode in the dialing instruction, to send the calling instruction to the satellite communication modem 18.

The calling instruction belongs to an AT instruction, and may be used to control the modem.

S312A: The satellite communication modem 18 initializes a channel, and establishes a satellite call connection to the electronic device 200.

After receiving the dialing instruction, the satellite communication modem 18 may initialize the channel, and establish the communication connection for the current call based on the calling number, for example, establish the satellite call connection to the electronic device 200 based on the calling number.

S313A: The satellite communication modem 18 obtains a call status.

After the satellite communication modem 18 establishes the satellite call connection to the electronic device 200, the satellite communication modem 18 may obtain the call status of the current call from the satellite device. In some embodiments, the satellite communication modem 18 may periodically/aperiodically obtain the call status from the satellite device at a fixed time interval.

The call status may include: a dialing state, a ringing state, a connected state, an unconnected state, and the like.

It may be understood that, in the connected state, the satellite communication modem 18 may further transmit call data to the electronic device 200 in real time by using the satellite.

S314A: The satellite communication modem 18 sends the call status to the call application 13.

Optionally, the satellite communication modem 18 may report the call status to the call application 13 through the radio interface layer 17, the communication system framework 16, the call service module 15, and the call management module 14.

S315A: The call application 13 refreshes the call interface based on the call status.

The call application 13 may change, based on the latest received call status, a call status prompt displayed in the call interface. For example, when the call status is the dialing state, the call status prompt may be the satellite dialing prompt 3202 in the embodiment shown in FIG. 3C. When the call status is the ringing state, the call status prompt may be text "The other party is ringing". When the call status is the connected state, the call status prompt may be call duration.

It may be understood that step S312A to step S315A are steps that can be repeatedly performed. Because the satellite communication modem 18 may obtain the call status in real time, after obtaining the latest call status, the satellite communication modem 18 may send the latest call status to the call application 13 by using the call management module 14. The call application 13 may also refresh the call interface based on the latest call status.

S316A: The call application 13 obtains call data A.

S317A: The call management module 14 sends the call data A to the satellite communication modem 18.

Optionally, the call management module 14 may report the call data A to the satellite communication modem 18 by using the call management module 14, the call service module 15, the communication system framework 16, and the radio interface layer 17.

S318A: The satellite communication modem 18 sends the call data A to the satellite device.

S319A: The satellite device sends the call data A to the base station 500.

S320A: The base station 500 sends the call data A to the electronic device 200.

After the satellite communication modem 18 establishes the satellite call connection to the electronic device 200, the call application 13 may obtain the call data A, and send the call data A to the call management module 14. The call management module 14 then sends the call data A to the satellite communication modem 18. The satellite communication modem 18 then sends the call data A to the satellite device. It can be learned from the embodiment of FIG. 1A that the satellite device includes the satellite 300 and the satellite ground station 400. In this case, the satellite communication modem 18 may first send the call data A to the satellite 300, then the satellite 300 sends the call data A to the satellite ground station 400, and then the satellite ground station 400 sends the call data A to the base station 500. Finally, the base station 500 sends the call data A to the electronic device 200. In this way, the electronic device 100 can send the call data on a side of the electronic device 100 to the electronic device 200 through the satellite call connection. Similarly, the electronic device 200 may send call data on a side of the electronic device 200 to the electronic device 200 in a reverse direction of S317A to S320A, to implement a call between the electronic device 100 and the electronic device 200.

In some application scenarios, after the electronic device 100 establishes the communication connection to the satellite, the electronic device 100 may alternatively receive a call request initiated by another electronic device (for example, the electronic device 200), and display an incoming call interface, where a satellite live widget or a satellite live capsule is displayed in the incoming call interface. The electronic device 100 may receive and respond to an operation of answering the call by the user, and display a call interface, where a satellite live widget or a satellite live capsule is also displayed in the call interface. In this way, the electronic device 100 may also answer, by using the satellite, a call initiated by the another electronic device.

FIG. 3G and FIG. 3H are UI diagrams in which an electronic device 100 receives a call request sent by an electronic device 200, and establishes a satellite call connection to the electronic device 200.

For example, as shown in FIG. 3G, the electronic device 100 displays an incoming call interface 3300. The incoming call interface 3300 further displays a satellite live capsule 302. The incoming call interface 3300 may further include incoming call information (for example, an incoming call number, a number location, a caller name, and a profile picture), and may further include an answer control 3301 and a hang-up control, configured to trigger the electronic device 200 to answer or hang up this call. A satellite symbol may also be displayed on the answer control 3301.

The electronic device 100 may receive and respond to a tap operation of a user on the answer control 3301, keep displaying the satellite live capsule 302, and display the call interface 3400 shown in FIG. 3H. Specific content of the call interface 3400 is similar to that of the call interface 3200 shown in FIG. 3E. Details are not described herein again in this application.

FIG. 3I-1 and FIG. 3I-2 are a diagram of software module interaction in which an electronic device 100 receives a call request sent by an electronic device 200, and establishes a satellite call connection to the electronic device 200.

As shown in FIG. 3I-1 and FIG. 3I-2, in a process in which the electronic device 100 answers a call in a satellite communication mode, for modules involved, refer to the embodiment shown in FIG. 3F-1 to FIG. 3F-3.

As shown in FIG. 3I-1 and FIG. 3I-2, when the electronic device 100 answers a call by using a satellite, a procedure of the interaction between internal modules of the electronic device 100 may include the following steps.

S301B: A satellite communication modem 18 obtains an incoming call message.

After the electronic device 100 enables the satellite communication mode, if another electronic device (for example, the electronic device 200) initiates a call request to the electronic device 100, the satellite communication modem 18 receives an incoming call message sent by the electronic device 200.

The following describes a process in which the satellite communication modem 18 receives a paging message sent by the another electronic device.

For example, the electronic device 200 initiates the calling request to the electronic device 100. The electronic device 200 may send, to a base station 500, an incoming call message carrying a device identifier (for example, a SIM card number) of the electronic device 100. The base station 500 may forward the incoming call message to a satellite ground station 400. The satellite ground station 400 may send the received incoming call message to the satellite 300, and then the satellite 300 sends the incoming call message to the satellite communication modem 18 in the electronic device 100.

S302B: The satellite communication modem 18 reports the incoming call message to the call management module 14.

Optionally, the satellite communication modem 18 may report the incoming call message to the call management module 14 through the radio interface layer 17, the communication system framework 16, and the call service module 15.

S303B: The call management module 14 determines that the communication mode is the satellite communication mode.

The call management module 14 may determine, based on the satellite communication modem 18 that reports the incoming call message, that the current communication mode is the satellite communication mode.

S304B: The call management module 14 sends an incoming call indication to a call application 13, where the incoming call indication includes the current communication mode and the incoming call message, and indicates to pull up an incoming call interface in the satellite communication mode.

S305B: The call application 13 displays the incoming call interface in the satellite communication mode based on the incoming call message.

A satellite live widget or a satellite live capsule may be displayed in the incoming call interface in the satellite communication mode. For example, for the incoming call interface in the satellite communication mode, refer to the embodiment shown in FIG. 3G.

S306B: The call application 13 receives a user operation of agreeing to establish a satellite call connection.

After the incoming call interface in the satellite communication mode is displayed, the call application 13 may receive the user operation of agreeing to establish the call connection. For example, the user operation of agreeing to establish the satellite call connection may be a tap operation on the answer control 3301 shown in FIG. 3G.

S307B: The call application 13 sends, to the satellite communication modem 18, a message for agreeing to establish the satellite call connection.

In response to the user operation of agreeing to establish the satellite call connection, the call application 13 may send, to the call management module 14, the message for agreeing to establish the satellite call connection, and then the call management module 14 sends, to the satellite communication modem 18, the message for agreeing to establish the satellite call connection.

Optionally, the call management module 14 may report, to the satellite communication modem 18 by using the call service module 15, the communication system framework 16, and the radio interface layer 17, the message for agreeing to establish the satellite call connection.

S308B: The satellite communication modem 18 initializes a channel, and establishes the satellite call connection to the electronic device 200.

After receiving the message for agreeing to establish the satellite call connection, the satellite communication modem 18 may initialize a channel, and establish the satellite call connection to the electronic device 200.

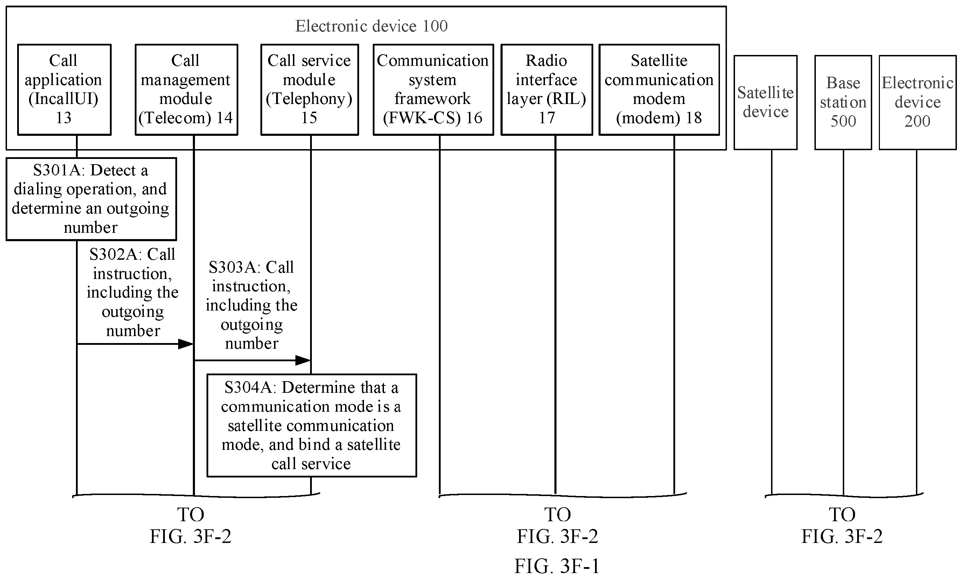

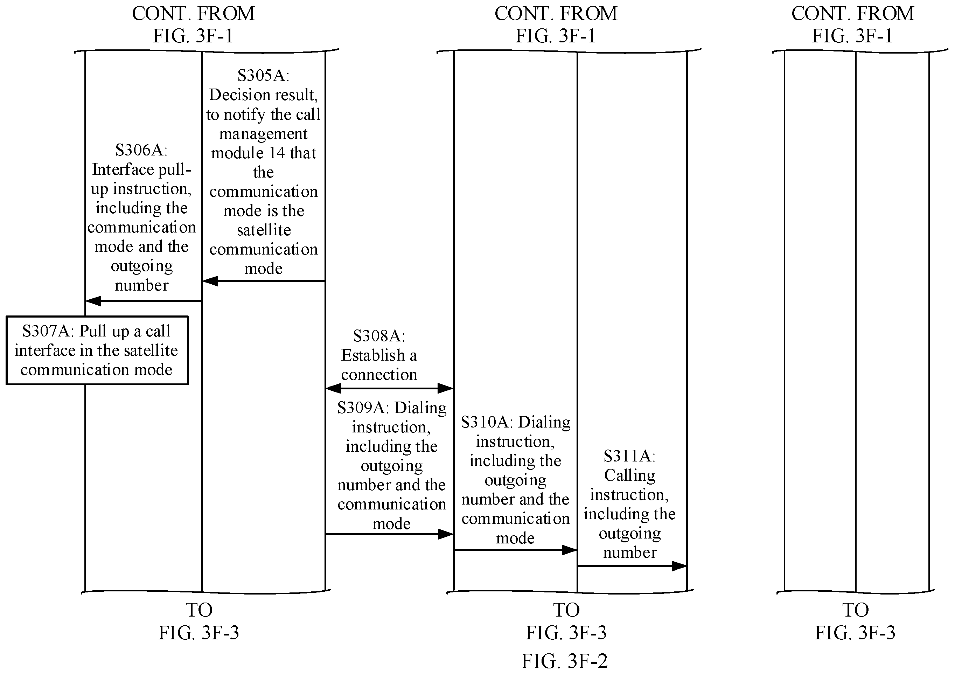

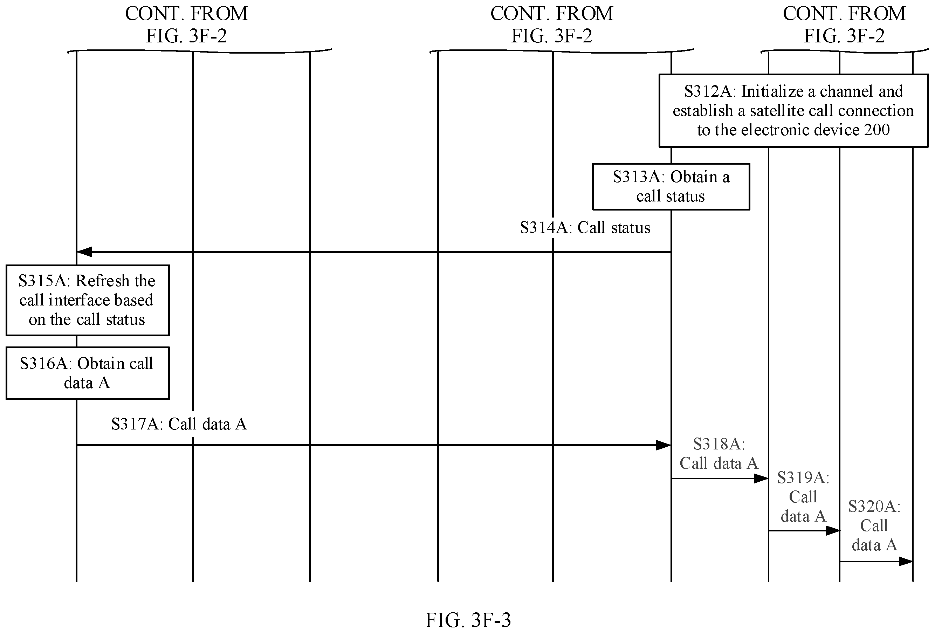

S309B: Perform method steps in S313A to S320A in the embodiment of FIG. 3F-3.

After the satellite communication modem 18 establishes the satellite call connection to the electronic device 200, the electronic device 100, the satellite device, the base station 500, and the electronic device 200 may perform method steps in S312A to S320A in the embodiment of FIG. 3F-3. For details, refer to the descriptions in S313A to S320A in the embodiment of FIG. 3F-3. Details are not described herein again in this application.

In a process in which the electronic device 100 establishes the satellite call connection to the electronic device 200, the electronic device 100 may send the first message to the electronic device 200.

For example, first SMS message information may be location information. In this way, when a user does not determine the location information of the user, in a process in which the electronic device 100 and the electronic device 200 are in a call, the user may also send the location information obtained by the electronic device 100 to the electronic device 200, thereby improving communication efficiency.

In a possible implementation, after the electronic device 100 establishes the satellite call with the electronic device 200, the electronic device 100 may convert the location information into a voice message, and then send the voice message to the electronic device 200.

In another possible implementation, after the electronic device 100 establishes the satellite call with the electronic device 200, the electronic device 100 may send the location information to the electronic device 200 after the satellite call with the electronic device 200 ends.

Optionally, the electronic device 100 may send the location information to the electronic device 200 through a messaging application, or the electronic device 100 may send the location information to the electronic device 200 through a first communication application (for example, a MeeTime application).

FIG. 4A to FIG. 4W are UI diagrams in which an electronic device 100 sends location information to an electronic device 200.

FIG. 4A to FIG. 4D are a group of UI diagrams in which the electronic device 100 converts the location information into the voice message, and then sends the voice message to the electronic device 200.

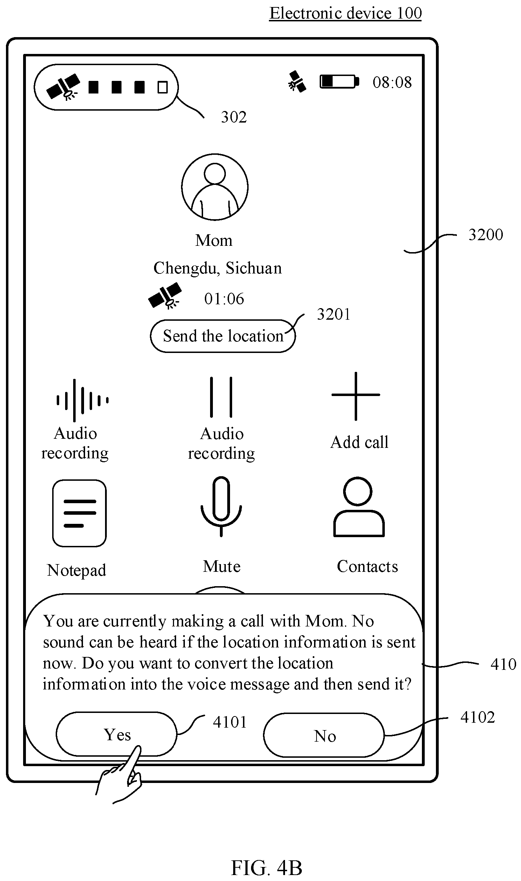

For example, as shown in FIG. 4A, the electronic device 100 may receive an input operation of a user on the location sending control 3201 in the call interface 3200, for example, a tap operation. In response to the input operation of the user, the electronic device 100 may display prompt information 410 shown in FIG. 4B, where the prompt information 410 is used to prompt the user to select a manner of sending the location information, to avoid affecting satellite call quality.

As shown in FIG. 4B, the prompt information 410 includes text "You are currently making a call with Mom. No sound can be heard if the location information is sent now. Do you want to convert the location information into the voice message and then send it?" The prompt information 410 further includes a yes option 4101 and a no option 4102. The user may convert the location information into the voice message through the yes option 4101 and send the voice message to the electronic device 200, or the user may send the location information to the electronic device 200 through the no option 4102 after the satellite call ends.

For example, as shown in FIG. 4B, the electronic device 100 may receive an input operation of the user on the yes option 4101 in the prompt information 410, for example, a tap operation. In response to the input operation of the user, the electronic device 100 may obtain the location information of the electronic device 100, convert the location information of the electronic device 100 into the voice message, where the voice message includes the location information of the electronic device 100, and sends the voice message to the electronic device 200 by using a satellite device.

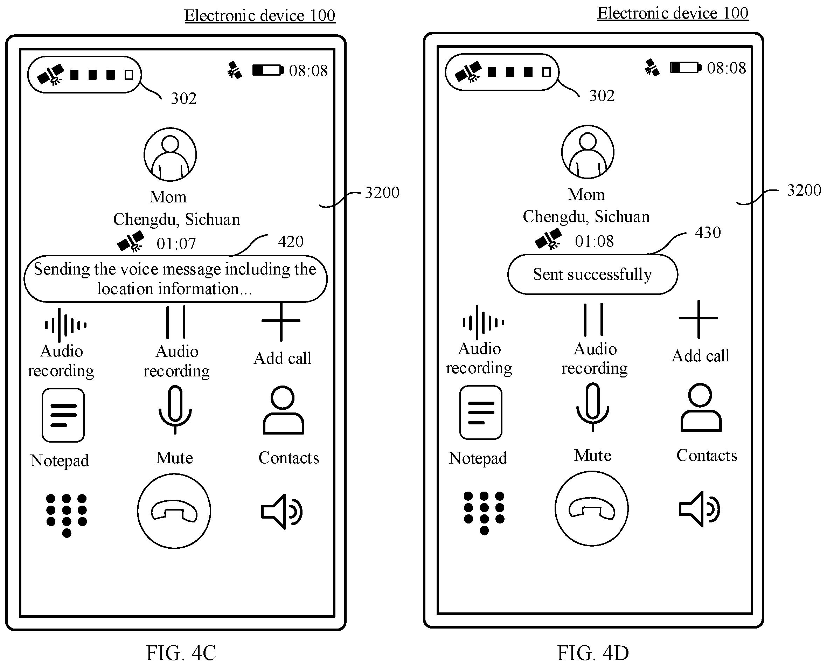

After the electronic device 100 sends the voice message and before the voice message is successfully sent, the electronic device 100 may display prompt information 420 shown in FIG. 4C, where the prompt information 420 is used to prompt the user that the voice message including the location information is currently being sent.

Optionally, the location information of the electronic device 100 may be location information obtained when the electronic device 100 establishes the satellite communication connection to the satellite 300, or may be location information obtained by the electronic device 100 in real time.

Optionally, after sending the voice message including the location information to the electronic device 200, the electronic device 100 may display prompt information 430 shown in FIG. 4D, where the prompt information 430 includes text "Sent successfully", and the prompt information 430 is used to prompt the user that the voice message including the location information has been successfully sent to the electronic device 200.

After receiving the voice message that includes the location information and that is sent by the electronic device 100, the electronic device 200 may play the voice message that includes the location information, so that a user of the electronic device 200 can obtain the location information of the electronic device 100.

According to the method, in a process in which the electronic device 100 performs a call with the electronic device 200 by using the satellite device, the electronic device 100 may convert the location information into the voice message, and then send the voice message to the electronic device 200. In this way, both the voice message including the location information and the call data belong to audio data, and a priority of the voice message including the location information is the same as a priority of the call data. The electronic device 100 may send the voice message including the location information and the call data to the electronic device 200 based on the sequence of the voice message including the location information and the call data, and does not need to wait to send the call data until the voice message including the location information is successfully sent. A case in which no sound can be heard in a call for a period of time does not occur. In this way, in a process in which the electronic device 100 communicates with the electronic device 200 by using the satellite device, the electronic device 100 may also send the location information to the electronic device 200, and call quality is not affected.

In some embodiments, the user may alternatively choose not to convert the location information into the voice message, but choose to directly send the location information to the electronic device 200 by using the satellite device.

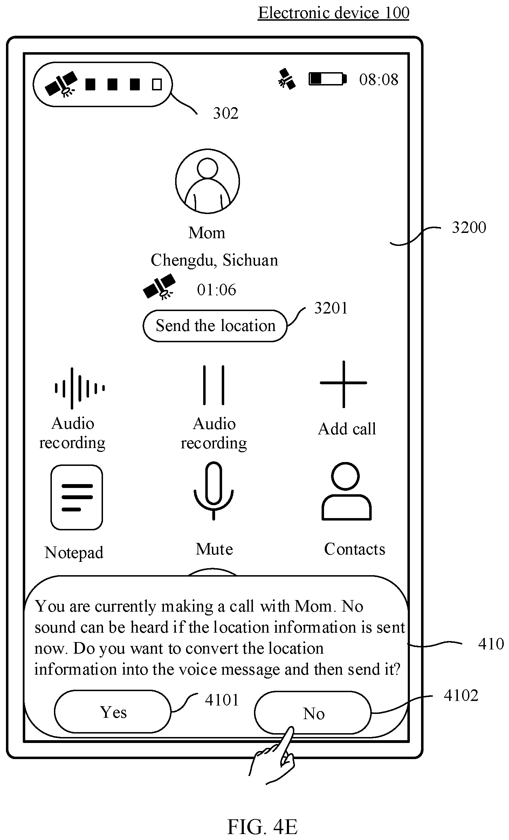

FIG. 4E to FIG. 4H are a group of UI diagrams in which the electronic device 100 directly sends the location message to the electronic device 200.

For example, as shown in FIG. 4E, after the electronic device 100 displays the prompt information 420, the electronic device 100 may receive an input operation of the user on the no option 4102 in the prompt information 420, for example, a tap operation. In response to the input operation of the user, the electronic device 100 may determine not to convert the location message into the voice message.

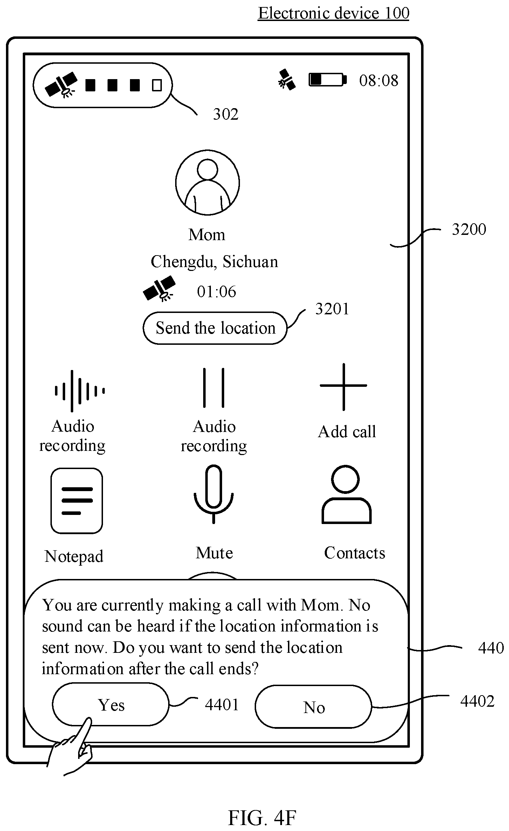

In response to the input operation of the user on the no option 4102, the electronic device 100 may display prompt information 440 shown in FIG. 4F. The prompt information 440 is used to prompt the user to send the location message after the satellite call ends, to avoid affecting satellite call quality. The prompt information 440 includes text information "You are currently making a call with Mom. No sound can be heard if the location information is sent now. Do you want to send the location information after the call ends?" The prompt information 440 further includes a yes option 4401 and a no option 4402. Through the yes option 4401, the user may send the location information to the electronic device 200 by using the satellite device after the electronic device 100 ends the satellite call with the electronic device 200. The user may also not send the location information to the electronic device 200 through the no option 4402.

Optionally, through the no option 4402, the user may alternatively send the location information to the electronic device 200 in a process in which the electronic device 100 performs the satellite call with the electronic device 200.

For example, as shown in FIG. 4F, the electronic device 100 may receive an input operation of the user on the yes option 4401 in the prompt information 440, for example, a tap operation. In response to the input operation of the user, the electronic device 100 may send the location information to the electronic device 200 by using the satellite device after ending the satellite call with the electronic device 200.

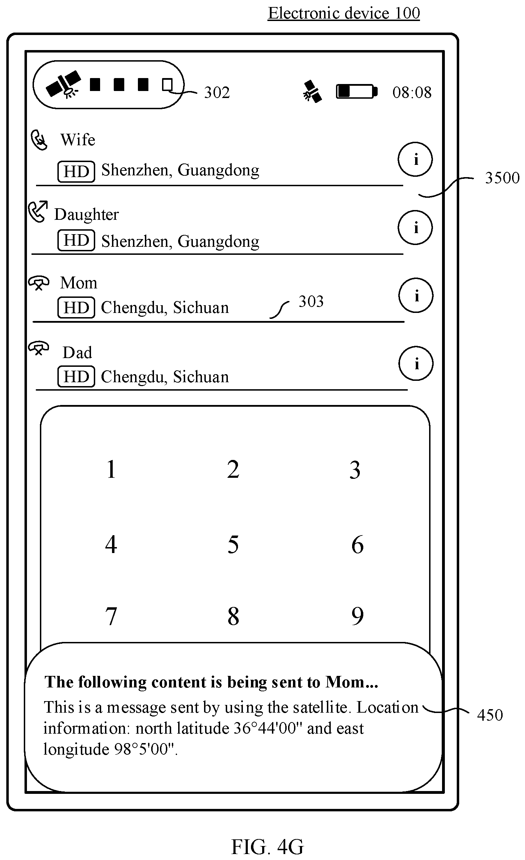

After the satellite call connection to the electronic device 200 ends, the electronic device 100 may display a user interface 3500 shown in FIG. 4G, and the user interface 3500 includes a plurality of call records.

After the satellite call connection to the electronic device 200 ends, the electronic device 100 may send the location information to the electronic device 200.

Optionally, the location information of the electronic device 100 may be location information obtained when the electronic device 100 establishes the satellite communication connection to the satellite 300, or may be location information obtained by the electronic device 100 in real time.

Optionally, in a process in which the electronic device 100 sends the location information to the electronic device 200, the electronic device 100 may display prompt information 450 shown in FIG. 4G. The prompt information 450 includes text "This is a message sent by using the satellite. Location information: north latitude 36°44'00" and east longitude 98°5'00".". The prompt information 450 is used to prompt the user that the electronic device 100 is sending the location information to the electronic device 200.

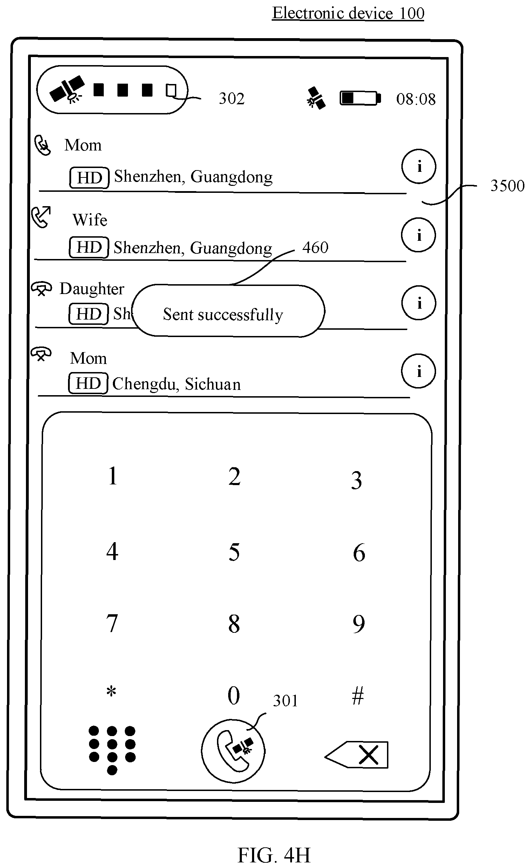

After the electronic device 100 successfully sends the location information to the electronic device 200, that is, after the electronic device 200 receives the location information sent by the electronic device 100, the electronic device 100 may display prompt information 460 shown in FIG. 4H, where the prompt information 460 is used to prompt the user that the electronic device 200 has received the location information sent by the electronic device 100.

Optionally, the user of the electronic device 100 may actively end the satellite call connection to the electronic device 200, or the user of the electronic device 200 may actively end the satellite call connection to the electronic device 100.

Optionally, in FIG. 4E to FIG. 4H, the electronic device 100 may send the location information to the electronic device 200 through a messaging application.

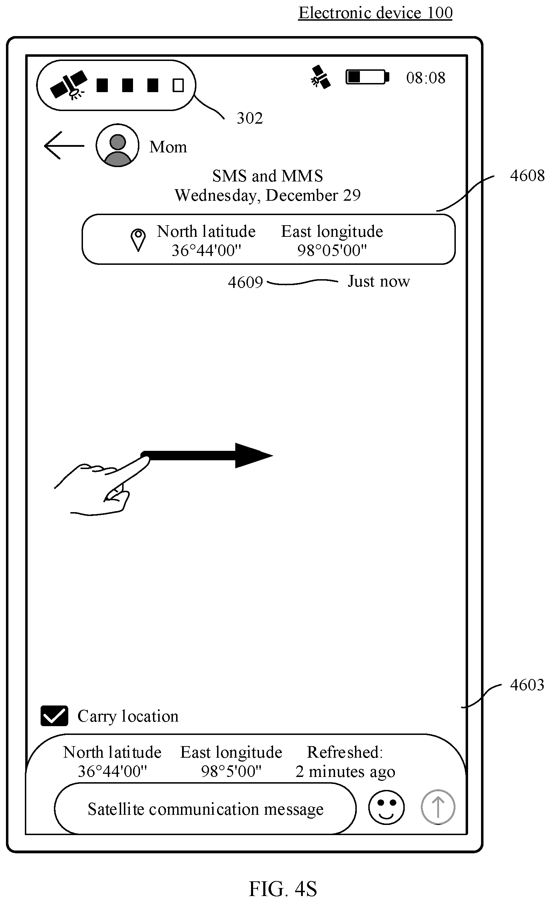

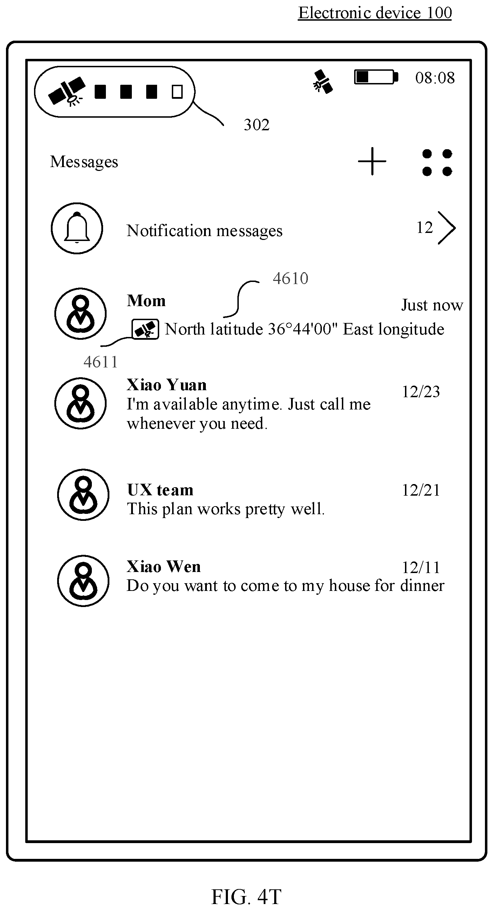

After the electronic device 100 sends the location information to the electronic device 200, the user may view, in the messaging application, the first message that includes the location information and that is sent by the user to the recipient "Mom". For details, refer to the descriptions of the embodiments of FIG. 4S and FIG. 4T.

In the embodiments of FIG. 4A to FIG. 4H, the electronic device 100 receives the operation of the user in the call interface 3200, and sends the location information of the electronic device 100 to the electronic device 200.

In some embodiments, the electronic device 100 may alternatively stop displaying the call interface 3200, and receive, in the messaging application, the user operation to send the location information of the electronic device 100.

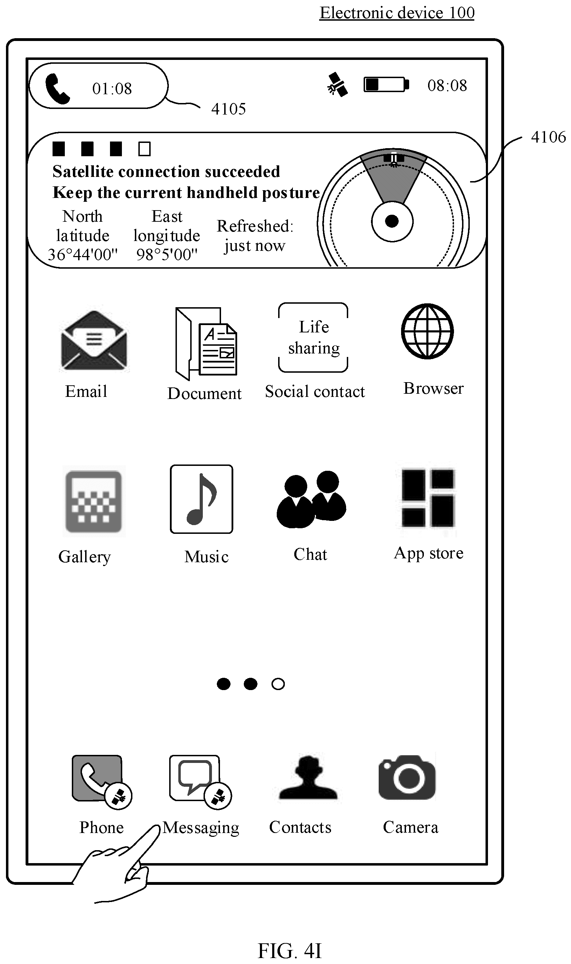

FIG. 4I to FIG. 4T are UI diagrams in which the electronic device 100 receives the user operation in the messaging application to send the location information of the electronic device 100 to the electronic device 200.

FIG. 4I to FIG. 4N are another group of UI diagrams in which the electronic device 100 converts the location information into the voice message and then sends the voice message to the electronic device 200.

The electronic device 100 may receive a user operation to stop displaying the call interface 3200, and display a desktop shown in FIG. 4I.

As shown in FIG. 4I, a call live capsule 4105 and a satellite connection widget 4106 are displayed on the desktop of the electronic device 100. A call time may be displayed in the call live capsule 4105, and a call identifier may be further displayed. The call identifier may be used to prompt the user that a call is currently in progress. The satellite connection widget 4106 may include a strength indicator, an operation prompt, longitude and latitude information, and the like. The satellite connection widget 4106 may be used to prompt the user that the electronic device 100 has successfully established the communication connection to the satellite.

Optionally, the electronic device 100 may not display the satellite connection widget 4106, but superimpose and display the call live capsule 4105 and the satellite live capsule 302 in the upper right corner of the desktop. The call live capsule 4105 may be located above the satellite live capsule 302, or the satellite live capsule 302 may be located above the call live capsule 4105.

As shown in FIG. 4I, a plurality of application icons are displayed on the desktop, and the plurality of application icons include a messaging application icon and a phone application icon. Both the messaging application icon and the messaging application icon include a satellite symbol, to indicate that the electronic device 100 has established a connection to the satellite device, and the electronic device 100 may send the first message to another electronic device based on the messaging application by using the satellite device, or the electronic device 100 may alternatively communicate with another electronic device based on the phone application by using the satellite device.

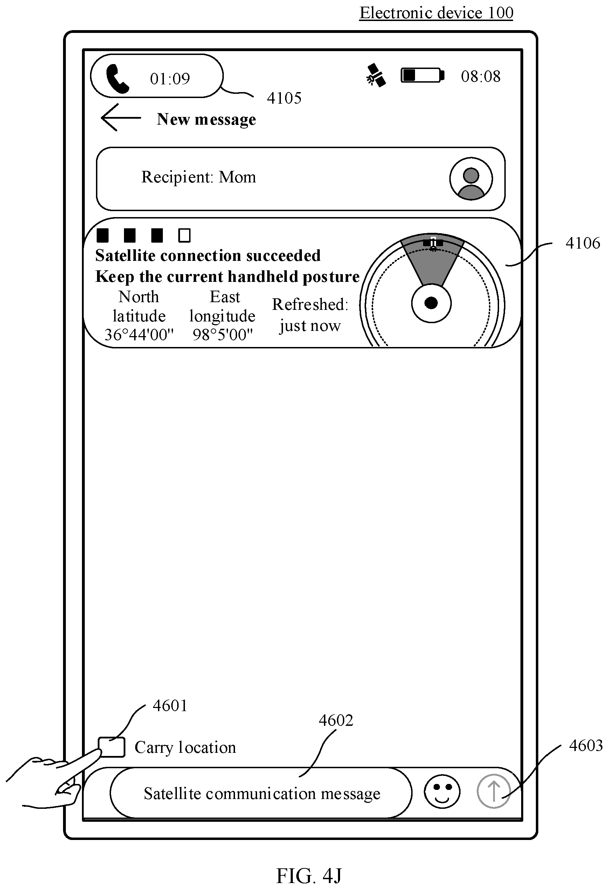

For example, as shown in FIG. 4I, the electronic device 100 may receive an input operation of the user on the messaging application icon, for example, a tap operation. In response to the input operation of the user, the electronic device 100 may display a new information interface shown in FIG. 4J. The new information interface displays the call live capsule 4105 and the satellite connection widget 4106. The new information interface further includes recipient information, a location carrying control 4601, an information editing bar 4602, and a sending control 4603. The location carrying control 4601 is configured to trigger the electronic device 100 to send the location information of the electronic device 100 to the recipient. In some embodiments, in the new information interface shown in FIG. 4J, the sending control 4603 is not in a highlighted state, to prompt the user that the sending control 4603 is not operable at this time. When detecting that the user determines the recipient and to-be-sent information is displayed in the information editing bar 4602, the electronic device 100 may switch a display status of the sending control 4603 to the highlighted state, to prompt the user that the user may send text content in the information editing bar 4602 to the recipient through the sending control 4603.

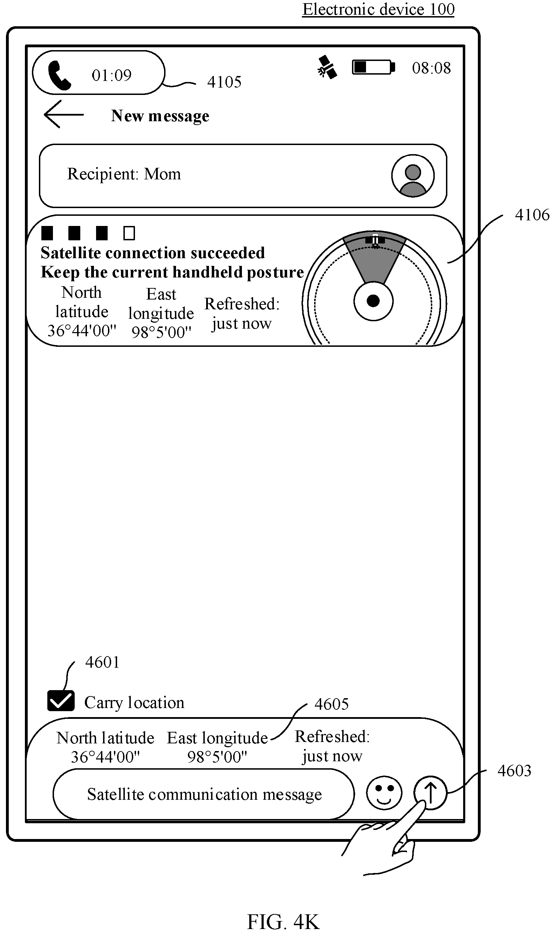

For example, as shown in FIG. 4J, the electronic device 100 may receive and respond to an input operation of the user on the location carrying control 4601, for example, a tap operation. In response to the input operation of the user, the electronic device 100 may display location information 4605 of the electronic device 100 shown in FIG. 4K in the new information interface.

Optionally, in response to the input operation on the location carrying control 4601, the electronic device 100 may switch the display status of the sending control 4603 to the highlighted state shown in FIG. 4K.

The location information 4605 may include longitude and latitude information of the electronic device 100 and an update time of the longitude and latitude information, for example, "North latitude 36°44'00" East longitude 98°5'00' Refreshed: just now".

In some embodiments, the location information 4605 may also be displayed in the information editing bar 4602.

In some embodiments, the user may alternatively not select the location carrying control 4601, but manually enter the location information 4605 in the information editing bar 4602.

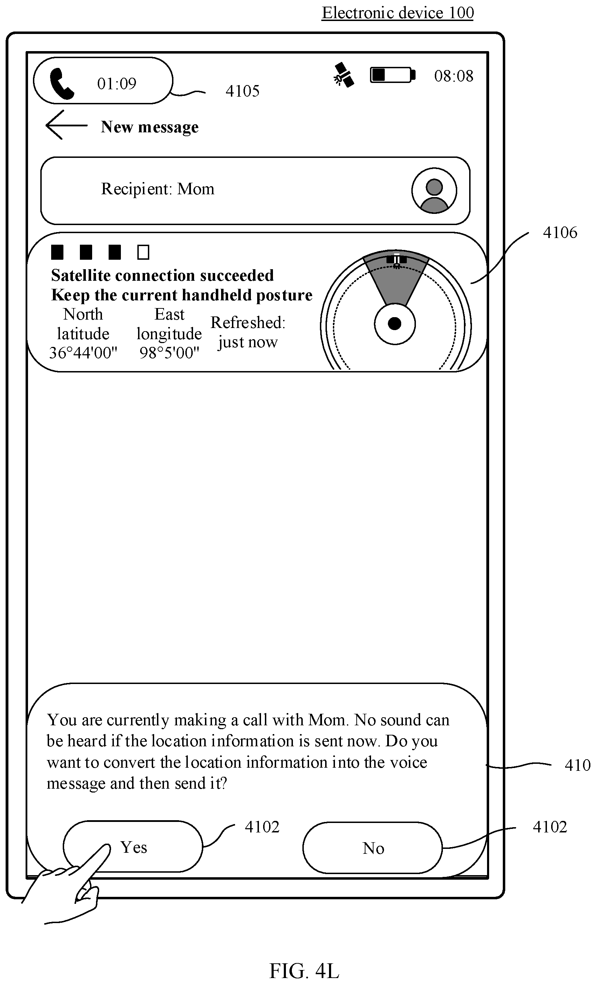

For example, as shown in FIG. 4K, the electronic device 100 may receive and respond to a tap operation of the user on the sending control 4603, keep displaying the call live capsule 4105 and the satellite connection widget 4106, and display the prompt information 410 shown in FIG. 4L. The prompt information 410 is used to prompt the user to select a manner of sending the location information, to avoid affecting satellite call quality. For details, refer to the description of the embodiment of FIG. 4E.

As shown in FIG. 4L, the electronic device 100 may receive and respond to an input operation of the user on the yes option 4101 in the prompt information 410, for example, a tap operation. In response to the input operation of the user, the electronic device 100 may obtain the location information of the electronic device 100, and convert the location information of the electronic device 100 into the voice message, where the voice message includes the location information of the electronic device 100; and send the voice message to the electronic device 200 by using the satellite device.

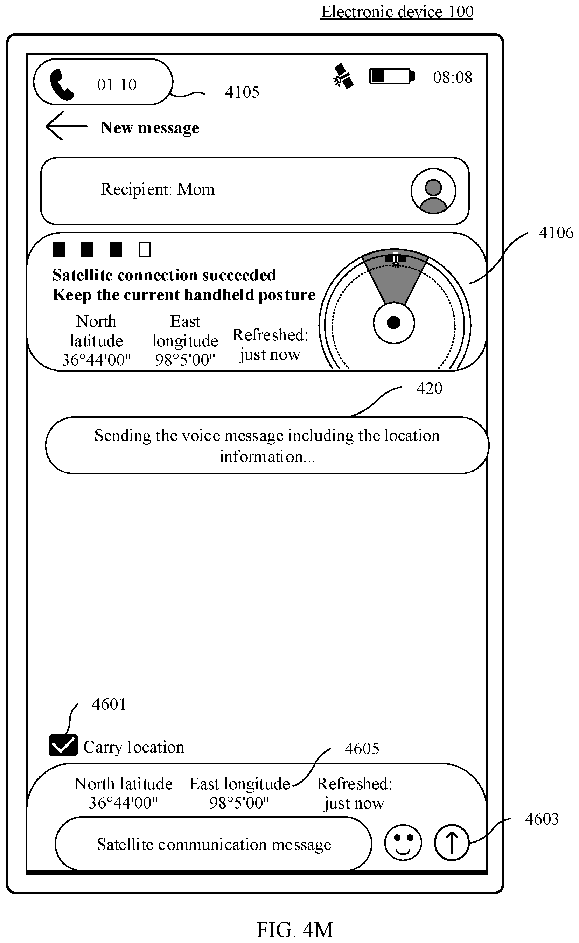

After the electronic device 100 sends the voice message and before the voice message is successfully sent, the electronic device 100 may display prompt information 420 shown in FIG. 4M, where the prompt information 420 is used to prompt the user that the voice message including the location information is currently being sent.

Optionally, the location information of the electronic device 100 may be location information obtained when the electronic device 100 establishes the satellite communication connection to the satellite 300, or may be location information obtained by the electronic device 100 in real time.

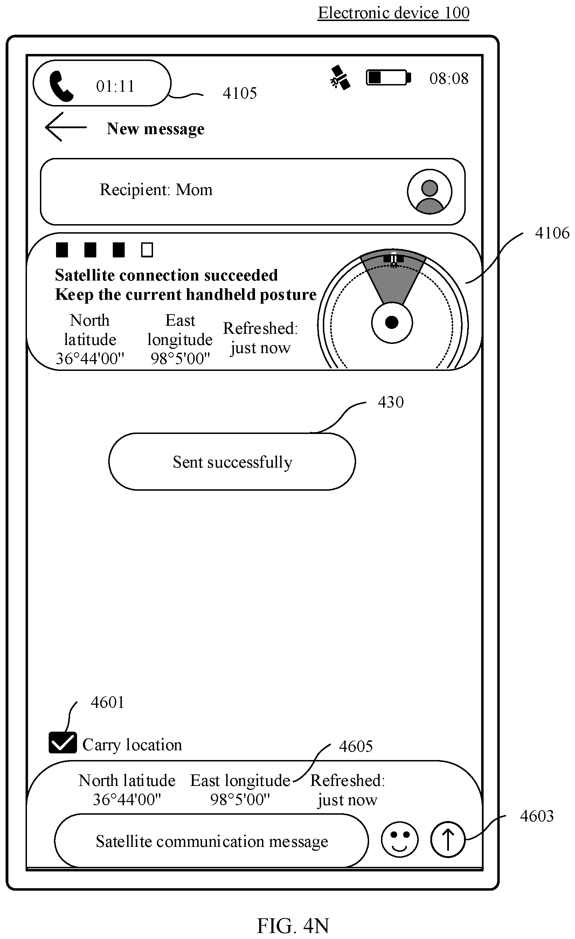

Optionally, after sending the voice message including the location information to the electronic device 200, the electronic device 100 may display prompt information 430 shown in FIG. 4N, where the prompt information 430 includes text "Sent successfully", and the prompt information 430 is used to prompt the user that the voice message including the location information has been successfully sent to the electronic device 200.

After receiving the voice message that includes the location information and that is sent by the electronic device 100, the electronic device 200 may play the voice message that includes the location information, so that a user of the electronic device 200 can obtain the location information of the electronic device 100.

Optionally, it is not limited that the user sends the location information of the electronic device 100 to the electronic device 200 through the messaging application. Alternatively, the user may not select the location carrying control 4601, and the user may manually enter text in the information editing bar 4602, and send the text entered by the user in the information editing bar 4602 to the electronic device 200 through the sending control 4603 in the new information interface.

In some embodiments, the user may alternatively choose not to convert the location information into the voice message, but choose to directly send the location information to the electronic device 200 by using the satellite device.

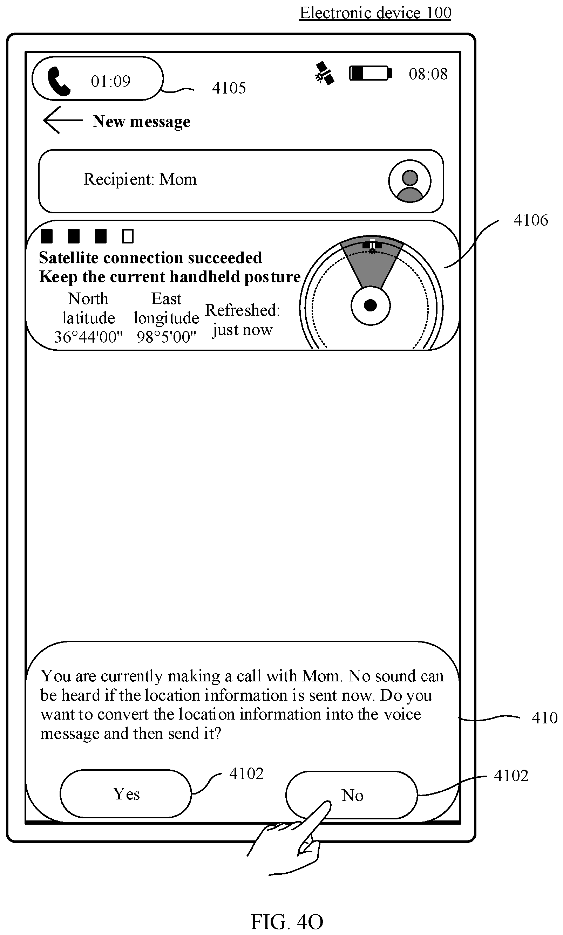

FIG. 4O to FIG. 4T are another group of UI diagrams in which the electronic device 100 directly sends the location message to the electronic device 200.

For example, as shown in FIG. 4O, after the electronic device 100 displays the prompt information 420, the electronic device 100 may receive an input operation of the user on the no option 4102 in the prompt information 420, for example, a tap operation. In response to the input operation of the user, the electronic device 100 may determine not to convert the location message into the voice message.

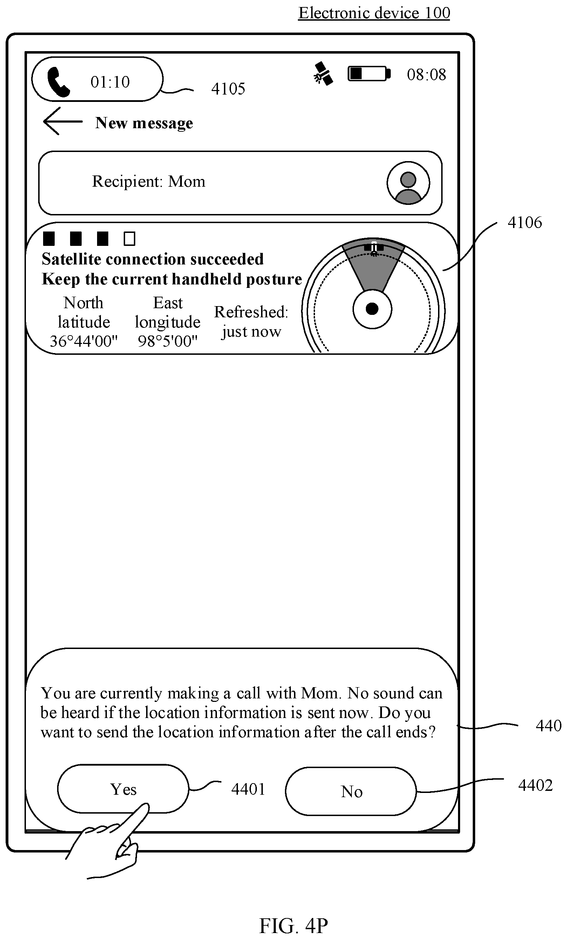

In response to the input operation of the user on the no option 4102, the electronic device 100 may display prompt information 440 shown in FIG. 4P. The prompt information 440 is used to prompt the user to send the location message after the satellite call ends, to avoid affecting satellite call quality. For details, refer to the description in the embodiment of FIG. 4F.

For example, as shown in FIG. 4P, the electronic device 100 may receive an input operation of the user on the yes option 4401 in the prompt information 440, for example, a tap operation. In response to the input operation of the user, the electronic device 100 may send the location information to the electronic device 200 by using the satellite device after ending the satellite call with the electronic device 200.

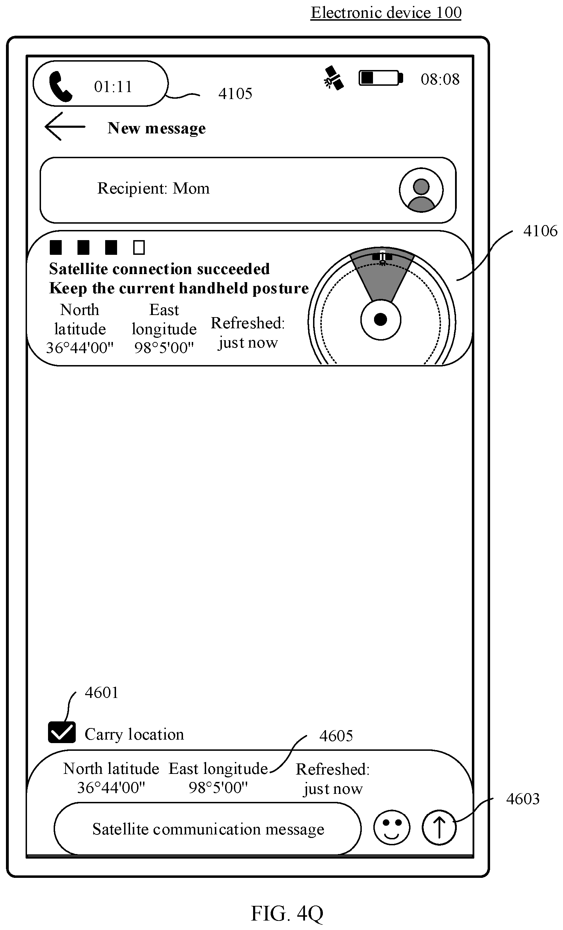

Before the satellite call connection to the electronic device 200 ends, the electronic device 100 may display a user interface shown in FIG. 4Q, where the user interface 3500 includes the call live capsule 4105 and the satellite connection widget 4106.

Optionally, the call duration in the call live capsule 4105 may increase with call duration.

The user may also not send the location information to the electronic device 200 through the no option 4402. Optionally, through the no option 4402, the user may alternatively send the location information to the electronic device 200 in a process in which the electronic device 100 performs the satellite call with the electronic device 200.

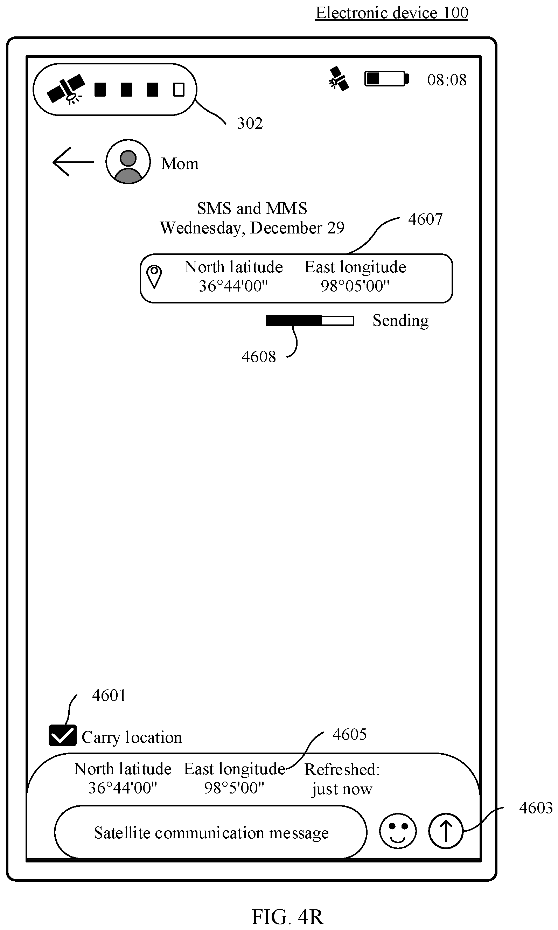

After the satellite call connection to the electronic device 200 ends, the electronic device 100 may display a first message sending interface shown in FIG. 4R; and display the satellite live capsule 302 in the first message sending interface, and stop displaying the call live capsule 4105, to indicate that the electronic device 100 has ended the call with the electronic device 200, and the electronic device 100 is still in the communication connection to the satellite device.

As shown in FIG. 4R, the information sending interface may include recipient information, a first message 4607, a sending status prompt 4608, the location carrying control 4601, the location information 4605, the sending control 4603, and the like. The first message 4607 may include the location information 4605. The sending status prompt 4608 may be used to prompt the user of a sending status of the information. The sending status includes: sending, successfully sent, failed to be sent, waiting to be sent, and the like. The sending status of the first message 4607 shown in FIG. 4R is sending, and a sending progress bar is displayed.

After the first message 4607 is successfully sent, that is, after the electronic device 200 receives the first message 4607, as shown in FIG. 4S, the electronic device 100 may change the sending status prompt 4608 in the information sending interface to "Just", to prompt the user that the first message 4607 is just successfully sent.

After the first message 4607 is successfully sent, the user may view, in the messaging application, the first message that includes the location information and that is sent by the user to the recipient "Mom".

For example, as shown in FIG. 4R, the electronic device 100 may receive and respond to a sliding operation of the user in the information sending interface, for example, a rightward sliding operation. The electronic device 100 may keep displaying the satellite live capsule 302, and display a message application interface shown in FIG. 4T.

As shown in FIG. 4T, the message application interface may include a notification message entry and a message list. The message list includes one or more message entries, for example, a message entry 4610. The message entry 4610 may be used to trigger the electronic device 100 to display information just sent in a satellite communication mode. The message entry 4610 may further include a satellite information indicator 4611, to prompt the user that the first message corresponding to the message entry 4610 is sent by using the satellite device.

Optionally, in the embodiments of FIG. 4I to FIG. 4T, the electronic device 100 may not only send the first message to the electronic device 200, but also send the first message to one or more other electronic devices.

It may be understood that the foregoing embodiments shown in FIG. 4A to FIG. 4R are merely examples. In some embodiments, the electronic device 100 may alternatively send more, less, or different information to more recipients (corresponding electronic devices) by using the satellite. This is not limited in this application.

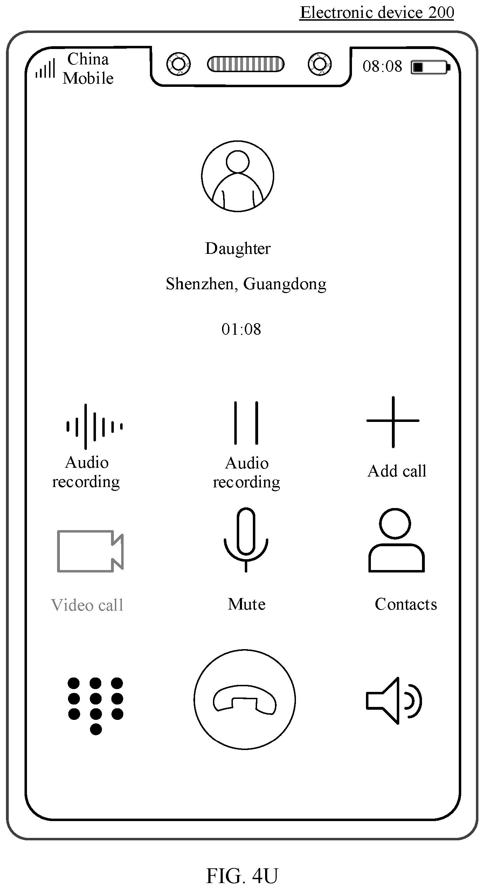

In the embodiments of FIG. 4A to FIG. 4D or FIG. 4I to FIG. 4N, in the process in which the electronic device 100 performs the satellite call with the electronic device 200, the electronic device 100 may convert the first message into the voice message and send the voice message to the electronic device 200. After receiving the voice message sent by the electronic device 100, the electronic device 200 may display the call interface shown in FIG. 4U, and play the voice message sent by the electronic device 100.

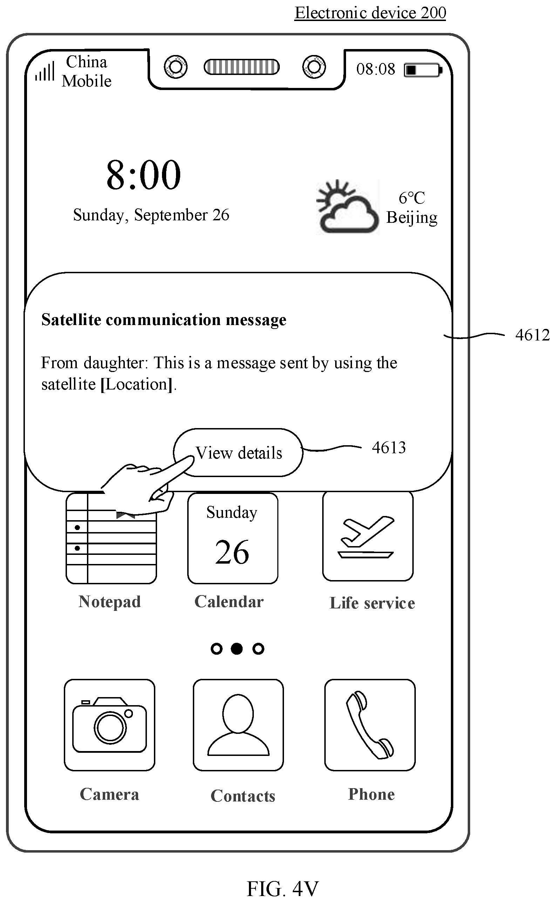

In the embodiments of FIG. 4E to FIG. 4H or FIG. 4O to FIG. 4T, after the electronic device 100 ends the satellite call with the electronic device 200, the electronic device 100 may send the first message to the electronic device 200. After receiving the first message sent by the electronic device 100, the electronic device 200 may display prompt information 4612 shown in FIG. 4V, where the prompt information 4612 is used to prompt the user that the first message sent by the electronic device 100 by using the satellite device is received. The prompt information 4612 includes a view detail option 4613, and the view detail option 4613 is used to view content of the first message sent by the electronic device 100.

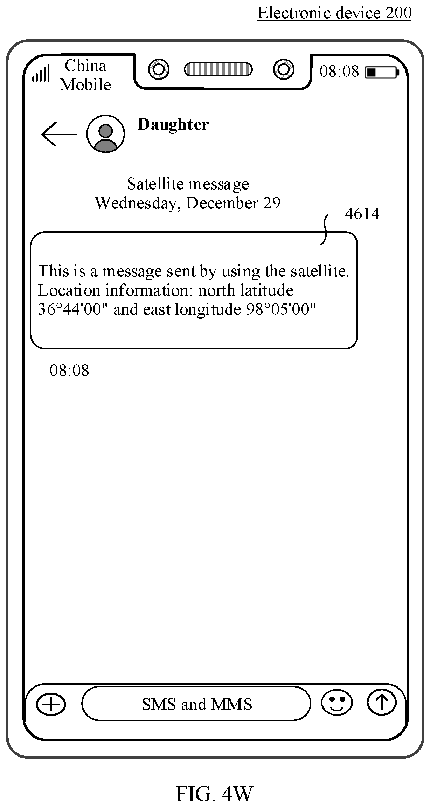

For example, as shown in FIG. 4V, the electronic device 100 may receive an input operation of the user on the view detail option 4613 in the prompt information 4612, for example, a tap operation. In response to the input operation of the user, the electronic device 200 may display a user interface shown in FIG. 4W. Content 4614 of the first message sent by the electronic device 100 is shown in the user interface shown in FIG. 4W. For example, the content 4614 of the first message may include the location information of the electronic device 100 "north latitude "36°44'00" and east longitude 98°05'00"".

FIG. 5A-1 and FIG. 5A-2 are a schematic flowchart of a method for sending a first message by an electronic device 100 to an electronic device 200 by using a satellite device according to this application.

Modules in an embodiment of FIG. 5A-1 and FIG. 5A-2 may include the call application 13, the call management module 14, the radio interface layer (RIL) 17, and the satellite communication modem (modem) 18 that are shown in FIG. 1C-1 to FIG. 1C-3.

As shown in FIG. 5A-1 and FIG. 5A-2, in a process of sending the first message to another electronic device (for example, the electronic device 200) in a satellite communication mode, an interaction procedure of internal modules of the electronic device 100 may include the following steps.

S501A: The call application 13 displays a satellite call interface with the electronic device 200.

For example, the electronic device 100 may actively perform a satellite call with the electronic device 200, so that the call application 13 in the electronic device 100 maintains a satellite call connection to the call application on the electronic device 200. For details, refer to the descriptions of the embodiments of FIG. 3A to FIG. 3F-3.

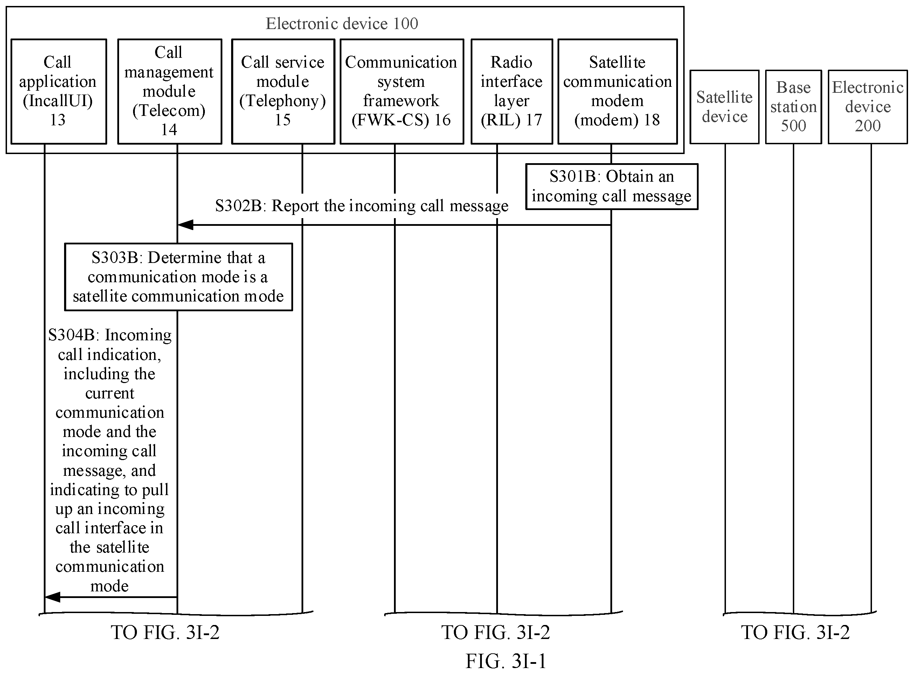

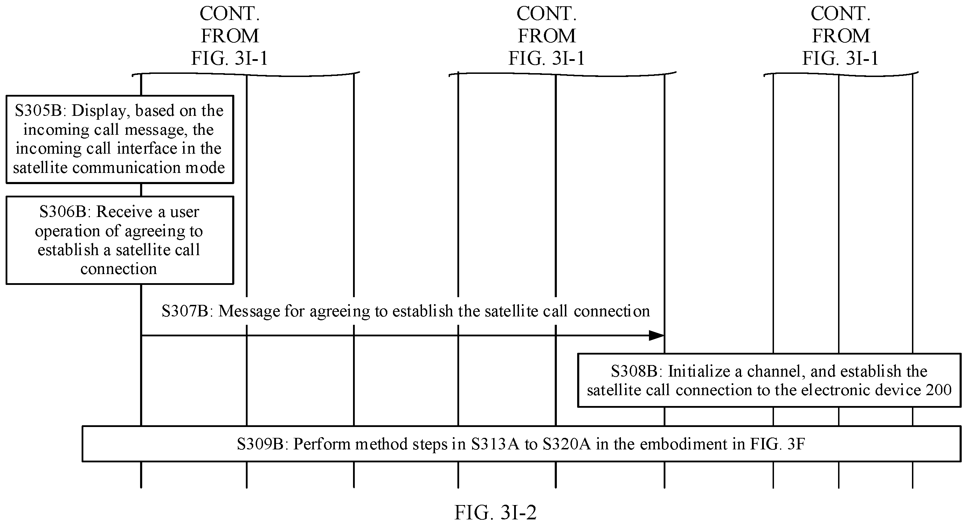

For example, the electronic device 100 may alternatively receive a call request initiated by the another electronic device (for example, the electronic device 200), so that the call application 13 in the electronic device 100 maintains the satellite call connection to the call application on the electronic device 200. For details, refer to the descriptions of the embodiments of FIG. 3G and FIG. 3I-2.

For example, the satellite call interface may be the call interface 3200 shown in FIG. 3C.

S502A: The call application 13 receives an operation of a user in the satellite communication interface, and determines a recipient number and the first message.

For example, the satellite communication interface may include the location sending control 3201. The call application 13 may receive an operation of the user on the location sending control 3201 in the satellite communication interface, and determine the recipient number and the first message.

For example, the first message may be location information of the electronic device 100.

Optionally, the location information of the electronic device 100 may be obtained after the input operation of the user on the location sending control 3201 is received, or may be obtained when the electronic device 100 establishes a satellite communication connection to the satellite device. This is not limited in this application. Optionally, the location information of the electronic device 100 may be obtained by using a GPS module of the electronic device, and the location information may include longitude and latitude information. For example, a longitude may be east longitude 98°5'00", and a latitude may be north latitude 36°44'00".

S503A: The call application 13 prompts the user whether to convert the first message into a voice message and send the voice message.

In a process in which the electronic device 100 and the electronic device 200 establish the satellite call connection, if the electronic device 100 receives a user operation to send a first message to the electronic device 200, a priority of the first message is higher than a priority of the call data, and the call data and the first message are sent to the satellite device through a same channel (for example, a first channel). In a process in which the electronic device 100 establishes the satellite call connection to the electronic device 200 by using the satellite device, if the electronic device 100 receives the user operation to send the first message, the first message occupies the first channel for sending the call data by the electronic device 100. The electronic device 100 can continue to send the call data to a satellite call through the first channel only after the first message is sent. As a result, in a process in which the electronic device 100 sends the first message to the electronic device 200 by using the satellite device, the electronic device 100 cannot send the call data to the electronic device 200 based on the satellite device through the first channel, the electronic device 100 cannot receive, through the first channel, call data sent by the electronic device 200 based on the satellite device, and no sound can be heard in a call for a period of time.

Based on this, in response to detecting an operation of sending the first message, the messaging application 19 may prompt the user whether to convert the first message into the voice message and send the voice message. In this way, both the voice message including the first message and the call data belongs to audio data, and a priority of the voice message including the first message is the same as a priority of the call data. The electronic device 100 may send the voice message including the first message and the call data to the electronic device 200 based on a sequence of the voice message including the first message and the call data, and does not need to wait to send the call data until the voice message including the first message is successfully sent. A case in which no sound can be heard in a call for a period of time does not occur. In this way, in a process in which the electronic device 100 communicates with the electronic device 200 by using the satellite device, the electronic device 100 may also send the first message to the electronic device 200, and call quality is not affected.

For example, the call application 13 may display the prompt information 410 shown in FIG. 4B, to prompt the user whether to convert the first message into a voice message and send the voice message.

When the user determines to convert the first message into the voice message and send the voice message, S504A to S512A are performed.

When the user determines not to convert the first message into the voice message and send the voice message, S513A is performed.

S504A: The call application 13 converts the first message into the voice message.

S505A: The call application 13 sends the recipient number and the voice message to the call management module 14.

After the user determines to convert the first message into the voice message and send the voice message, the call application 13 may convert the first message into the voice message.

After converting the first message into the voice message, the call application 13 may send the recipient number and the voice message to the call management module 14.

S506A: The call management module 14 determines that the communication mode is the satellite communication mode.

The call management module 14 may determine, by determining whether the electronic device 100 enables the satellite communication mode, whether the current communication mode is the satellite communication mode. If the electronic device 100 has enabled the satellite communication mode, the communication mode is determined as the satellite communication mode. If the electronic device 100 has not enabled the satellite communication mode, the communication mode is determined as a cellular network mode.

In some embodiments, if the satellite communication mode is not enabled, the call management module 14 may further determine a strength of a cellular network signal. If the strength of the cellular network signal is less than a preset signal strength threshold, the call management module 14 may send a determining result to the call application 13, and the call application 13 outputs a satellite communication mode enabling prompt, to ask the user whether to enable the satellite communication mode. After receiving an operation of enabling the satellite communication mode by the user, the call management module 14 may determine that the communication mode is the satellite communication mode.

S507A: The call management module 14 sends the recipient number, the voice message, and the satellite communication mode to the radio interface layer 17.

The satellite communication mode is used by the call management module 14 to determine to send the recipient number and the voice message to a satellite call module in the call service module 15. After the satellite call module receives the recipient number and the voice message, the satellite call module sends the recipient number and the voice message to a satellite connection module in the call service module 15.

The satellite connection module then sends the recipient number and the voice message to a satellite phone module in a call framework. The satellite phone module then sends the recipient number and the voice message to a satellite voice call model, and the satellite voice call model sends the recipient number and the voice message to the radio interface layer 17.

In another embodiment, when the call management module 14 determines that the communication mode is the cellular network mode, the call management module 14 may send the recipient number, the voice message, and the cellular network mode to the radio interface layer 17.

After determining that the current communication mode is the satellite communication mode, the call management module 14 may send the recipient number, the voice message, and the satellite communication mode to the radio interface layer 17.

S508A: The radio interface layer 17 sends the recipient number and the voice message to the satellite communication modem 18.

S509A: The satellite communication modem 18 sends the recipient number and the voice message to the satellite device.

S510A: The satellite device sends the recipient number and the voice message to the base station 500.

Optionally, the radio interface layer 17 may send the recipient number and the voice message to the satellite communication modem 18 through a satellite interface layer in the radio interface layer 17.

After receiving the recipient number and the voice message, the satellite communication modem 18 may send the recipient number and the voice message to the satellite device.

After receiving the recipient number and the voice message, the satellite device may send the recipient number and the voice message to the base station 500.

The recipient number is used by the base station 500 to determine a receive end of the voice message.

S511A: The base station 500 sends the voice message to the electronic device 200.

The base station 500 may determine, based on the recipient number, that the receive end of the voice message is the electronic device 200, and send the voice message to the electronic device 200.

S512A: The electronic device 200 plays the voice message through the call application 13, to obtain the first message.

After obtaining the voice message, the electronic device 200 may play the voice message through the call application 13, to obtain the first message sent by the electronic device 100.

Optionally, when the first message is a location message of the electronic device 100, the electronic device 200 may play the voice message including the location message, so that a user of the electronic device 200 can obtain the location message of the electronic device 100.

S513A: The call application 13 does not send the first message or sends the first message after the call ends.

When the user determines not to convert the first message into the voice message and send the voice message to the electronic device 100, the call application 13 may not send the first message or send the first message after the call ends. For details, refer to the description of the embodiment of FIG. 5B-1 and FIG. 5B-2.

In another possible implementation, when the user determines not to convert the first message into the voice message and send the voice message, the electronic device 100 may alternatively send the first message to the electronic device 200 in a process of performing the satellite call with the electronic device 200.

According to the method provided in FIG. 5A-1 and FIG. 5A-2, in a process in which the electronic device 100 performs the satellite call with the electronic device 200, the electronic device 100 may convert the to-be-sent first message into the voice message. Both the voice message including the first message and the call data belong to the audio data, and the priority of the voice message including the first message is the same as the priority of the call data. The electronic device 100 may send the voice message including the first message and the call data to the electronic device 200 based on a sequence of the voice message including the first message and the call data, and does not need to wait to send the call data until the voice message including the first message is successfully sent. A case in which no sound can be heard in a call for a period of time does not occur. In this way, in a process in which the electronic device 100 communicates with the electronic device 200 by using the satellite device, the electronic device 100 may also send the first message to the electronic device 200, and call quality is not affected.

Optionally, S504A to S513A are not limited to being performed in the process in which the electronic device 100 performs the satellite call with the electronic device 200, and may alternatively be performed after the satellite call between the electronic device 100 and the electronic device 200 ends.

FIG. 5B-1 and FIG. 5B-2 are a schematic flowchart of another method for sending a first message by an electronic device 100 to an electronic device 200 by using a satellite device according to this application.

Modules in an embodiment of FIG. 5B-1 and FIG. 5B-2 may include the call application 13, the call management module 14, the radio interface layer (RIL) 17, and the satellite communication modem (modem) 18 that are shown in FIG. 1C-1 to FIG. 1C-3.

As shown in FIG. 5B-1 and FIG. 5B-2, in a process of sending the first message to another electronic device (for example, the electronic device 200) in a satellite communication mode, an interaction procedure of internal modules of the electronic device 100 may include the following steps.

S501B: The call application 13 displays a satellite call interface with the electronic device 200.

S502B: The call application 13 receives an operation of a user in the satellite communication interface, and determines a recipient number and the first message.

Optionally, for descriptions of S501B and S502B, refer to the descriptions of S501A and S502A. Details are not described herein again in this application.

S503B: The call application 13 prompts the user whether to send the first message after the satellite call with the electronic device 200 ends.

In a process in which the electronic device 100 establishes a satellite call connection to the electronic device 200, if the electronic device 100 receives a user operation and sends the first message to the electronic device 200, in response to the user operation of sending the first message, the call application 13 may prompt the user whether to send the first message after the satellite call with the electronic device 200 ends. In this way, a case in which no sound can be heard in the call for a period of time when the electronic device 100 sends the first message in a process in which the electronic device 100 performs the satellite call with the electronic device 200 can be avoided.

For example, the call application 13 may display the prompt information 440 shown in FIG. 4F, to prompt the user whether to send the first message after the satellite call with the electronic device 200 ends.

When the user determines to send the first message after the satellite call with the electronic device 200 ends, S504B to S512B are performed.

When the user determines not to send the first message after the satellite call with the electronic device 200 ends, S513B is performed.

S504B: The call application 13 ends the satellite call with a call application on the electronic device 200.

S505B: The call application 13 sends the recipient number and the first message to the call management module 14.

When the user determines to send the first message after the satellite call ends, after detecting that the call application 13 ends the satellite call with the call application on the electronic device 200, the call management module 14 may send the recipient number and the first message to the call management module 14.

For example, the first information may be location information of the electronic device 100. The location information of the electronic device 100 may be obtained when the electronic device 100 establishes a satellite communication connection to a satellite, or may be obtained by the electronic device 100 in real time/periodically/aperiodically after the electronic device 100 establishes a satellite communication connection to a satellite.

S506B: The call management module 14 determines that the communication mode is the satellite communication mode.

The call management module 14 may determine, by determining whether the electronic device 100 enables the satellite communication mode, whether the current communication mode is the satellite communication mode. If the electronic device 100 has enabled the satellite communication mode, the communication mode is determined as the satellite communication mode. If the electronic device 100 has not enabled the satellite communication mode, the communication mode is determined as a cellular network mode.

In some embodiments, if the satellite communication mode is not enabled, the call management module 14 may further determine a strength of a cellular network signal. If the strength of the cellular network signal is less than a preset signal strength threshold, the call management module 14 may send a determining result to the call application 13, and the call application 13 outputs a satellite communication mode enabling prompt, to ask the user whether to enable the satellite communication mode. After receiving an operation of enabling the satellite communication mode by the user, the call management module 14 may determine that the communication mode is the satellite communication mode.

S507B: The call management module 14 sends the recipient number, the first message, and the satellite communication mode to the radio interface layer 17.

The satellite communication mode is used by the call management module 14 to determine to send the recipient number and the first message to a satellite call module in the call service module 15. After the satellite call module receives the recipient number and the first message, the satellite call module sends the recipient number and the first message to a satellite connection module in the call service module 15.

The satellite connection module then sends the recipient number and the first message to a satellite phone module in a call framework. The satellite phone module then sends the recipient number and the first message to a satellite voice call model, and the satellite voice call model sends the recipient number and the first message to the radio interface layer 17.

In another embodiment, when the call management module 14 determines that the communication mode is the cellular network mode, the call management module 14 sends the recipient number, the first message, and the cellular network mode to the radio interface layer 17.

After determining that the current communication mode is the satellite communication mode, the call management module 14 may send the recipient number, the voice message, and the satellite communication mode to the radio interface layer 17.

S508B: The radio interface layer 17 sends the recipient number and the first message to the satellite communication modem 18.

S509B: The satellite communication modem 18 sends the recipient number and the first message to the satellite device.

S510B: The satellite device sends the recipient number and the first message to the base station 500.

Optionally, the radio interface layer 17 may send the recipient number and the first message to the satellite communication modem 18 through a satellite interface layer in the radio interface layer 17.

After receiving the recipient number and the first message, the satellite communication modem 18 may send the recipient number and the first message to the satellite device.

After receiving the recipient number and the first message, the satellite device may send the recipient number and the first message to the base station 500.

The recipient number is used by the base station 500 to determine a receive end of the first message.

S511B: The base station 500 sends the first message to the electronic device 200.

The base station 500 may determine, based on the recipient number, that the receive end of the first message is the electronic device 200, and send the first message to the electronic device 200.

S512B: The electronic device 200 displays a first message receiving prompt message through the messaging application 19.

After obtaining the first message, the electronic device 200 may display the first message receiving prompt message through the messaging application 19.

For example, the first message receiving prompt message may be the prompt information 4612 shown in FIG. 4V.

The electronic device 200 may alternatively receive an input operation of the user for the first message receiving prompt message. For example, the electronic device 200 may display the user interface shown in FIG. 4W, and the user may view content of the first message in the messaging application.

Optionally, when the first message includes the location message of the electronic device 100, the electronic device 200 may receive the input operation of the user for the first message receiving prompt message, and view the location message of the electronic device 100. For example, the electronic device 200 may display the user interface shown in FIG. 4W, and the user interface includes content 4614 of the first message sent by the electronic device 100.

S513B: The call application 13 does not send the first message or converts the first message into a voice message and then sends the voice message.

When the user determines not to send the first message after the satellite call with the electronic device 200 ends, the call application 13 may not send the first message or send the first message after the call ends. For details, refer to the description of the embodiment of FIG. 5A-1 and FIG. 5A-2.

Optionally, when the user determines not to send the first message after the satellite call with the electronic device 200 ends, the call application 13 may alternatively send the first message in a process of performing the satellite call with the call application on the electronic device 200.

FIG. 5C-1 and FIG. 5C-2 are a schematic flowchart of still another method for sending a first message by an electronic device 100 to an electronic device 200 by using a satellite device according to this application.

Modules in an embodiment of FIG. 5C-1 and FIG. 5C-2 may include the call application 13, the messaging application 19, the communication system framework (FWK-CS) 16, the radio interface layer (RIL) 17, and the satellite communication modem (modem) 18 that are shown in FIG. 1C-1 to FIG. 1C-3. The communication system framework 16 further includes an SMS management module 16a.

As shown in FIG. 5C-1 and FIG. 5C-2, in a process of sending the first message to another electronic device (for example, the electronic device 200) in a satellite communication mode, an interaction procedure of internal modules of the electronic device 100 may include the following steps.

S501C: The call application 13 establishes a satellite call connection to a call application on the electronic device 200.

S502C: The messaging application 19 displays a new message interface of the messaging application.

Optionally, the call application on the electronic device 100 may establish the satellite call connection to the call application on the electronic device 200, and display a satellite call interface.

The electronic device 100 may receive a user operation, stop displaying the satellite call interface, receive an input operation of a user for an application icon of the messaging application, start the messaging application, and display the new message interface of the messaging application.

Optionally, after displaying the new message interface of the messaging application, the electronic device 100 may further display the call live capsule 4105 shown in FIG. 4I. The call live capsule 4105 may display a call time, and may further display a call identifier, where the call identifier may be used to prompt the user that the user is currently in a call.

Optionally, after displaying the new message interface of the messaging application, the electronic device 100 may further display the satellite connection widget 4106 shown in FIG. 4I. The satellite connection widget 4106 may include a strength indicator, an operation prompt, longitude and latitude information, and the like. The satellite connection widget 4106 may be used to prompt the user that the electronic device 100 has successfully established the communication connection to the satellite.

For example, the new message interface of the messaging application may be the new information interface shown in FIG. 4J.

S503C: The messaging application 19 receives an operation of the user in the new message interface, and determines a recipient number and the first message.

For example, the operation of the user in the new message interface may be a tap operation on the sending control 4603 shown in FIG. 4K.

S504C: The messaging application 19 prompts the user whether to convert the first message into a voice message and send the voice message.

Refer to the description of S503A. In response to detecting an operation of sending the first message, the messaging application 19 may prompt the user whether to convert the first message into the voice message and send the voice message.

For example, the messaging application 19 may display the prompt information 410 shown in FIG. 4L, to prompt the user whether to convert the first message into the voice message and send the voice message.

When the user determines to convert the first message into the voice message and send the voice message, S505C to S508C are performed.

When the user determines not to convert the first message into the voice message and send the voice message, S509C is performed.

S505C: The messaging application 19 converts the first message into the voice message.

S506C: The messaging application 19 sends the recipient number and the voice message to the SMS management module 16a.

After the user determines to convert the first message into the voice message and send the voice message, the messaging application 19 may convert the first message into the voice message.

After converting the first message into the voice message, the messaging application 19 may send the recipient number and the voice message to the SMS management module 16a.

Optionally, S505C may alternatively be performed by the call application 13. In other words, the messaging application 19 sends the first message to the call application 13, and the call application 13 converts the first message into the voice message, and sends the voice message to the radio interface layer 17.

S507C: The SMS management module 16a determines that the communication mode is the satellite communication mode.

The SMS management module 16a may determine, by determining whether the electronic device 100 enables the satellite communication mode, whether the current communication mode is the satellite communication mode. If the electronic device 100 has enabled the satellite communication mode, the communication mode is determined as the satellite communication mode. If the electronic device 100 has not enabled the satellite communication mode, the communication mode is determined as a cellular network mode.

In some embodiments, if the satellite communication mode is not enabled, the SMS management module 16a may further determine a strength of a cellular network signal. If the strength of the cellular network signal is less than a preset signal strength threshold, the SMS management module 16a may send a determining result to the messaging application 19, and the messaging application 19 outputs a satellite communication mode enabling prompt, to ask the user whether to enable the satellite communication mode. After receiving an operation of enabling the satellite communication mode by the user, the SMS management module 16a may determine that the communication mode is the satellite communication mode.

S508C: Perform method steps similar to those in S507A to S512A.

After the SMS management module 16a determines the satellite communication mode, for how the SMS management module 16a sends, by using the satellite device, the voice message corresponding to the first message to the electronic device 200, refer to the descriptions of S507A to S512A. Details are not described herein again in this application.

S509C: The messaging application 19 does not send the first message or sends the first message after the call ends.

When the user determines not to convert the first message into the voice message and send the voice message to the electronic device 100, the messaging application 19 may not send the first message or send the first message after the call ends. For details, refer to the description of the embodiment of FIG. 5D-1 and FIG. 5D-2.

In another possible implementation, when the user determines not to convert the first message into the voice message and send the voice message, the electronic device 100 may alternatively send the first message to the electronic device 200 in a process of performing the satellite call with the electronic device 200.

Optionally, S505C to S509C are not limited to being performed in the process in which the electronic device 100 performs the satellite call with the electronic device 200, and may alternatively be performed after the satellite call between the electronic device 100 and the electronic device 200 ends.

FIG. 5D-1 and FIG. 5D-2 are a schematic flowchart of yet another method for sending a first message by an electronic device 100 to an electronic device 200 by using a satellite device according to this application.

Modules in an embodiment of FIG. 5D-1 and FIG. 5D-2 may include the call application 13, the messaging application 19, the communication system framework (FWK-CS) 16, the radio interface layer (RIL) 17, and the satellite communication modem (modem) 18 that are shown in FIG. 1C-1 to FIG. 1C-3. The communication system framework 16 further includes an SMS management module 16a.

As shown in FIG. 5D-1 and FIG. 5D-2, in a process of sending the first message to another electronic device (for example, the electronic device 200) in a satellite communication mode, an interaction procedure of internal modules of the electronic device 100 may include the following steps.

S501D: The call application 13 on the electronic device 100 establishes a satellite call connection to a call application on the electronic device 200.

Optionally, the call application on the electronic device 100 may establish the satellite call connection to the call application on the electronic device 200, and display a satellite call interface.

S502D: The messaging application 19 displays a new message interface of the messaging application.

S503D: The messaging application 19 receives an operation of the user in the new message interface, and determines a recipient number and the first message.

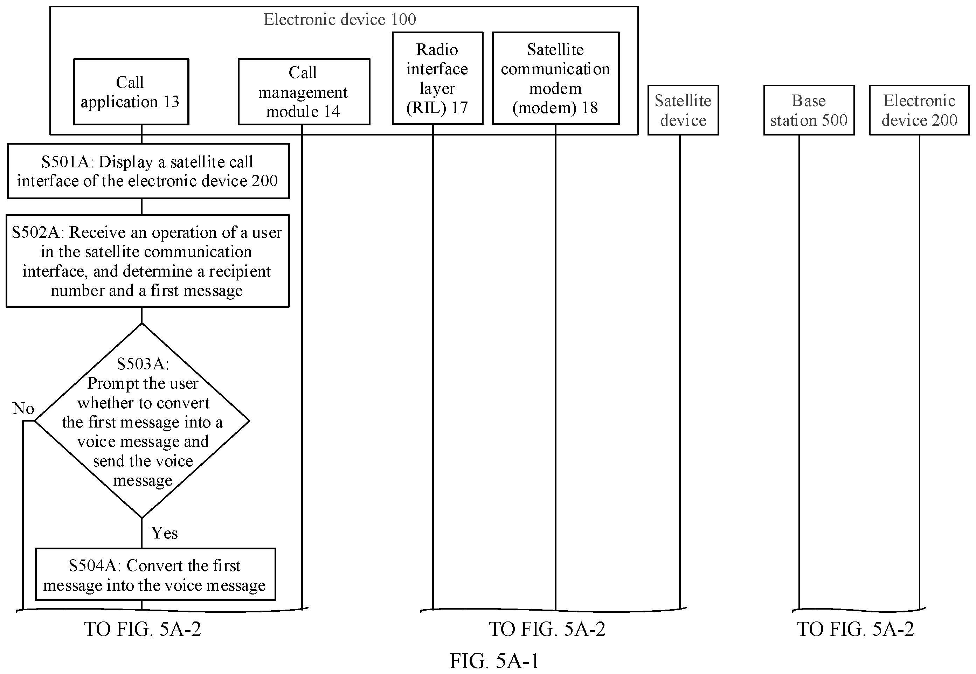

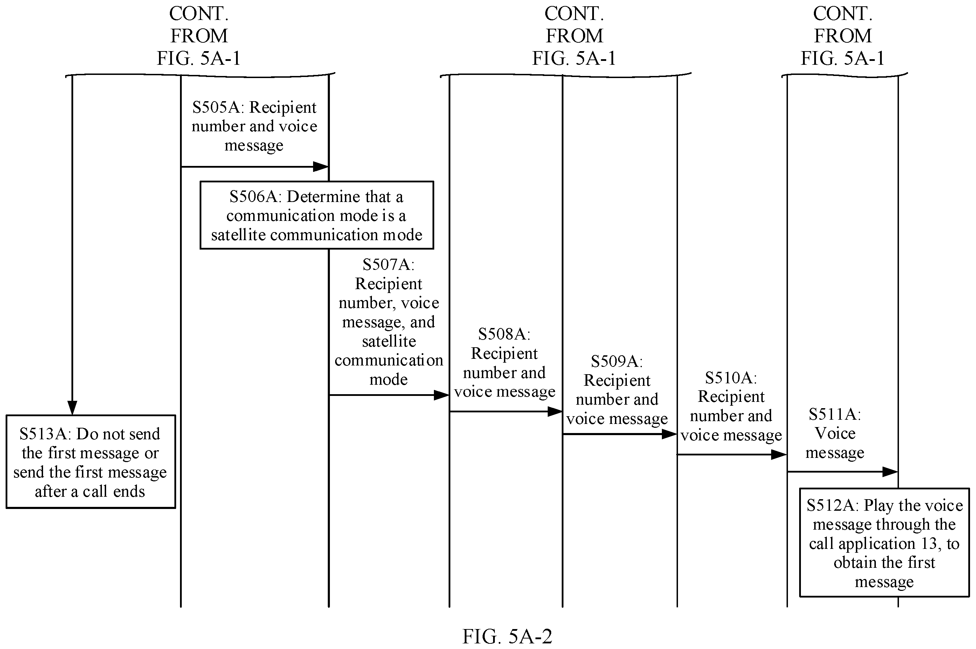

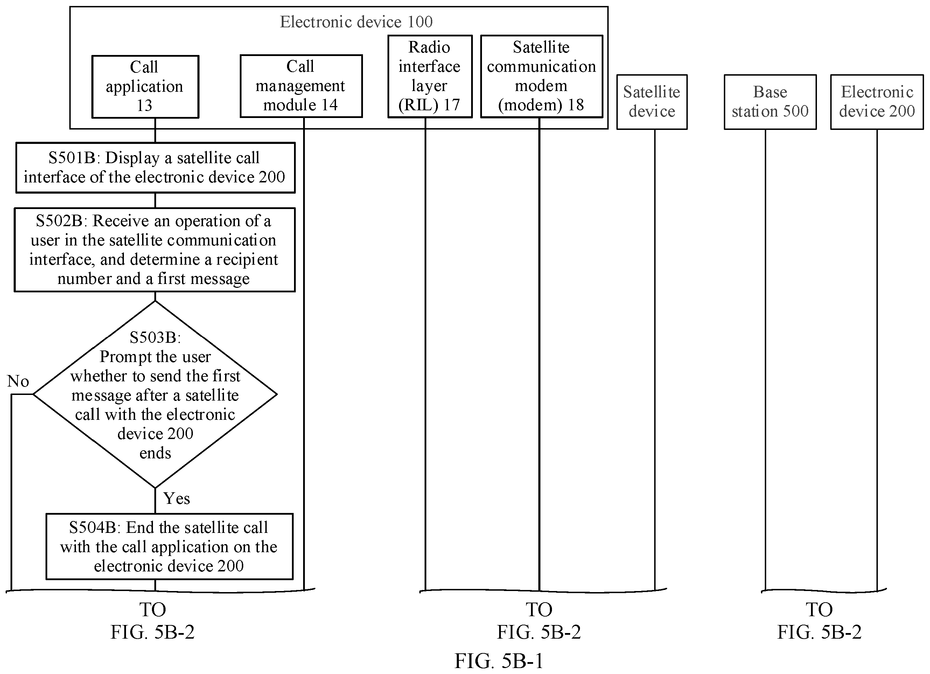

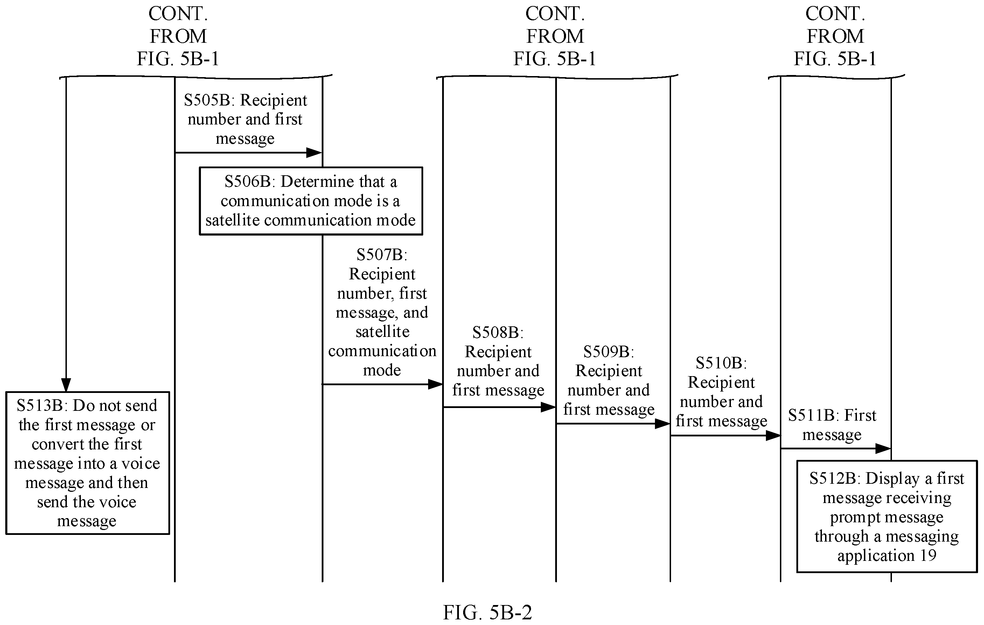

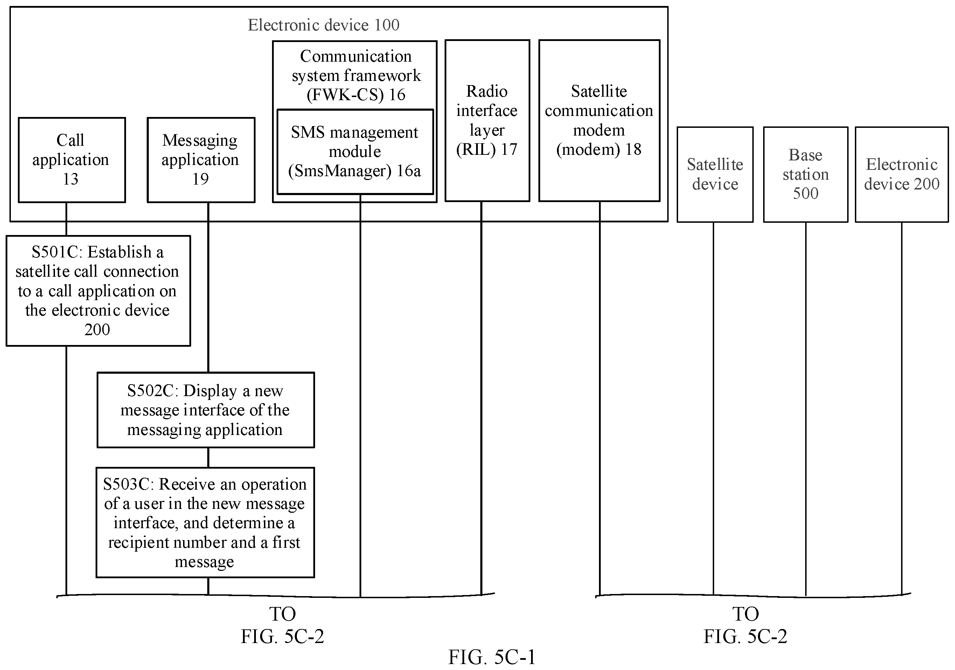

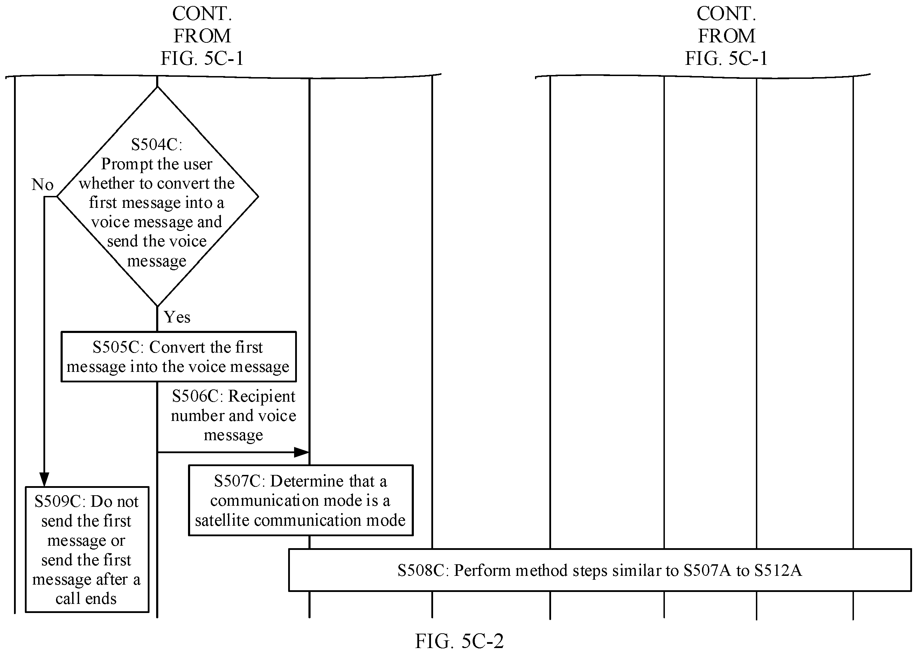

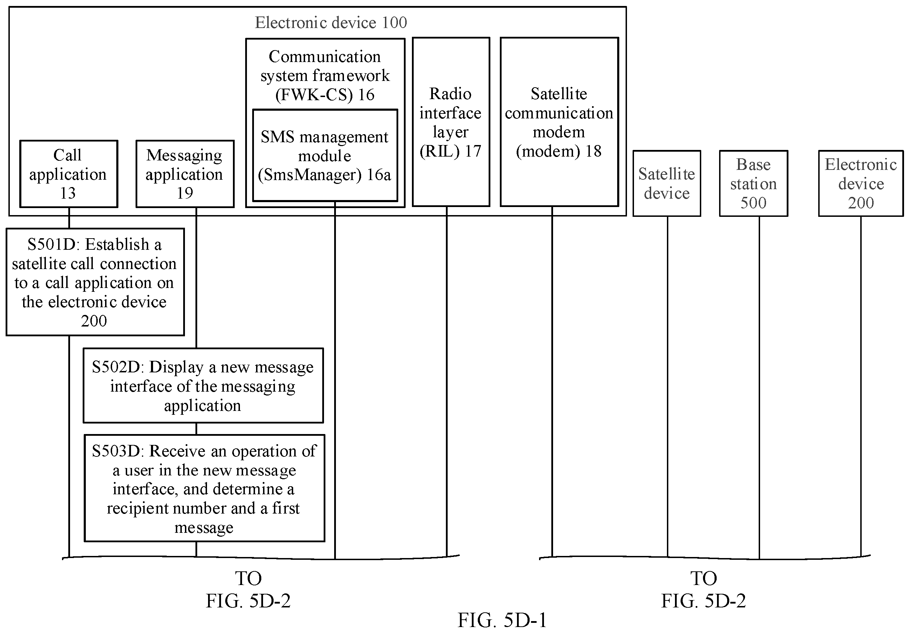

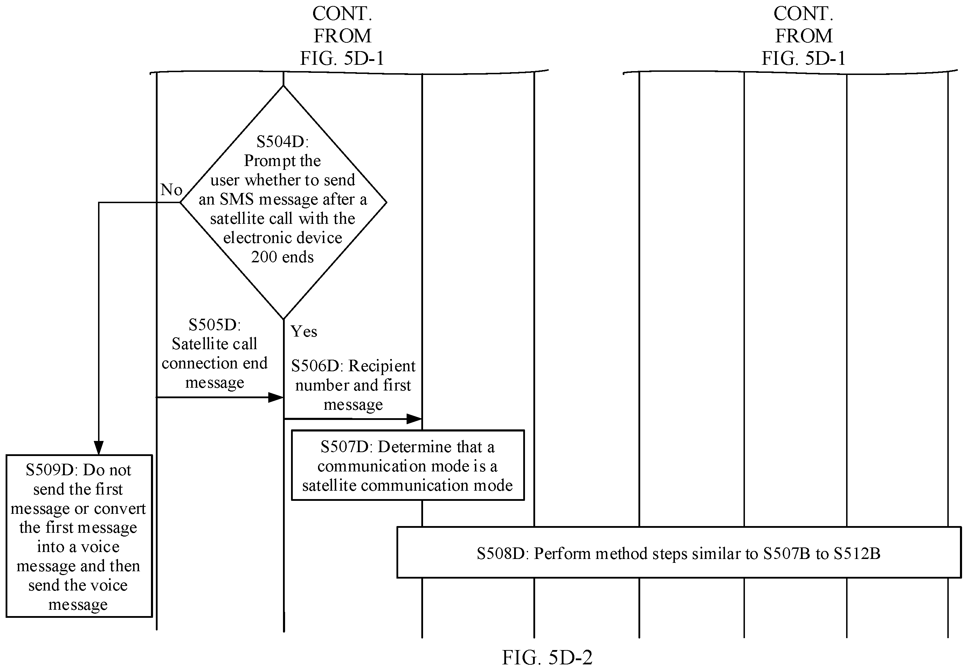

For descriptions of S502D and S503D, refer to content of S501C and S502C in the embodiment of FIG. 5B-1. Details are not described herein again in this application.

S504D: The messaging application 19 prompts the user whether to send an SMS message after the satellite call with the electronic device 200 ends.

In a process in which the electronic device 100 establishes a satellite call connection to the electronic device 200, if the electronic device 100 receives a user operation and sends the first message to the electronic device 200, in response to the user operation of sending the first message, the messaging application 19 may prompt the user whether to send the first message after the satellite call with the electronic device 200 ends. In this way, a case in which no sound can be heard in the call for a period of time when the electronic device 100 sends the first message in a process in which the electronic device 100 performs the satellite call with the electronic device 200 can be avoided.

For example, the messaging application 19 may display the prompt information 440 shown in FIG. 4P, to prompt the user whether to send the first message after the satellite call with the electronic device 200 ends.

When the user determines to send the first message after the satellite call with the electronic device 200 ends, S505D to S508D are performed.

When the user determines not to send the first message after the satellite call with the electronic device 200 ends, S509D is performed.

S505D: The call application 13 sends a satellite call connection end message to the messaging application 19.

When the user determines to send the first message after the satellite call with the electronic device 200 ends, the messaging application 19 may send the first message after the satellite call between the electronic device 100 and the electronic device 200 ends.

For example, the electronic device 100 may receive an input operation of the user on a yes option 4401 in the prompt information 440 shown in FIG. 4P, and determine to send the first message after the satellite call with the electronic device 200 ends.

After the call application 13 and the call application on the electronic device 200 end the satellite call, the call application 13 may send a satellite call connection message to the messaging application 19. The message indicates that the electronic device 100 has ended the satellite call connection to the electronic device 200, and the messaging application 19 may send the first message to the electronic device 200.

S506D: The messaging application 19 sends the recipient number and the first message to the SMS management module 16a.

After receiving the message for ending the satellite call that is sent by the call application 13, the messaging application 19 may send the recipient number and the voice message to the SMS management module 16a.

S507D: The SMS management module 16a determines that the communication mode is the satellite communication mode.

S508D: Perform method steps similar to those in S507B to S512B.

After the SMS management module 16a determines the satellite communication mode, for how the SMS management module 16a sends the first message to the electronic device 200 by using the satellite device, refer to the descriptions of S507B to S512B. Details are not described herein again in this application.

S509D: The electronic device 100 does not send the first message or converts the first message into a voice message and then sends the voice message.

When the user determines not to send the first message after the satellite call with the electronic device 200 ends, the electronic device 100 may not send the first message to the electronic device 200, or convert the first message into the voice message and then send the voice message to the electronic device 200. For details, refer to the description of the embodiment of FIG. 5B-1 and FIG. 5B-2.

In another possible implementation, when the user determines not to send the first message after the satellite call with the electronic device 200 ends, the electronic device 100 may alternatively send the first message to the electronic device 200 in a process of performing the satellite call with the electronic device 200.

In some embodiments, the electronic device 100 may alternatively stop displaying the call interface 3200, and send the location information of the electronic device 100 in the first communication application (for example, the MeeTime application).

A specific implementation is similar to the implementation in which the electronic device 100 stops displaying the call interface 3200 and sends the location information of the electronic device 100 in the messaging application. For details, refer to the description of the embodiments of FIG. 4I to FIG. 4T. Details are not described herein again in this application.

FIG. 6A-1 and FIG. 6A-2 are a schematic flowchart of still yet another method for sending a first message by an electronic device 100 to an electronic device 200 by using a satellite device according to this application.

Modules in an embodiment of FIG. 6A-1 and FIG. 6A-2 may include the radio interface layer (RIL) 17 and the satellite communication modem (modem) 18. The modules in the embodiment of FIG. 6A-1 and FIG. 6A-2 further include the call application 13 and the MeeTime application that is not shown in FIG. 1C-1 to FIG. 1C-3.

As shown in FIG. 6A-1 and FIG. 6A-2, in a process of sending the first message to another electronic device (for example, the electronic device 200) in a satellite communication mode, an interaction procedure of internal modules of the electronic device 100 may include the following steps.

S601A: The call application 13 on the electronic device 100 establishes a satellite call connection to a call application on the electronic device 200.

S602A: The MeeTime application displays a new message interface of the MeeTime application.

S603A: The MeeTime application receives an operation of a user in the new message interface, and determines a recipient number and the first message.

Optionally, the call application on the electronic device 100 may establish the satellite call connection to the call application on the electronic device 200, and display a satellite call interface.

The electronic device 100 may receive a user operation, stop displaying the satellite call interface, receive an input operation of the user for an application icon of the MeeTime application, start a messaging application, and display the new message interface of the MeeTime application.

Optionally, after displaying the new message interface of the MeeTime application, the electronic device 100 may further display the call live capsule 4105 shown in FIG. 4I. The call live capsule 4105 may display a call time, and may further display a call identifier, where the call identifier may be used to prompt the user that the user is currently in a call.

Optionally, after displaying the new message interface of the MeeTime application, the electronic device 100 may further display the satellite connection widget 4106 shown in FIG. 4I. The satellite connection widget 4106 may include a strength indicator, an operation prompt, longitude and latitude information, and the like. The satellite connection widget 4106 may be used to prompt the user that the electronic device 100 has successfully established the communication connection to the satellite.

For example, the new message interface of the MeeTime application may be a new information interface of the messaging application shown in FIG. 4J.

S604A: The MeeTime application prompts the user whether to convert the first message into a voice message and send the voice message.

Refer to the description of S503A. In response to detecting an operation of sending the first message, the MeeTime application may prompt the user whether to convert the first message into the voice message and send the voice message.

For example, the MeeTime application may display prompt information 410 similar to that shown in FIG. 4L, to prompt the user whether to convert the first message into the voice message and send the voice message.

When the user determines to convert the first message into the voice message and send the voice message, S605A to S608A are performed.

When the user determines not to convert the first message into the voice message and send the voice message, S609A is performed.

S605A: The MeeTime application converts the first message into the voice message.

S606A: The MeeTime application determines that the communication mode is the satellite communication mode.

After the user determines to convert the first message into the voice message and send the voice message, the messaging application 19 may convert the first message into the voice message.

In some embodiments, if the satellite communication mode is not enabled, the MeeTime application may further determine a strength of a cellular network signal. If the strength of the cellular network signal is less than a preset signal strength threshold, the MeeTime application a may output a satellite communication mode enabling prompt, to ask the user whether to enable the satellite communication mode. After receiving an operation of enabling the satellite communication mode by the user, the MeeTime application may determine that the communication mode is the satellite communication mode.

After the first message is converted into the voice message, the MeeTime application may determine, by determining whether the electronic device 100 enables the satellite communication mode, whether the current communication mode is the satellite communication mode. If the electronic device 100 has enabled the satellite communication mode, the communication mode is determined as the satellite communication mode. If the electronic device 100 has not enabled the satellite communication mode, the communication mode is determined as a cellular network mode.

Optionally, S605A may alternatively be performed by the call application 13. In other words, the MeeTime application sends the first message to the call application 13, and the call application 13 converts the first message into the voice message, and sends the voice message to the radio interface layer 17.

S607A: The MeeTime application sends the recipient number, the voice message, and the satellite communication mode to the radio interface layer 17.

After determining the satellite communication mode, the MeeTime application may send the recipient number, the voice message, and the satellite communication mode to the radio interface layer 17.

S608A: Perform method steps similar to those in S508A to S512A.

For how the radio interface layer 17 sends the voice message to the electronic device 200 after obtaining the recipient number, the voice message, and the satellite communication mode, refer to descriptions of S508A to S512A. Details are not described herein again in this application.

S609A: The MeeTime application does not send the first message or sends the first message after the call ends.

When the user determines not to convert the first message into the voice message and send the voice message to the electronic device 100, the MeeTime application may not send the first message or send the first message after the call ends. For details, refer to the description of the embodiment of FIG. 6B-1 to FIG. 6B-3.

In another possible implementation, when the user determines not to convert the first message into the voice message and send the voice message, the electronic device 100 may alternatively send the first message to the electronic device 200 in a process of performing the satellite call with the electronic device 200.

Optionally, S605A to S609A are not limited to being performed in a process in which the electronic device 100 performs the satellite call with the electronic device 200, and may alternatively be performed after the electronic device 100 ends the satellite call with the electronic device 200.

FIG. 6B-1 to FIG. 6B-3 are a schematic flowchart of a further method for sending a first message by an electronic device 100 to an electronic device 200 by using a satellite device according to this application.

Modules in an embodiment of FIG. 6B-1 to FIG. 6B-3 may include the call application 13, the radio interface layer (RIL) 17, and the satellite communication modem (modem) 18. The modules in the embodiment of FIG. 6A-1 and FIG. 6A-2 further include a MeeTime application that is not shown in FIG. 1C-1 to FIG. 1C-3.

As shown in FIG. 6B-1 to FIG. 6B-3, in a process of sending the first message to another electronic device (for example, the electronic device 200) in a satellite communication mode, an interaction procedure of internal modules of the electronic device 100 may include the following steps.

S601B: The call application 13 on the electronic device 100 establishes a satellite call connection to a call application on the electronic device 200.

Optionally, the call application on the electronic device 100 may establish the satellite call connection to the call application on the electronic device 200, and display a satellite call interface.

S602B: The MeeTime application displays a new message interface of the MeeTime application.

S603B: The MeeTime application receives an operation of a user in the new message interface, and determines a recipient number and the first message.

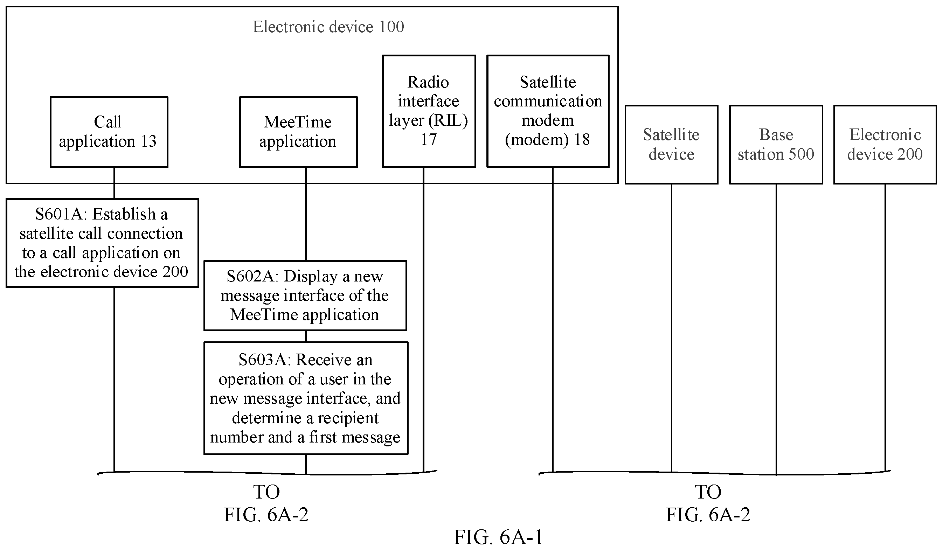

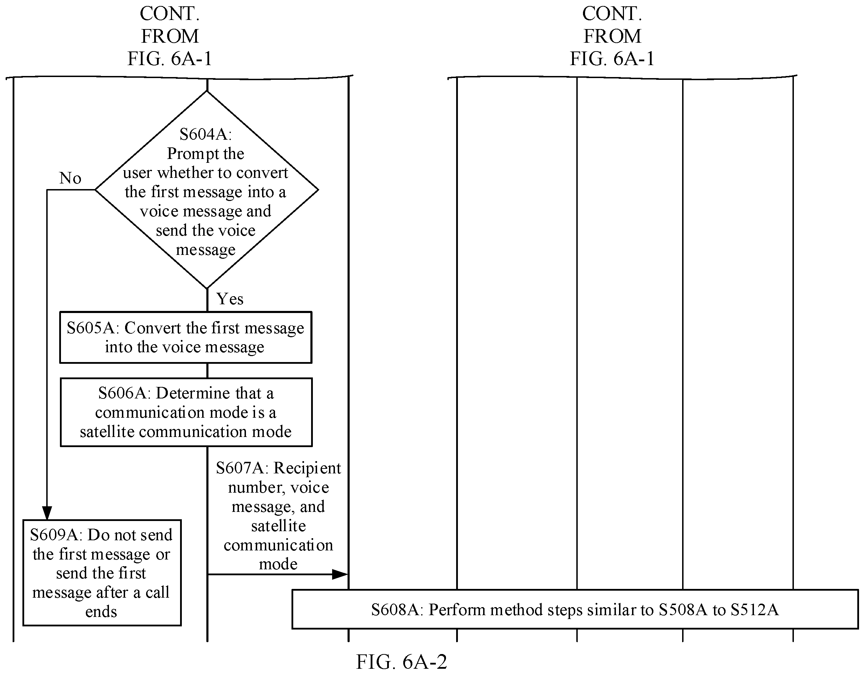

For descriptions of S602B and S603B, refer to content of S601A and S602A in the embodiment of FIG. 6A-1. Details are not described herein again in this application.

S604B: The MeeTime application prompts the user whether to send the first message after the satellite call ends.

In a process in which the electronic device 100 establishes a satellite call connection to the electronic device 200, if the electronic device 100 receives a user operation and sends the first message to the electronic device 200, in response to the user operation of sending the first message, the MeeTime application may prompt the user whether to send the first message after the satellite call with the electronic device 200 ends. In this way, a case in which no sound can be heard in the call for a period of time when the electronic device 100 sends the first message in a process in which the electronic device 100 performs the satellite call with the electronic device 200 can be avoided.

For example, the MeeTime application may display prompt information 440 similar to that shown in FIG. 4P, to prompt the user whether to send the first message after the satellite call with the electronic device 200 ends.

When the user determines to send the first message after the satellite call with the electronic device 200 ends, S605B to S616B are performed.

When the user determines not to send the first message after the satellite call with the electronic device 200 ends, S617B is performed.

S605B: The call application 13 sends a satellite call connection end message to the MeeTime application.

When the user determines to send the first message after the satellite call with the electronic device 200 ends, the MeeTime application may send the first message after the satellite call between the electronic device 100 and the electronic device 200 ends.

For example, the electronic device 100 may receive an input operation of the user on a yes option 4401 in the prompt information 440 similar to that shown in FIG. 4P, and determine to send the first message after the satellite call with the electronic device 200 ends.

After the call application 13 and the call application on the electronic device 200 end the satellite call, the call application 13 may send a satellite call connection message to the MeeTime application. The message indicates that the electronic device 100 has ended the satellite call connection to the electronic device 200, and the MeeTime application may send the first message to the electronic device 200.

S606B: The MeeTime application determines that the communication mode is the satellite communication mode.

S607B: The MeeTime application sends the recipient number, the first message, and the satellite communication mode to the radio interface layer 17.

After determining the satellite communication mode, the MeeTime application may send the recipient number, the first message, and the satellite communication mode to the radio interface layer 17.

S608B: The radio interface layer 17 sends the recipient number, the first message, and the satellite communication mode to the satellite communication modem 18.

S609B: The satellite communication modem 18 sends the recipient number and the first message to the satellite device.

S610B: The satellite device sends the recipient number and the first message to an application server 600.

S611B: The application server 600 determines, based on the recipient number, whether the recipient is a registered user of a first communication application.

After receiving the recipient number and the first message that are sent by the satellite device, the application server 600 may determine, based on the recipient number, whether the recipient is the registered user of the first communication application.

When determining that the recipient is the registered user of the first communication application, the application server 600 may send the first message to a MeeTime application on the electronic device 200, and S612B and S613B are performed.

When determining that the recipient is not the registered user of the first communication application, the electronic device 200 cannot receive the first message sent by the application server 600. The application server 600 may send the first message to the electronic device 200 by using the base station 500, and S614B to S616B are performed.

S612B: The application server 600 sends the first message to the electronic device 200.

S613B: The electronic device 200 displays a first message receiving prompt message through the MeeTime application.

When determining that the recipient is the registered user of the first communication application, the application server 600 may send the first message to the MeeTime application on the electronic device 200. The electronic device 200 may display the first message receiving prompt message through the MeeTime application.

For example, the electronic device 200 may display an SMS message receiving prompt message through the MeeTime application, where the electronic device 200 may display prompt information 710 shown in FIG. 6C. The prompt information 710 may be used to prompt the user that the first message sent by the electronic device 100 is received through the MeeTime application.

The electronic device 200 may alternatively receive an input operation of the user for the prompt information 710. For example, the electronic device 200 may display a user interface similar to that shown in FIG. 4W, and the user may view content of the first message in the MeeTime application.

Optionally, when the first message includes the location message of the electronic device 100, the electronic device 200 may receive an input operation of the user for the first message receiving prompt message, and view a location message of the electronic device 100 in the MeeTime application.

S614B: The application server 600 sends the recipient number and the first message to the base station 500.

S615B: The base station 500 sends the first message to the electronic device 200.

S616B: The electronic device 200 displays the first message receiving prompt message through the messaging application.

When determining that the recipient is not the registered user of the first communication application, the application server 600 may send the recipient number and the first message to the base station 500.

The recipient number is used by the base station 500 to determine a receiving device of the first message. The base station 500 may send the first message to the electronic device 200 based on the recipient number.

After receiving the first message sent by the base station 500, the electronic device 200 may display the first message receiving prompt message through the first message.

For example, the electronic device 100 may display the first message receiving prompt message shown in FIG. 4V.

The electronic device 200 may alternatively receive an input operation of the user for the first message receiving prompt message. For example, the electronic device 200 may display the user interface shown in FIG. 4W, and the user may view content of the first message in the messaging application.

S617B: The electronic device 100 does not send the first message or converts the first message into a voice message and then sends the voice message.

When the user determines not to send the first message after the satellite call with the electronic device 200 ends, the electronic device 100 may not send the first message to the electronic device 200, or convert the first message into the voice message and then send the voice message to the electronic device 200. For details, refer to the description of the embodiment of FIG. 6A-1 and FIG. 6A-2.

In another possible implementation, when the user determines not to send the first message after the satellite call with the electronic device 200 ends, the electronic device 100 may alternatively send the first message to the electronic device 200 in a process of performing the satellite call with the electronic device 200.

FIG. 7 is a schematic flowchart of a satellite communication method according to this application.

S701: A first electronic device establishes a satellite call connection to a second electronic device.

For example, the first electronic device may be the electronic device 100, and the second electronic device may be the electronic device 200.

For a specific implementation in which the first electronic device establishes the satellite call connection to the second electronic device, refer to the descriptions in the embodiments of FIG. 2A to FIG. 2I.

S702: The first electronic device receives a first operation, where the first operation is used to send a first message to the second electronic device.

S703: The first electronic device detects, in response to the first operation, whether the satellite call connection to the second electronic device ends.

S704: The first electronic device sends a first message to the second electronic device through a satellite communication connection after detecting that the first electronic device ends the satellite call connection to the second electronic device.

S705: The second electronic device receives the first message through the satellite communication connection.

For example, for a specific explanation of the embodiment of FIG. 7, refer to the description of the embodiment of FIG. 5B-1 and FIG. 5B-2, FIG. 5D-1 and FIG. 5D-2, or FIG. 6B-1 to FIG. 6B-3.

According to the method, in a process of establishing the satellite call connection to the second electronic device, the first electronic device may send the first message to the second electronic device by using a satellite device after the satellite call connection, so as to resolve a problem that no sound can be heard when the first message is sent in the satellite call connection process, and effectively improve user experience.

In a possible implementation, that the first electronic device detects, in response to the first operation, whether the satellite call connection to the second electronic device ends specifically includes: The first electronic device displays first prompt information in response to the first operation, where the first prompt information indicates whether to send the first message to the second electronic device through the satellite call connection after the call connection ends; and the first electronic device receives and responds to an operation of the user on a first option in the first prompt information, and the first electronic device detects whether the satellite call connection to the second electronic device ends.

In this way, the first electronic device may prompt the user whether to send the first message after the call ends, to avoid affecting satellite call quality. After the user selects to send the first message after the call ends, the first electronic device may detect whether the satellite call connection to the second electronic device ends, and after detecting that the satellite call connection to the second electronic device ends, send the first message to the second electronic device.

For example, the first prompt information may be the prompt information 440 shown in FIG. 4F or FIG. 4P.

For example, the first option may be the yes option in the prompt information 440 shown in FIG. 4F or FIG. 4L.

For example, the first information may be location information of the first electronic device.

In a possible implementation, after the first electronic device receives the first operation, the method further includes: The first electronic device displays second prompt information, where the second prompt information includes a second option, and the second prompt information indicates whether to convert the first message into a voice message and then send the voice message to the second electronic device; and the first electronic device receives and responds to an operation of the user on the second option in the second prompt information, and sends the second message to the second electronic device, where the second message is the voice message corresponding to the first message.

Optionally, the second prompt information and the first prompt information may be the same or may be different.

Optionally, the second prompt information may be displayed before the first prompt information, or may be displayed after the first prompt information.

In this way, in a process of establishing the satellite call connection to the second electronic device, the first electronic device may also prompt the user whether to convert the first message into the voice message and then send the voice message to the second electronic device. When the user determines to convert the first message into the voice message and then send the voice message to the second electronic device, in the process of establishing the satellite call connection to the second electronic device, the first electronic device may send the voice message corresponding to the first message, that is, the second message, to the second electronic device. After the satellite call ends, the first electronic device may further send the first message to the second electronic device.

Optionally, the first electronic device may alternatively prompt that the second message is being sent to the second electronic device.

For example, the second prompt information may be the prompt information 410 shown in FIG. 4L or FIG. 4B.

For example, the second option may be the yes option in the prompt information 410 shown in FIG. 4L or FIG. 4B.

For example, the second information may be a voice message corresponding to the location information of the first electronic device.

In a possible implementation, the method further includes: The first electronic device receives and responds to an operation of the user on the third option in the second prompt information, and skips sending the second message.

In this way, the user may also choose not to send the second message to the second electronic device, and send the first message to the second electronic device only after the call ends.

For example, the third option may be the no option in the prompt information 410 shown in FIG. 4L or FIG. 4E.

In a possible implementation, after the call connection between the first electronic device and the second electronic device ends, the method further includes: The first electronic device displays third prompt information, where the third prompt information indicates that the first electronic device is sending the first message to the second electronic device.

In this way, after the satellite call ends, when the first electronic device sends the first message to the second electronic device, the first electronic device may prompt the user that the first electronic device is sending the first message to the second electronic device.

For example, the third prompt information may be the prompt information 460 shown in FIG. 4H or the sending status prompt 4608 shown in FIG. 4R.

In a possible implementation, the first information includes the location information of the first electronic device. Before the first electronic device receives the first operation, the method further includes: The first electronic device displays a satellite call interface with the second electronic device, where the satellite call interface includes related information of a first contact, call duration, and a location sending option; and that the first electronic device receives the first operation specifically includes: The first electronic device receives the first operation on the location sending option in the satellite call interface, and obtains the location information of the first electronic device.

In this way, the user can quickly operate to send the location information of the first electronic device to the second electronic device in the satellite call interface, so that the user can obtain rescue in time.

For example, the satellite call interface may be the call interface 3200 shown in FIG. 4A. The location sending option may be the location sending control 3201 shown in FIG. 4A.

In a possible implementation, the first electronic device obtains the location information of the electronic device by using a GPS module.

In a possible implementation, the satellite call interface includes a first capsule, and the first capsule indicates a connection status between the first electronic device and a satellite; and/or the satellite call interface includes a first widget, the first widget includes a first indicator and fourth prompt information, the fourth prompt information is used to prompt the user to maintain or adjust a current posture of holding the first electronic device, and the first indicator indicates the connection status between the first electronic device and the satellite.

For example, the first capsule may be a satellite live capsule 302. The first widget may be a satellite connection widget 4106.

In a possible implementation, the first electronic device sends the first message or the second message to the second electronic device through a call application; and the second electronic device receives the first message through a messaging application, or receives the second message through the call application.

For example, refer to the descriptions of the embodiments of FIG. 5A-1 and FIG. 5A-2, and FIG. 5B-1 and FIG. 5B-2.

In some embodiments, the voice message in the embodiment of FIG. 5B-1 and FIG. 5B-2 may also be referred to as a second message.

In a possible implementation, before the first electronic device receives the first operation, the method further includes: The first electronic device displays a new message sending interface with the second electronic device, where the new message sending interface includes related information of a first contact and the first message; and that the first electronic device receives the first operation specifically includes: The first electronic device receives the first operation in the new message sending interface.

In this way, in a satellite call process between the first electronic device and the second electronic device, the first electronic device may receive a user operation to exit the satellite call interface, edit the first information in the messaging application or a first communication application, and send the first information to the second electronic device.

For example, the new message sending interface may be the new information interface shown in FIG. 4J.

In a possible implementation, the new message sending interface includes a second capsule and a first widget, the second capsule includes call duration, the first widget includes a first indicator and fourth prompt information, the first indicator indicates a connection status between the first electronic device and a satellite device, and the fourth prompt information is used to prompt the user to maintain or adjust a current posture of holding the first electronic device.

For example, the second capsule may be the call live capsule 4105 shown in FIG. 4J.

The first widget may be the satellite connection widget 4106 shown in FIG. 4J.

In a possible implementation, the first electronic device sends the first message or the second message to the second electronic device through a messaging application, and the second electronic device receives the first message through the messaging application, or receives the second message through a call application; or the first electronic device sends the first message or the second message to the second electronic device through a first communication application, and the second electronic device receives the first message through the first communication application, or receives the first message through a messaging application, or receives the second message through a call application.

For example, the first communication application may be a MeeTime application.

For example, refer to the descriptions of the embodiments of FIG. 5C-1 and FIG. 5C-2, FIG. 5D-1 and FIG. 5D-2, FIG. 6A-1 and FIG. 6A-2, and FIG. 6B-1 to FIG. 6B-3.

In a possible implementation, when the second electronic device is logged in with an account of the first communication application, the second electronic device receives the first message through the first communication application.

Optionally, when the second electronic device is logged in with the account of the first communication application or when the second electronic device does not log in to the account of the first communication application, the second electronic device may also receive the first message through the messaging application.

FIG. 8 is a schematic flowchart of another satellite communication method according to this application.

S801: A first electronic device establishes a satellite call connection to a second electronic device.

For example, the first electronic device may be the electronic device 100, and the second electronic device may be the electronic device 200.

For a specific implementation in which the first electronic device establishes the satellite call connection to the second electronic device, refer to the descriptions in the embodiments of FIG. 2A to FIG. 2I.

S802: The first electronic device receives a first operation, where the first operation is used to send a first message to the second electronic device.

S803: The first electronic device sends a second message to the second electronic device through the satellite communication connection in response to the first operation, where the second message is a voice message corresponding to the first message.

S804: The second electronic device receives the second message through the satellite communication connection.

For example, for a specific explanation of the embodiment of FIG. 8, refer to the description of the embodiment of FIG. 5A-1 and FIG. 5A-2, FIG. 5C-1 and FIG. 5C-2, or FIG. 6A-1 and FIG. 6A-2.

According to the method, in a process of establishing the satellite call connection to the second electronic device, the first electronic device may convert the first message into the voice message, that is, the second message, and send the second message to the second electronic device, so as to resolve a problem that no sound can be heard when the first message is sent in the satellite call connection process, and effectively improve user experience.

In a possible implementation, that the first electronic device sends the second message to the second electronic device through the satellite communication connection in response to the first operation specifically includes: The first electronic device displays second prompt information in response to the first operation, where the second prompt information indicates whether to convert the first message into the voice message and then send the voice message to the second electronic device; and the first electronic device receives an operation of a user on a second option in the second prompt information, and sends the second message to the second electronic device through the satellite communication connection.

In this way, in a process of establishing the satellite call connection to the second electronic device, the first electronic device may also prompt the user whether to convert the first message into the voice message and then send the voice message to the second electronic device. When the user determines to convert the first message into the voice message and then send the voice message to the second electronic device, in the process of establishing the satellite call connection to the second electronic device, the first electronic device may send the voice message corresponding to the first message, that is, the second message, to the second electronic device.

For example, the second prompt information may be the prompt information 410 shown in FIG. 4L or FIG. 4B.

For example, the second option may be the yes option in the prompt information 410 shown in FIG. 4L or FIG. 4B.

For example, the second information may be a voice message corresponding to the location information of the first electronic device.

In a possible implementation, after that the first electronic device receives the first operation, the method further includes: The first electronic device displays first prompt information, where the first prompt information indicates whether to send the first message to the second electronic device through the satellite call connection after the call connection ends; the first electronic device receives and responds to an operation of the user on a first option in the first prompt information, and the first electronic device detects whether the satellite call connection to the second electronic device ends; after detecting that the satellite call connection between the first electronic device and the second electronic device ends, the first electronic device sends the first message to the second electronic device through the satellite communication connection; and the second electronic device receives the first message through the satellite communication connection.

Optionally, the first prompt information and the second prompt information may be the same or different.

Optionally, the first prompt information may be displayed before the second prompt information, or may be displayed after the first prompt information.

In this way, the first electronic device may prompt the user whether to send the first message after the call ends, to avoid affecting satellite call quality. After the user selects to send the first message after the call ends, the first electronic device may detect whether the satellite call connection to the second electronic device ends, and after detecting that the satellite call connection to the second electronic device ends, send the first message to the second electronic device.

Optionally, the user may also choose not to send the first message to the second electronic device after the satellite call ends.

For example, the first prompt information may be the prompt information 440 shown in FIG. 4F or FIG. 4P.

For example, the first option may be the yes option in the prompt information 440 shown in FIG. 4F or FIG. 4L.

For example, the first information may be location information of the first electronic device.

In a possible implementation, the first information includes the location information of the first electronic device. Before the first electronic device receives the first operation, the method further includes: The first electronic device displays a satellite call interface with the second electronic device, where the satellite call interface includes related information of a first contact, call duration, and a location sending option; and that the first electronic device receives the first operation specifically includes: The first electronic device receives the first operation on the location sending option in the satellite call interface, and obtains the location information of the first electronic device.

In this way, the user can quickly operate to send the location information of the first electronic device to the second electronic device in the satellite call interface, so that the user can obtain rescue in time.

For example, the satellite call interface may be the call interface 3200 shown in FIG. 4A. The location sending option may be the location sending control 3201 shown in FIG. 4A.

In a possible implementation, the first electronic device obtains the location information of the electronic device by using a GPS module.

In a possible implementation, the satellite call interface includes a first capsule, and the first capsule indicates a connection status between the first electronic device and a satellite; and/or the satellite call interface includes a first widget, the first widget includes a first indicator and fourth prompt information, the fourth prompt information is used to prompt the user to maintain or adjust a current posture of holding the first electronic device, and the first indicator indicates the connection status between the first electronic device and the satellite.

For example, the first capsule may be a satellite live capsule 302. The first widget may be a satellite connection widget 4106.

In a possible implementation, the first electronic device sends the first message or the second message to the second electronic device through a call application; and the second electronic device receives the first message through a messaging application, or receives the second message through the call application.

For example, refer to the descriptions of the embodiments of FIG. 5A-1 and FIG. 5A-2, and FIG. 5B-1 and FIG. 5B-2.

In some embodiments, the voice message in the embodiment of FIG. 5B-1 and FIG. 5B-2 may also be referred to as a second message.

In a possible implementation, before the first electronic device receives the first operation, the method further includes: The first electronic device displays a new message sending interface with the second electronic device, where the new message sending interface includes related information of a first contact and the first message; and that the first electronic device receives the first operation specifically includes: The first electronic device receives the first operation in the new message sending interface.

In this way, in a satellite call process between the first electronic device and the second electronic device, the first electronic device may receive a user operation to exit the satellite call interface, edit the first information in the messaging application or a first communication application, and send the first information to the second electronic device.

For example, the new message sending interface may be the new information interface shown in FIG. 4J.

In a possible implementation, the new message sending interface includes a second capsule and a first widget, the second capsule includes call duration, the first widget includes a first indicator and fourth prompt information, the first indicator indicates a connection status between the first electronic device and a satellite device, and the fourth prompt information is used to prompt the user to maintain or adjust a current posture of holding the first electronic device.

For example, the second capsule may be the call live capsule 4105 shown in FIG. 4J.

The first widget may be the satellite connection widget 4106 shown in FIG. 4J.

In a possible implementation, the first electronic device sends the first message or the second message to the second electronic device through a messaging application, and the second electronic device receives the first message through the messaging application, or receives the second message through a call application; or the first electronic device sends the first message or the second message to the second electronic device through a first communication application, and the second electronic device receives the first message through the first communication application, or receives the first message through a messaging application, or receives the second message through a call application.

For example, the first communication application may be a MeeTime application.

For example, refer to the descriptions of the embodiments of FIG. 5C-1 and FIG. 5C- 2, FIG. 5D-1 and FIG. 5D-2, FIG. 6A-1 and FIG. 6A-2, and FIG. 6B-1 to FIG. 6B-3.

In a possible implementation, when the second electronic device is logged in with an account of the first communication application, the second electronic device receives the first message through the first communication application.

Optionally, when the second electronic device is logged in with the account of the first communication application or when the second electronic device does not log in to the account of the first communication application, the second electronic device may also receive the first message through the messaging application.

The implementations of this application may be randomly combined to achieve different technical effects.

The foregoing embodiments may be all or partially implemented using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or some of the procedure or functions according to this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, for example, a ROM, a random access memory RAM, a magnetic disk, or an optical disc.

In summary, what is described above is merely embodiments of the technical solutions of this application, but is not intended to limit the protection scope of this application. Any modification, equivalent replacement, improvement, or the like made according to the disclosure of this application shall fall within the protection scope of this application.

## Claims

1. A satellite communication method, wherein the method is applied to a satellite communication system, the satellite communication system comprises a first electronic device and a second electronic device, a satellite communication connection is established between the first electronic device and the second electronic device, and the method comprises:
establishing, by the first electronic device, a satellite call connection to the second electronic device;
receiving, by the first electronic device, a first operation, wherein the first operation is used to send a first message to the second electronic device;
detecting, by the first electronic device in response to the first operation, whether the satellite call connection to the second electronic device ends;
sending, by the first electronic device, the first message to the second electronic device through the satellite communication connection after detecting that the satellite call connection between the first electronic device and the second electronic device ends; and
receiving, by the second electronic device, the first message through the satellite communication connection.

2. The method according to claim 1, wherein detecting, by the first electronic device in response to the first operation, whether the satellite call connection to the second electronic device ends specifically comprises:
displaying, by the first electronic device, first prompt information in response to the first operation, wherein the first prompt information indicates whether to send the first message to the second electronic device through the satellite call connection after the call connection ends; and
receiving and responding to, by the first electronic device, an operation of a user on a first option in the first prompt information, and detecting, by the first electronic device, whether the satellite call connection to the second electronic device ends.

3. The method according to claim 1 or 2, wherein after receiving, by the first electronic device, the first operation, the method further comprises:
displaying, by the first electronic device, second prompt information, wherein the second prompt information comprises a second option, and the second prompt information indicates whether to convert the first message into a voice message and then send the voice message to the second electronic device; and
receiving and responding to, by the first electronic device, an operation of the user on the second option in the second prompt information, and sending the second message to the second electronic device, wherein the second message is the voice message corresponding to the first message.

4. The method according to claim 3, wherein the method further comprises:
receiving and responding to, by the first electronic device, an operation of the user on a third option in the second prompt information, and skipping sending the second message.

5. The method according to any one of claims 1 to 4, wherein after the call connection between the first electronic device and the second electronic device ends, the method further comprises:
displaying, by the first electronic device, third prompt information, wherein the third prompt information indicates that the first electronic device is sending the first message to the second electronic device.

6. A satellite communication method, wherein the method is applied to a satellite communication system, the satellite communication system comprises a first electronic device and a second electronic device, a satellite communication connection is established between the first electronic device and the second electronic device, and the method comprises:
establishing, by the first electronic device, a satellite call connection to the second electronic device;
receiving, by the first electronic device, a first operation, wherein the first operation is used to send a first message to the second electronic device;
sending, by the first electronic device, a second message to the second electronic device through the satellite communication connection in response to the first operation, wherein the second message is a voice message corresponding to the first message; and
receiving, by the second electronic device, the second message through the satellite communication connection.

7. The method according to claim 6, wherein sending, by the first electronic device, the second message to the second electronic device through the satellite communication connection in response to the first operation specifically comprises:
displaying, by the first electronic device, second prompt information in response to the first operation, wherein the second prompt information indicates whether to convert the first message into the voice message and then send the voice message to the second electronic device; and
receiving, by the first electronic device, an operation of a user on a second option in the second prompt information, and sending the second message to the second electronic device through the satellite communication connection.

8. The method according to claim 6 or 7, wherein after receiving, by the first electronic device, the first operation, the method further comprises:
displaying, by the first electronic device, first prompt information, wherein the first prompt information indicates whether to send the first message to the second electronic device through the satellite call connection after the call connection ends;
receiving and responding to, by the first electronic device, an operation of the user on a first option in the first prompt information, and detecting, by the first electronic device, whether the satellite call connection to the second electronic device ends;
sending, by the first electronic device, the first message to the second electronic device through the satellite communication connection after detecting that the satellite call connection between the first electronic device and the second electronic device ends; and
receiving, by the second electronic device, the first message through the satellite communication connection.

9. The method according to any one of claims 1 to 8, wherein the first information comprises location information of the first electronic device; and before receiving, by the first electronic device, the first operation, the method further comprises:
displaying, by the first electronic device, a satellite call interface with the second electronic device, wherein the satellite call interface comprises related information of a first contact, call duration, and a location sending option; and
receiving, by the first electronic device, the first operation specifically comprises:
receiving, by the first electronic device, the first operation on the location sending option in the satellite call interface, and obtaining the location information of the first electronic device.

10. The method according to claim 9, wherein the first electronic device obtains the location information of the electronic device by using a GPS module.

11. The method according to claim 9 or 10, wherein the satellite call interface comprises a first capsule, and the first capsule indicates a connection status between the first electronic device and a satellite; and/or
the satellite call interface comprises a first widget, the first widget comprises a first indicator and fourth prompt information, the fourth prompt information is used to prompt the user to maintain or adjust a current posture of holding the first electronic device, and the first indicator indicates the connection status between the first electronic device and the satellite.

12. The method according to any one of claims 9 to 11, wherein the first electronic device sends the first message or the second message to the second electronic device through a call application; and
the second electronic device receives the first message through a messaging application, or receives the second message through the call application.

13. The method according to any one of claims 1 to 8, wherein before receiving, by the first electronic device, the first operation, the method further comprises:
displaying, by the first electronic device, a new message sending interface with the second electronic device, wherein the new message sending interface comprises related information of a first contact and the first message; and
receiving, by the first electronic device, the first operation specifically comprises:
receiving, by the first electronic device, the first operation in the new message sending interface.

14. The method according to claim 13, wherein the new message sending interface comprises a second capsule and a first widget, the second capsule comprises call duration, the first widget comprises a first indicator and fourth prompt information, the first indicator indicates a connection status between the first electronic device and a satellite device, and the fourth prompt information is used to prompt the user to maintain or adjust a current posture of holding the first electronic device.

15. The method according to claim 13 or 14, wherein the first electronic device sends the first message or the second message to the second electronic device through a messaging application, and
the second electronic device receives the first message through the messaging application, or receives the second message through the call application; or
the first electronic device sends the first message or the second message to the second electronic device through a first communication application, and
the second electronic device receives the first message through the first communication application, or receives the first message through the messaging application, or receives the second message through the call application.

16. The method according to claim 15, wherein when the second electronic device is logged in with an account of the first communication application, the second electronic device receives the first message through the first communication application.

17. A satellite communication method, wherein the method is applied to a first electronic device, and the method comprises:
establishing, by the first electronic device, a satellite call connection to the second electronic device by using a satellite device, wherein a satellite communication connection is established between the first electronic device and the second electronic device;
receiving, by the first electronic device, a first operation, wherein the first operation is used to send a first message to the second electronic device;
detecting, by the first electronic device in response to the first operation, whether the satellite call connection to the second electronic device ends; and
sending, by the first electronic device, the first message to the second electronic device through the satellite communication connection after detecting that the satellite call connection between the first electronic device and the second electronic device ends.

18. The method according to claim 17, wherein detecting, by the first electronic device in response to the first operation, whether the satellite call connection to the second electronic device ends specifically comprises:
displaying, by the first electronic device, first prompt information in response to the first operation, wherein the first prompt information indicates whether to send the first message to the second electronic device through the satellite call connection after the call connection ends; and
receiving and responding to, by the first electronic device, an operation of a user on a first option in the first prompt information, and detecting, by the first electronic device, whether the satellite call connection to the second electronic device ends.

19. The method according to claim 17 or 18, wherein after receiving, by the first electronic device, the first operation, the method further comprises:
displaying, by the first electronic device, second prompt information, wherein the second prompt information comprises a second option, and the second prompt information indicates whether to convert the first message into a voice message and then send the voice message to the second electronic device; and
receiving and responding to, by the first electronic device, an operation of the user on the second option in the second prompt information, and sending the second message to the second electronic device in a process of a call between the first electronic device and the second electronic device, wherein the second message is the voice message corresponding to the first message.

20. The method according to claim 19, wherein the method further comprises:
receiving and responding to, by the first electronic device, an operation of the user on a third option in the second prompt information, and skipping sending the second message.

21. The method according to any one of claims 17 to 20, wherein after the call connection between the first electronic device and the second electronic device ends, the method further comprises:
displaying, by the first electronic device, third prompt information, wherein the third prompt information indicates that the first electronic device is sending the first message to the second electronic device.

22. A satellite communication method, wherein the method is applied to a first electronic device, and the method comprises:
establishing, by the first electronic device, a satellite call connection to the second electronic device, wherein a satellite communication connection is established between the first electronic device and the second electronic device;
receiving, by the first electronic device, a first operation, wherein the first operation is used to send a first message to the second electronic device; and
sending, by the first electronic device, a second message to the second electronic device through the satellite communication connection in response to the first operation, wherein the second message is a voice message corresponding to the first message.

23. The method according to claim 22, wherein sending, by the first electronic device, the second message to the second electronic device through the satellite communication connection in response to the first operation specifically comprises:
displaying, by the first electronic device, second prompt information in response to the first operation, wherein the second prompt information indicates whether to convert the first message into the voice message and then send the voice message to the second electronic device; and
receiving, by the first electronic device, an operation of a user on a second option in the second prompt information, and sending the second message to the second electronic device through the satellite communication connection.

24. The method according to claim 22 or 23, wherein after receiving, by the first electronic device, the first operation, the method further comprises:
displaying, by the first electronic device, first prompt information, wherein the first prompt information indicates whether to send the first message to the second electronic device through the satellite call connection after the call connection ends;
receiving and responding to, by the first electronic device, an operation of the user on a first option in the first prompt information, and detecting, by the first electronic device, whether the satellite call connection to the second electronic device ends; and
after detecting that the satellite call connection between the first electronic device and the second electronic device ends, sending, by the first electronic device, the first message to the second electronic device through the satellite communication connection.

25. The method according to any one of claims 17 to 24, wherein the first information comprises location information of the first electronic device; and before receiving, by the first electronic device, the first operation, the method further comprises:
displaying, by the first electronic device, a satellite call interface with the second electronic device, wherein the satellite call interface comprises related information of a first contact, call duration, and a location sending option; and
receiving, by the first electronic device, the first operation specifically comprises:
receiving, by the first electronic device, the first operation on the location sending option in the satellite call interface, and obtaining the location information of the first electronic device.

26. The method according to claim 25, wherein the first electronic device obtains the location information of the electronic device by using a GPS module.

27. The method according to claim 25 or 26, wherein the satellite call interface comprises a first capsule, and the first capsule indicates a connection status between the first electronic device and a satellite; and/or
the satellite call interface comprises a first widget, the first widget comprises a first indicator and fourth prompt information, the fourth prompt information is used to prompt the user to maintain or adjust a current posture of holding the first electronic device, and the first indicator indicates the connection status between the first electronic device and the satellite.

28. The method according to any one of claims 25 to 27, wherein the first electronic device sends the first message or the second message to the second electronic device through a call application; and
the second electronic device receives the first message through a messaging application, or receives the second message through the call application.

29. The method according to any one of claims 17 to 24, wherein before receiving, by the first electronic device, the first operation, the method further comprises:
displaying, by the first electronic device, a new message sending interface with the second electronic device, wherein the new message sending interface comprises related information of a first contact and the first message; and
receiving, by the first electronic device, the first operation specifically comprises:
receiving, by the first electronic device, the first operation in the new message sending interface.

30. The method according to claim 29, wherein the new message sending interface comprises a second capsule and a first widget, the second capsule comprises call duration, the first widget comprises a first indicator and fourth prompt information, the first indicator indicates a connection status between the first electronic device and the satellite device, and the fourth prompt information is used to prompt the user to maintain or adjust a current posture of holding the first electronic device.

31. The method according to claim 29 or 30, wherein the first electronic device sends the first message or the second message to the second electronic device through a messaging application, and
the second electronic device receives the first message through the messaging application, or receives the second message through the call application; or
the first electronic device sends the first message or the second message to the second electronic device through a first communication application, and
the second electronic device receives the first message through the first communication application, or receives the first message through the messaging application, or receives the second message through the call application.

32. The method according to claim 31, wherein when the second electronic device is logged in with an account of the first communication application, the second electronic device receives the first message through the first communication application.

33. A satellite communication method, wherein the method is applied to a second electronic device, and the method comprises:
establishing, by the second electronic device, a satellite call connection to a first electronic device by using a satellite device, wherein a satellite communication connection is established between the first electronic device and the second electronic device; and
after the satellite call connection between the second electronic device and the first electronic device ends, receiving, by the second electronic device through the satellite communication connection, the first message sent by the first electronic device, wherein the first message is sent to the second electronic device after the first electronic device receives a first operation and detects that the satellite call connection between the first electronic device and the second electronic device ends.

34. The method according to claim 33, wherein the method further comprises:
receiving, by the second electronic device, a second message sent by the second electronic device, wherein the second message is a voice message corresponding to the first message.

35. A satellite communication method, wherein the method is applied to a second electronic device, and the method comprises:
establishing, by the second electronic device, a satellite call connection to a first electronic device by using a satellite device, wherein a satellite communication connection is established between the first electronic device and the second electronic device; and
receiving, by the second electronic device through the satellite communication connection, a second message sent by the first electronic device, wherein the first message is sent to the second electronic device after the first electronic device receives a first operation, the first operation is used to send the first message to the second electronic device, and the second message is a voice message corresponding to the first message.

36. The method according to claim 35, wherein the method further comprises:
receiving, by the second electronic device through the satellite communication connection, the first message sent by the first electronic device, wherein the first message is sent after the first electronic device detects that the satellite call connection to the second electronic device ends.

37. The method according to any one of claims 33 to 36, wherein the first information comprises location information of the first electronic device, and the first information is sent to the second electronic device after the first electronic device receives the first operation of a user on a location sending option in a satellite call interface with the second electronic device.

38. The method according to claim 37, wherein the first electronic device obtains the location information of the electronic device by using a GPS module.

39. The method according to claim 37 or 38, wherein the satellite call interface comprises a first capsule, and the first capsule indicates a connection status between the first electronic device and a satellite; and/or
the satellite call interface comprises a first widget, the first widget comprises a first indicator and fourth prompt information, the fourth prompt information is used to prompt the user to maintain or adjust a current posture of holding the first electronic device, and the first indicator indicates the connection status between the first electronic device and the satellite.

40. The method according to any one of claims 37 to 39, wherein the first electronic device sends the first message or the second message to the second electronic device through a call application; and
the second electronic device receives the first message through a messaging application, or receives the second message through the call application.

41. The method according to any one of claims 33 to 36, wherein the first information is sent to the second electronic device after the first electronic device receives the first operation of the user in the new message sending interface with the second electronic device.

42. The method according to claim 41, wherein the new message sending interface comprises a second capsule and a first widget, the second capsule comprises call duration, the first widget comprises a first indicator and fourth prompt information, the first indicator indicates a connection status between the first electronic device and the satellite device, and the fourth prompt information is used to prompt the user to maintain or adjust a current posture of holding the first electronic device.

43. The method according to claim 41 or 42, wherein the first electronic device sends the first message or the second message to the second electronic device through a messaging application, and
the second electronic device receives the first message through the messaging application, or receives the second message through the call application; and/or
the first electronic device sends the first message or the second message to the second electronic device through a first communication application, and
the second electronic device receives the first message through the first communication application, or receives the first message through the messaging application, or receives the second message through the call application.

44. The method according to claim 43, wherein when the second electronic device is logged in with an account of the first communication application, the second electronic device receives the first message through the first communication application.

45. An electronic device, wherein the electronic device is a first electronic device, the first electronic device comprises one or more processors and one or more memories, the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 32.

46. A computer-readable storage medium, comprising computer instructions, wherein when the computer instructions are run on a first electronic device, the first electronic device is enabled to perform the method according to any one of claims 1 to 32.
